# EUROPEAN PATENT APPLICATION

(11) **EP 4 653 644 A1**
(43) Date of publication of application: **26.11.2025**
(21) Application number: 24744721.2
(22) Date of filing: 18.01.2024
(51) Int. Cl.: E04G 21/12, B21F 15/06, B25J 5/00, B25J 5/02, B25J 13/08, E04C 5/16, G05D 1/43, G06T 7/00

(54) **BINDING DEVICE**

(30) Priority: 20.01.2023 JP 2023007172; 20.01.2023 JP 2023007174; 20.01.2023 JP 2023007176; 20.01.2023 JP 2023007177; 20.01.2023 JP 2023007182; 20.01.2023 JP 2023007187; 10.08.2023 JP 2023131058
(71) Applicant: MAX CO., LTD., Tokyo 103-8502 (JP)
(72) Inventor: EBIHARA Tokichika, Tokyo 103-8502 (JP); AGEHARA Kigen, Tokyo 103-8502 (JP); YAMAMOTO Yu, Tokyo 103-8502 (JP)
(74) Representative: Samson & Partner Patentanwälte mbB
(86) International application number: PCT/JP2024/001336
(87) International publication number: WO 2024/154801

(57) **Abstract**

This binding device comprises: a mobile unit configured to be able to move over a plurality of reinforcing bars disposed to intersect each other; a reinforcing bar binding unit configured to be able to bind the plurality of reinforcing bars; and a detection unit having a sensor, the detection range of which includes both a first reinforcing bar area containing reinforcing bars located near the moving unit or the reinforcing bar binding unit and a second reinforcing bar area including reinforcing bars located ahead of the first reinforcing bar area in the direction of movement by the moving unit. The detection unit is configured to detect obstacles on the reinforcing bars.

## Description

### TECHNICAL FIELD

The present embodiment relates to a binding device.

### BACKGROUND ART

In recent years, techniques have been considered for automating rebar binding work in which, for example, a rebar extending in a vertical direction and a rebar extending in a horizontal direction are bound together at their intersection points by means of a wire or the like. For example, Patent Literature 1 discloses a self-propelled working robot that can be used in rebar construction work.

In addition, the self-propelled rebar binding robot described in Patent Literature 1 is equipped with sensors such as an intersecting rebar detection sensor, a rebar end sensor, and an obstacle sensor. In a technology described in Patent Literature 1, the intersecting rebar detection sensor detects a horizontal rebar that intersects a vertical rebar, and a work robot stops at an intersection of the rebars and binds them using a binding unit. In addition, an end of the rebar is detected by a rebar end sensor, and the work robot traveling on the rebar is stopped at the end of the rebar. In addition, the obstacle sensor detects a worker and an object around the work robot as obstacles, thereby preventing the work robot from colliding with the worker or the object.

### CITATION LIST

### PATENT LITERATURE

Patent Literature 1: JP2019-039174A

### SUMMARY OF INVENTION

### TECHNICAL PROBLEM

The technology disclosed in Patent Literature 1 makes it possible to prevent the binding work robot from falling off the rebar or colliding with an obstacle, thereby enabling the work robot to travel and work safely. However, the rebar binding robot described in Patent Literature 1 is provided with a sensor for detecting a rebar and a sensor for detecting an obstacle, which may increase the cost of the entire device. Therefore, it is believed that there is room for improvement in a configuration of the sensor of the binding device.

The present disclosure is made in consideration of the above-described problem, and has an object to provide a binding device that allows a sensor to have a simple configuration.

### SOLUTION TO PROBLEM

An aspect of the present disclosure provides a binding device including a moving unit configured to be movable on a plurality of rebars arranged to intersect each other, a rebar binding unit configured to be capable of binding the plurality of rebars, and a detection unit having a sensor having a detection range which is an area including both a first rebar area including the rebar located in a vicinity of the moving unit or the rebar binding unit, and a second rebar area including the rebar located forward of the first rebar area in a movement direction of the moving unit, in which the detection unit is configured to detect an obstacle on the rebar.

Another aspect of the present disclosure provides a binding device including a moving unit configured to be movable on a plurality of rebars arranged to intersect each other, a rebar binding unit configured to be capable of binding the plurality of rebars, a detection unit having a sensor having a detection range including a first rebar area including the rebar located in a vicinity of the moving unit or the rebar binding unit, the sensor being configured to be able to detect an obstacle on the rebar, and a controller that controls movement of the moving unit based on a detection result of the detection unit.

### ADVANTAGEOUS EFFECTS OF INVENTION

The present disclosure provides a binding device that allows a sensor to have a simple configuration.

### BRIEF DESCRIPTION OF DRAWINGS

[FIG. 1] FIG. 1 is an overall perspective view of a rebar binding robot 100 according to an example of the present disclosure, as viewed obliquely from above.
[FIG. 2] FIG. 2 is an overall perspective view of the rebar binding robot according to the example of the present disclosure, as viewed obliquely from below.
[FIG. 3] FIG. 3 is a plan view of the rebar binding robot 100 as viewed from above (above in a Z-direction).
[FIG. 4] FIG. 4 is a plan view of the rebar binding robot 100 as viewed from below (below in the Z-direction).
[FIG. 5] FIG. 5 is a perspective view of the rebar binding robot 100 with a rebar binding unit 110 removed, as viewed obliquely from above.
[FIG. 6] FIG. 6 is a perspective view of the rebar binding robot 100 with the rebar binding unit 110 removed, as viewed obliquely from above.
[FIG. 7] FIG. 7 is a diagram illustrating a functional block configuration of the rebar binding robot 100.
[FIG. 8] FIG. 8 is a view of the rebar binding robot 100 traveling along a first rebar R10, as viewed from a Y-direction.
[FIG. 9] FIG. 9 is a view of the rebar binding robot 100 traveling along the first rebar R10, as viewed from an X-direction.
[FIG. 10] FIG. 10 is a view of the rebar binding robot 100 that has stopped traveling and is performing binding work, as viewed from the Y-direction.
[FIG. 11] FIG. 11 is a view of the rebar binding robot 100 performing binding work, as viewed from an X-direction.
[FIG. 12] FIG. 12 is a view of the rebar binding robot 100 performing binding work, as viewed from below in the Z-direction.
[FIG. 13A] FIG. 13A illustrates an image taken by a 3D distance camera in a vicinity of an intersection point of the first rebar R10 and a second rebar R20.
[FIG. 13B] FIG. 13B illustrates a schematic image of a vicinity of the intersection point of the first rebar R10 and the second rebar R20.
[FIG. 14A] FIG. 14A is a schematic side view of the rebar binding robot 100 as viewed from a horizontal direction (X-direction).
[FIG. 14B] FIG. 14B is a schematic top view of the rebar binding robot 100 as viewed from above (upper side in the Z-direction).
[FIG. 15] FIG. 15 is a diagram schematically illustrating an image captured by a first sensor 130a.
[FIG. 16] FIG. 16 is a schematic diagram for illustrating template matching.
[FIG. 17] FIG. 17 is a schematic diagram of the rebar binding robot 100 for illustrating a method for estimating an intersection point.
[FIG. 18] FIG. 18 is a flowchart of a method for estimating an intersection point c12 in the embodiment of the present disclosure.
[FIG. 19] FIG. 19 is a flowchart relating to lateral movement of the rebar binding robot 100.
[FIG. 20A] FIG. 20A is a rear view of the rebar binding robot 100 during lateral movement.
[FIG. 20B] FIG. 20B is a view of the rebar binding robot 100 during lateral movement, as viewed obliquely from above.
[FIG. 21A] FIG. 21A is a rear view of the rebar binding robot 100 during lateral movement.
[FIG. 21B] FIG. 21B is a view of the rebar binding robot 100 during lateral movement, as viewed obliquely from above.
[FIG. 22A] FIG. 22A is a rear view of the rebar binding robot 100 during lateral movement.
[FIG. 22B] FIG. 22B is a view of the rebar binding robot 100 during lateral movement, as viewed obliquely from above.
[FIG. 23A] FIG. 23A is a rear view of the rebar binding robot 100 during lateral movement.
[FIG. 23B] FIG. 23B is a view of the rebar binding robot 100 during lateral movement, as viewed obliquely from above.
[FIG. 24A] FIG. 24A is a rear view of the rebar binding robot 100 during lateral movement.
[FIG. 24B] FIG. 24B is a view of the rebar binding robot 100 during lateral movement, as viewed obliquely from above.
[FIG. 25A] FIG. 25A is a rear view of the rebar binding robot 100 during lateral movement.
[FIG. 25B] FIG. 25B is a view of the rebar binding robot 100 during lateral movement, as viewed obliquely from above.
[FIG. 26] FIG. 26 is a schematic diagram of a rebar binding robot 200 according to another embodiment of the present disclosure, as viewed from below in the Z-direction.
[FIG. 27] FIG. 27 is a view of the binding device 100 according to the embodiment of the present disclosure as viewed from a +X-direction.
[FIG. 28] FIG. 28 is a view of the binding device 100 according to the embodiment of the present disclosure, as viewed from a -Y-direction.
[FIG. 29] FIG. 29 is a diagram illustrating a functional block configuration of the binding device 100 according to the embodiment of the present disclosure.
[FIG. 30A] FIG. 30A is a view of a binding device 300 according to an embodiment of the present disclosure as viewed from a -X-direction.
[FIG. 30B] FIG. 30B is a perspective view of the binding device 300 according to the embodiment of the present disclosure.
[FIG. 31A] FIG. 31A is a view of a binding device 400 according to an embodiment of the present disclosure as viewed from the -X-direction.
[FIG. 31B] FIG. 31B is a perspective view of the binding device 400 according to the embodiment of the present disclosure.
[FIG. 32] FIG. 32 is a diagram illustrating a functional block configuration of the binding device 300 according to the embodiment of the present disclosure.
[FIG. 33] FIG. 33 is a diagram illustrating a functional block configuration of the binding device 400 according to the embodiment of the present disclosure.

### DESCRIPTION OF EMBODIMENTS

Hereinafter, present embodiments will be described with reference to the accompanying drawings. In order to facilitate understanding of the description, the similar components in each drawing are denoted by the same reference numerals whenever possible, and duplicate descriptions are omitted.

The configuration of a binding device 100 according to an embodiment of the present disclosure will be described below. In the present embodiment, the binding device is a rebar binding device that binds a plurality of rebars arranged to cross each other, and may be, for example, a rebar binding robot. In the following, a case will be described in which the binding device 100 is a rebar binding robot, and the binding device 100 will also be referred to as a rebar binding robot 100. In addition, each drawing may show an X-axis, a Y-axis, and a Z-axis. The X, Y, and Z axes form a right-handed three-dimensional Cartesian coordinate system. Hereinafter, the direction of an X-axis arrow may be referred to as a forward X-axis, +X-direction, right side of an X-direction, or right side of the X-axis, and a direction opposite to the arrow may be referred to as a backward X-axis, -X-direction, left side of the X-direction, or left side of the X-axis. The same is applied to the other axes. The front side on a Z-axis and the rear side on the Z-axis may be respectively referred to as the "upper side" or "upper direction" and the "lower side" or "lower direction". Furthermore, a plane perpendicular to the X-axis, Y-axis, or Z-axis may be respectively referred to as a YZ plane, a ZX plane, or an XY plane. However, these directions are used for convenience in describing relative positional relationships. Therefore, these directions do not define absolute positional relationships.

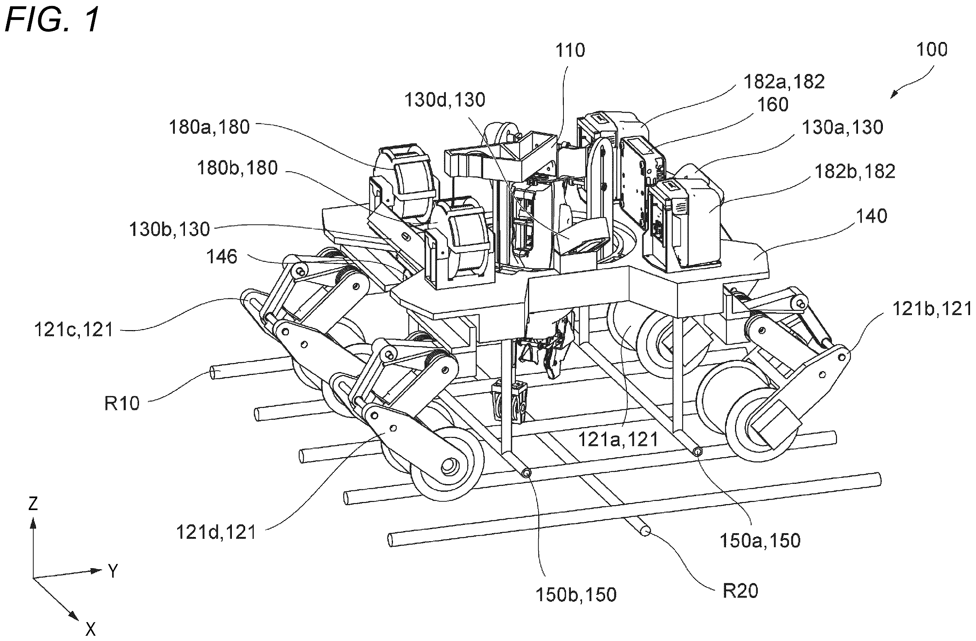

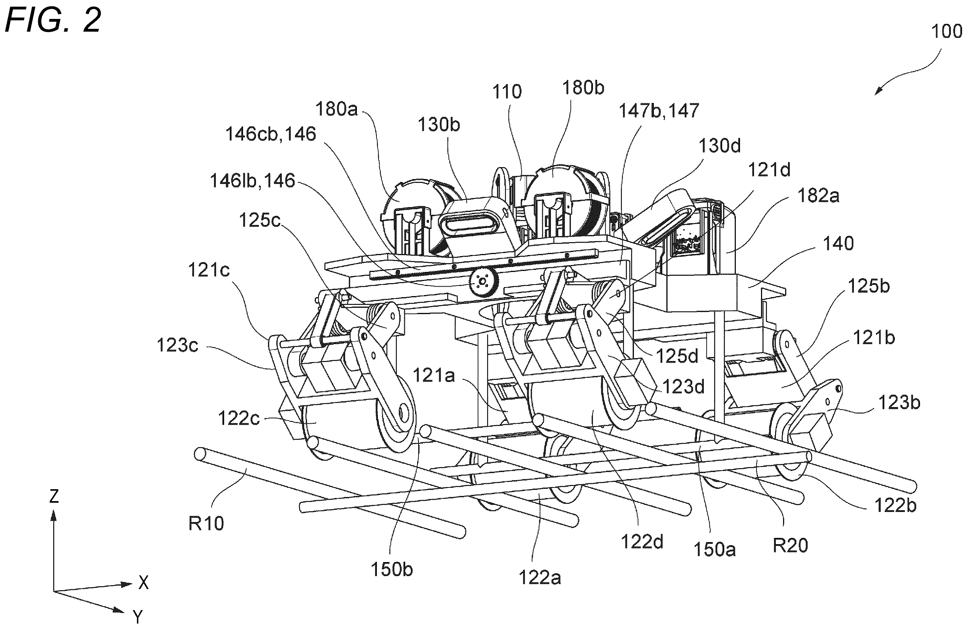

FIG. 1 is an overall perspective view of the rebar binding robot 100 according to the example of the present disclosure, as viewed obliquely from above. FIG. 2 is an overall perspective view of the rebar binding robot 100 according to the example of the present disclosure, as viewed obliquely from below. As illustrated in FIGS. 1 and 2, the rebar binding robot 100 according to the embodiment of the present disclosure includes a rebar binding unit 110, a traveling unit 121, and a sensor unit 130. The rebar binding robot 100 may further include other components, such as a main body unit 140, a support bar 150, a control unit 160, a reel 180 (first reel 180a and second reel 180b), a battery 182 (first battery 182a and second battery 182b), a lateral movement unit 146, and a memory device 198 (not illustrated).

FIGS. 1 and 2 also illustrate a rebar group R including a plurality of rebars R10 (also referred to as "first rebars" or "vertical rebars" in the present embodiment) extending in the Y-direction. As illustrated in FIGS. 1 and 2, the rebar binding robot 100 is disposed on the rebar group R so as to travel along the first rebar R10. In addition to the plurality of rebars R10, the rebar group R may include a plurality of rebars (also referred to as "second rebars R20" or "horizontal rebars" in the present embodiment) extending in the X-direction.

In the embodiment of the present disclosure, the first rebar R10 is arranged so that a first direction, which is a direction in which the first rebar R10 extends, is parallel to the Y-direction. Further, the second rebar R20 is arranged so that a second direction, which is a direction in which the second rebar R20 extends, is parallel to the X-direction. Therefore, in the exemplary embodiment of the present disclosure, the first rebar R10 and the second rebar R20 are arranged so as to be perpendicular to each other. In addition, the first rebar R10 and the second rebar R20 are arranged so that a plane (also referred to as the "rebar plane" in the present embodiment) formed by the first rebar R10 and the second rebar R20 is parallel to the XY plane. Therefore, the plane formed by the first rebar R10 and the second rebar R20 is a horizontal plane in the present embodiment. Furthermore, arrangement of the first rebar R10 and the second rebar R20 is not limited thereto. For example, the first rebar R10 and the second rebar R20 may be arranged so as to be non-perpendicular to each other. For example, the first rebar R10 and the second rebar R20 may be arranged such that an angle between the first rebar R10 and the second rebar R20 is, for example, 30°, 45°, 60°, or other angle. In addition, in the embodiment of the present disclosure, the first rebar R10 and the second rebar R20 are arranged so as to be perpendicular to each other, but for example, depending on a point of intersection, they do not necessarily have to be in a perpendicular relationship, and may be arranged so as to form an angle of, for example, 85° or more and less than 90°.

In addition, the first rebar R10 and the second rebar R20 have a finite length, and a plurality of first rebars R10 or a plurality of second rebars R20 may be connected via joints in a first direction or a second direction. Furthermore, the first rebar R10 and the second rebar R20 may have ends as described below, for example, the first rebar R10 and the second rebar R20 may respectively have ends R10e and R20e described below at one end and the other end in the first direction and the second direction.

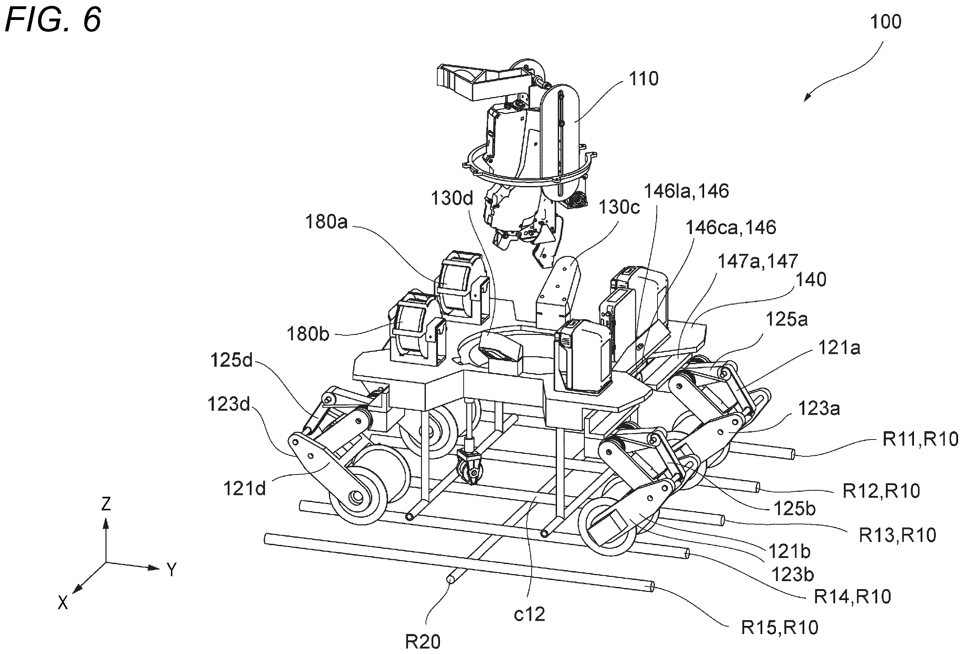

The rebar binding unit 110 is configured to bind an intersection point c12 (FIG. 6) between the first rebar R10 and the second rebar R20. Binding work of the rebar binding unit 110 at the intersection point c12 of the first rebar R10 and the second rebar R20 will be described in detail below.

As illustrated in FIGS. 1 and 2, the traveling unit 121 may have four traveling units 121a, 121b, 121c, and 121d (in the present embodiment, these are also respectively referred to as a "first traveling unit", a "second traveling unit", a "third traveling unit", and a "fourth traveling unit"). In the embodiment of the present disclosure, the traveling unit 121 is disposed on the rebar group R so that the rebar binding robot 100 advances in the Y-direction. The first traveling unit 121a, the second traveling unit 121b, the third traveling unit 121c, and the fourth traveling unit 121d respectively have a first roller portion 122a, a second roller portion 122b, a third roller portion 122c, and a fourth roller portion 122d, and the first roller portion 122a, the second roller portion 122b, the third roller portion 122c, and the fourth roller portion 122d are configured to travel on any one of the plurality of first rebars R10 along the Y-direction (first direction), which is an extension direction of the first rebars R10.

In the present embodiment, the traveling unit 121 is an example of a moving unit (a moving unit 120 described below). Instead of the traveling unit 121 or in addition to the traveling unit 121, the moving unit 120 may have the configuration of a moving unit other than the traveling unit 121.

In the embodiment of the present disclosure, the first traveling unit 121a, the second traveling unit 121b, the third traveling unit 121c, and the fourth traveling unit 121d are described as being configured to advance in the Y-direction as an example, but the first traveling unit 121a, the second traveling unit 121b, the third traveling unit 121c, and the fourth traveling unit 121d may also be configured to advance in a direction other than the Y-direction.

For example, the first traveling unit 121a, the second traveling unit 121b, the third traveling unit 121c, and the fourth traveling unit 121d may advance in a direction inclined at an angle of several degrees to several tens of degrees from the Y-direction. For example, the traveling units may advance in a direction inclined at an angle of several degrees to several tens of degrees from the Y-direction toward the +X-direction or the -X-direction. For example, when the orientation of the rebar binding robot 100 is inclined from the Y-direction due to presence of a foreign object on the first rebar R10 on which the rebar binding robot 100 is traveling, a direction in which the first traveling unit 121a, the second traveling unit 121b, the third traveling unit 121c, and the fourth traveling unit 121d advance will be at least temporarily inclined from the Y-direction to the +X-direction or -X-direction. In this case as well, for example, the first traveling unit 121a, the second traveling unit 121b, the third traveling unit 121c, and the fourth traveling unit 121d may advance in a direction (the -X-direction or the +X-direction) that returns the inclination of the orientation of the rebar binding robot 100 to the Y-direction, so that the rebar binding robot 100 advances so as to approximately follow the first rebar R10. This enables the rebar binding unit 110 of the rebar binding robot 100 to continuously perform the binding operation of the intersection point c12 of the first rebar R10 and the second rebar R20.

Furthermore, even in a construction site where the first rebar R10 is arranged in a curved shape, the first traveling unit 121a, the second traveling unit 121b, the third traveling unit 121c, and the fourth traveling unit 121d may be configured to advance in a curved shape to follow the first rebar R10 having a curved shape, and in this case, the first direction, which is the extension direction of the first rebar R10, may be different for each point that forms the curve.

As illustrated in FIGS. 1 and 2 and FIG. 3 described below, the sensor unit 130 has a sensor 130a, a sensor 130b, a sensor 130c, and a sensor 130d (in the present embodiment, these are also respectively referred to as a "first sensor", a "second sensor", a "third sensor", and a "fourth sensor"). The first sensor 130a and the second sensor 130b are arranged to be spaced apart from each other along the Y-direction (in the present embodiment, a direction in which a straight line connecting the first sensor 130a and the second sensor 130b extends is also referred to as a "third direction") in FIGS. 1 and 2. In addition, the fourth sensor 130d is arranged on a side (a side on a back side of the paper of FIGS. 1 and 2) opposite to a side on which the third sensor 130c of the rebar binding robot 100 is provided, and the third sensor 130c and the fourth sensor 130d are arranged so as to be spaced apart from each other along a direction (the X-direction in the example illustrated in FIGS. 1 and 2; in the present embodiment, a direction in which a straight line connecting the third sensor 130c and the fourth sensor 130d extends is also referred to as a "fourth direction") intersecting the Y-direction in FIGS. 1 and 2.

The first sensor 130a, the second sensor 130b, the third sensor 130c, and the fourth sensor 130d are configured to be capable of detecting the first rebar R10 and/or the second rebar R20. For example, the first sensor 130a and the second sensor 130b may be configured to detect the first rebar R10, and the third sensor 130c and the fourth sensor 130d may be configured to detect the second rebar R20. Alternatively, the first sensor 130a, the second sensor 130b, the third sensor 130c, and the fourth sensor 130d may all be configured to be capable of detecting the first rebar R10 and the second rebar R20.

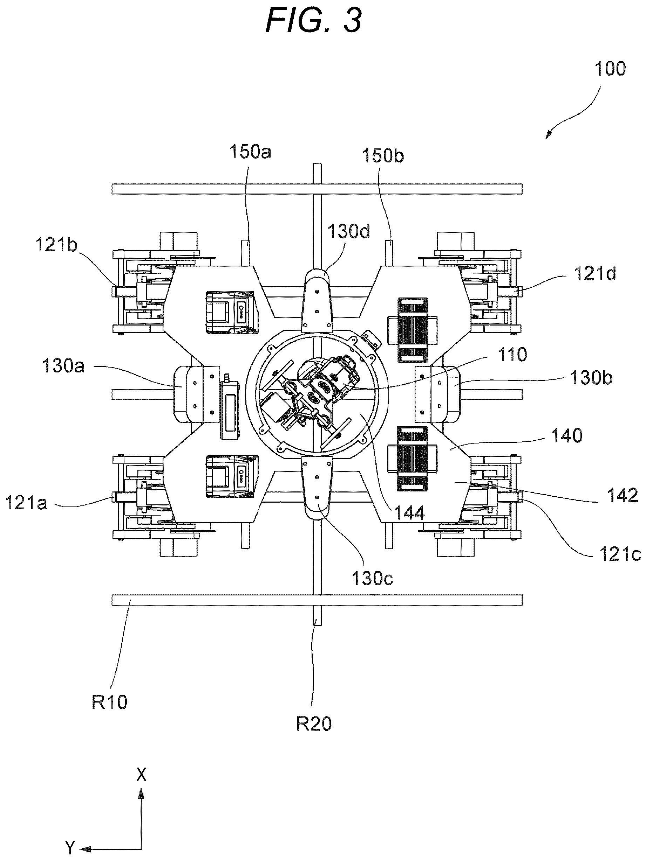

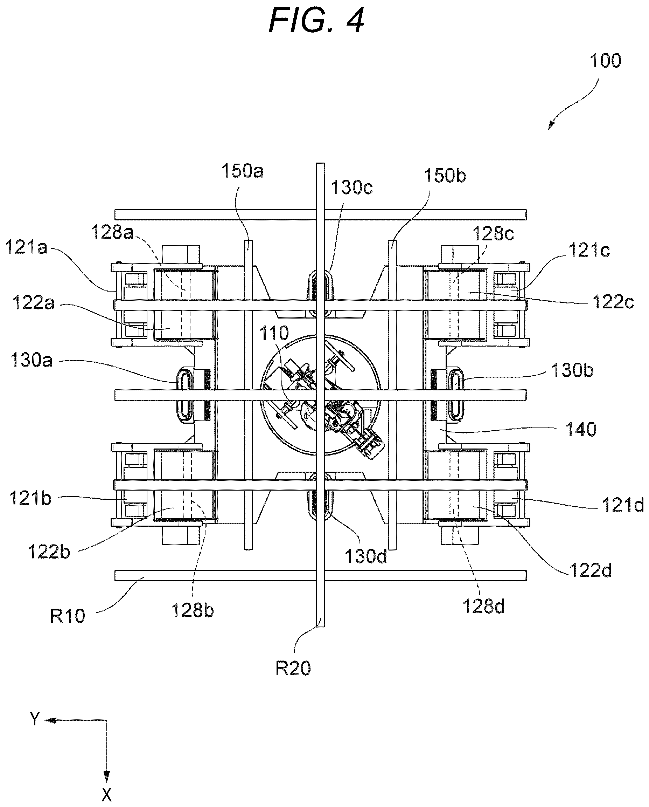

FIG. 3 illustrates a plan view of the rebar binding robot 100 as viewed from above (above in the Z-direction). FIG. 4 illustrates a plan view of the rebar binding robot 100 as viewed from below (below in the Z-direction).

As can be seen from FIGS. 3 and 4, the first traveling unit 121a and the second traveling unit 121b may be arranged on one side and the other side (on the left and right sides, respectively, in the X-direction in FIG. 3) of the fourth direction (X-direction) relative to the first sensor 130a. Furthermore, the third traveling unit 121c and the fourth traveling unit 121d may be disposed on one side and the other side in the fourth direction (X-direction) relative to the second sensor 130b. In other words, the first sensor 130a may be disposed between the first traveling unit 121a and the second traveling unit 121b in the fourth direction. Similarly, the second sensor 130b may be disposed between the third traveling unit 121c and the fourth traveling unit 121d in the fourth direction.

Furthermore, as illustrated in FIGS. 3 and 4, the third sensor 130c may be arranged between the first traveling unit 121a and the third traveling unit 121c in the third direction (Y-direction in FIGS. 3 and 4), and similarly, the fourth sensor 130d may be arranged between the second traveling unit 121b and the fourth traveling unit 121d in the third direction (Y-direction).

Furthermore, as illustrated in FIG. 4, for example, the first sensor 130a may be positioned, when viewed from below, on a straight line passing through a rotation shaft 128a of the first roller portion 122a forming the first traveling unit 121a and a rotation shaft 128b of the second roller portion 122b forming the second traveling unit 121b, or behind (in the -Y-direction in FIG. 4) the straight line passing through the rotation shafts 128a and 128b. Similarly, the second sensor 130b may be positioned, when viewed from below, on a straight line passing through a rotation shaft 128c of the third roller portion 122c forming the third traveling unit 121c and a rotation shaft 128d of the fourth roller portion 122d forming the fourth traveling unit 121d, or in front of (in the +Y-direction in FIG. 4) the straight line passing through the rotation shaft 128c and the rotation shaft 128d. A specific example of the sensor unit 130 will be described below.

As illustrated in FIG. 3, FIG. 4, or the like, the first sensor 130a is disposed in front of (+Y-direction) the main body unit 140 in the Y-axis direction. Similarly, the second sensor 130b is disposed behind (-Y-direction) the main body unit 140 in the Y-axis direction. The third sensor 130c and the fourth sensor 130d are respectively disposed on the left and right sides in the X-direction when viewed from above in FIG. 3 of the main body unit 140. That is, as can be seen, for example, from FIG. 4, in the present embodiment, the first sensor 130a, the second sensor 130b, the third sensor 130c, and the fourth sensor 130d are positioned on or inside an outer edge of a rectangle virtually formed by connecting approximately centers of the first traveling unit 121a, the second traveling unit 121b, the third traveling unit 121c, and the fourth traveling unit 121d in a planar view of the rebar binding robot 100. In addition, the rectangle virtually formed by the first traveling unit 121a to the fourth traveling unit 121d may be a square, for example, when a distance between the respective traveling units in the X-direction and the Y-direction is approximately equal, and in this case, the first sensor 130a to the fourth sensor 130d may be positioned on the outer edge of the virtual square or on the inside thereof. Furthermore, depending on the arrangement of the first traveling unit 121a to the fourth traveling unit 121d, the first traveling unit 121a to the fourth traveling unit 121d may virtually form a quadrangle other than a rectangle or a square, and in that case as well, the first sensor 130a to the fourth sensor 130d may be arranged on the outer edge of the virtual quadrangle or on the inside thereof.

The first sensor 130a, the second sensor 130b, the third sensor 130c, and the fourth sensor 130d are described as being positioned on or inside the outer edge of the rectangle virtually formed by connecting approximately the centers of the above-described first traveling unit 121a, the second traveling unit 121b, the third traveling unit 121c, and the fourth traveling unit 121d, but the present disclosure is not limited to the example. For example, depending on the arrangement of the first traveling unit 121a, the second traveling unit 121b, the third traveling unit 121c, and the fourth traveling unit 121d, and/or the shape of the main body unit 140, the first sensor 130a, the second sensor 130b, the third sensor 130c, and the fourth sensor 130d may be arranged differently. For example, the first sensor 130a, the second sensor 130b, the third sensor 130c, and the fourth sensor 130d may be positioned on or outside the outer edge of the rectangle virtually formed by connecting approximately the centers of the first traveling unit 121a, the second traveling unit 121b, the third traveling unit 121c, and the fourth traveling unit 121d in a planar view of the rebar binding robot 100.

As illustrated in FIGS. 1 and 3, the main body unit 140 may have a main body upper surface 142. The main body upper surface 142 may have, for example, a hole 144 having a circular shape and formed in a vicinity of the center, and the rebar binding unit 110 may be arranged to pass through the hole 144.

In the present embodiment, the rebar binding robot 100 may include, for example, two support bars 150 (a first support bar 150a and a second support bar 150b, respectively). The first support bar 150a and the second support bar 150b are bars extending in one direction, for example, and are provided in parallel in the fourth direction (the X-direction in FIGS. 1 to 4). Therefore, in the embodiment of the present disclosure, the first support bar 150a and the second support bar 150b are provided to be parallel to each other in a horizontal direction, for example. As illustrated in FIGS. 1 to 4, the first support bar 150a and the second support bar 150b may be spaced apart from each other in the Y-direction (third direction). The first support bar 150a and the second support bar 150b may be configured to support the main body unit 140 of the rebar binding robot 100, for example, when the rebar binding robot 100 moves horizontally (the X-direction in FIGS. 1 to 4, the fourth direction in the rebar binding robot 100).

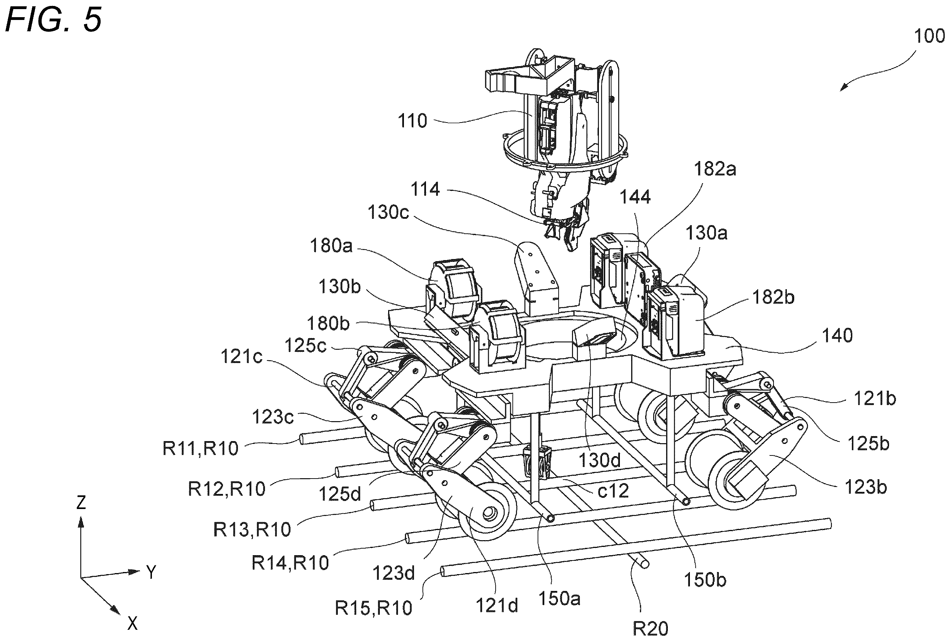

FIG. 5 is a perspective view of the rebar binding robot 100 with the rebar binding unit 110 removed, as viewed from obliquely rear right. FIG. 6 is a perspective view of the rebar binding robot 100 with the rebar binding unit 110 removed, as viewed from obliquely forward right. As illustrated in FIGS. 5 and 6, the rebar binding unit 110 may be provided so as to be movable in a vertical direction (Z-direction in FIG. 5) while passing through the hole 144. This allows, for example, the rebar binding unit 110 to be lowered, and when the rebar binding robot 100 reaches the intersection point c12 of the first rebar R10 and the second rebar R20, the intersection point c12 of the first rebar R10 and the second rebar R20 is bound together. As illustrated in FIGS. 5 and 6, the binding device 100 has reels 180a and 180b. The reels 180a and 180b accommodate a wire used to bind rebars, and are configured so that when the rebar binding unit 110 binds the intersection point c12 of the first rebar R10 and the second rebar R20, the wire accommodated in the reel 180a and/or reel 180b is pulled out to bind the intersection point c12. Although detailed description is omitted, the rebar binding unit 110 has a wire twisting portion 114 (FIG. 5) at one end (a lower end in the Z-direction in FIG. 5) of the rebar binding unit 110 that has a wire guide, or the like, and is configured to perform rebar binding work. The rebar binding work of the wire twisting portion 114 may be achieved, for example, by a function similar to that of a known rebar binding machine.

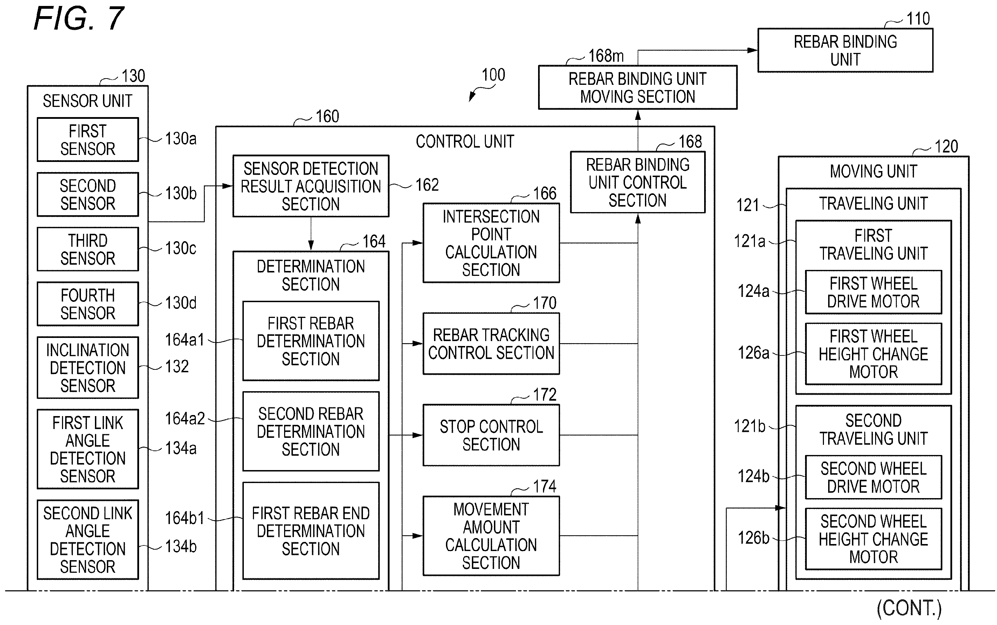

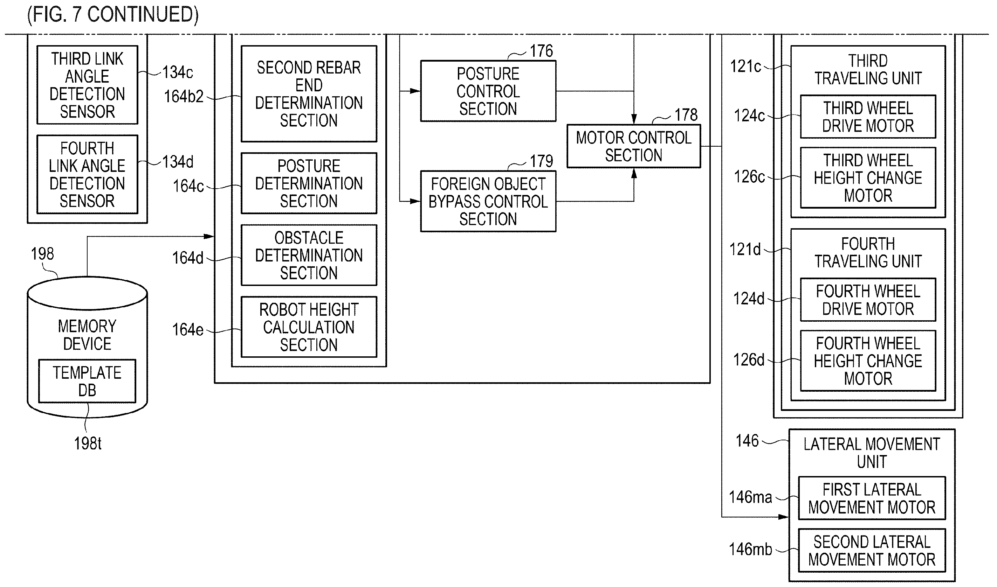

FIG. 7 is a diagram illustrating a functional block configuration of the rebar binding robot 100. As illustrated in FIG. 7, the rebar binding robot 100 may include, in addition to the rebar binding unit 110, the traveling unit 121, the sensor unit 130, and the like described above, a control unit 160, a lateral movement unit 146, and a memory device 198.

The control unit 160 is configured to control movement and binding works performed by the rebar binding robot 100. The control unit 160 may include a sensor detection result acquisition section 162, a determination section 164, an intersection point calculation section 166 (in the present embodiment, also referred to as an "intersection point estimation section" or "intersection point estimation unit"), a rebar binding unit control section 168, a rebar tracking control section 170, a stop control section 172, a movement amount calculation section 174, a posture control section 176, a motor control section 178, and a foreign object bypass control section 179.

In the rebar binding robot 100 of the present embodiment, as illustrated in FIG. 1, the control unit 160 is disposed on an opposite side of the reel 180a and reel 180b with respect to the rebar binding unit 110 in the Y-direction. More specifically, as illustrated in FIG. 1, the reels 180a and 180b are disposed in the -Y-direction of the rebar binding unit 110, whereas the control unit 160 is disposed in the +Y-direction of the rebar binding unit 110. In particular, immediately after replacing the wire reel (reel 180a and/or reel 180b), the reel with the wire wound therearound becomes relatively heavy, but by positioning the control unit 160 on the opposite side of the rebar binding unit 110, it is possible to balance the weight.

The lateral movement unit 146 (FIG. 7) is configured to control the movement of the main body unit 140 of the rebar binding robot 100. In the rebar binding robot 100 according to the embodiment of the present disclosure, the rebar binding robot 100 may be moved in the horizontal direction by the lateral movement unit 146. The lateral movement unit 146 may be equipped with a first lateral movement motor 146ma and a second lateral movement motor 146mb, and for example, when lateral movement of the rebar binding robot 100 described below is performed, the main body unit 140 may be moved horizontally by the two motors 146ma and 146mb.

More specifically, as illustrated in FIG. 6, the lateral movement unit 146 has a first lateral movement roller 1461a and a first drive rack 146ca. The first lateral movement roller 1461a is provided on a first connecting portion 147a that connects the first traveling unit 121a and the second traveling unit 121b to the main body unit 140. The first drive rack 146ca is provided on a rear surface (a surface in the -Z-direction) of the main body unit 140 along the X-direction.

Similarly, as illustrated in FIG. 2, the lateral movement unit 146 has a second lateral movement roller 146lb and a second drive rack 146cb. The second lateral movement roller 146lb is provided on a second connecting portion 147b that connects the third traveling unit 121c and the fourth traveling unit 121d to the main body unit 140. The second drive rack 146cb is provided on a rear surface (a surface in the -Z-direction) of the main body unit 140 along the X-direction.

The second lateral movement roller 146lb forms, for example, a drive gear. The second drive rack 146cb has, for example, a plurality of teeth that mesh with external teeth provided on an outer periphery of the second lateral movement roller 146lb and are aligned linearly in the X-direction. The second lateral movement roller 146lb is driven by the second lateral movement motor 146mb. When the second lateral movement roller 146lb is rotated by the second lateral movement motor 146mb, the second lateral movement roller 146lb moves relative to the second drive rack 146cb along a longitudinal direction of the second drive rack 146cb. In this way, the main body unit 140 can move in the X-direction relative to the third traveling unit 121c and the fourth traveling unit 121d.

The first lateral movement roller 1461a (FIG. 6) also forms, for example, a drive gear, and the first drive rack 146ca has a plurality of teeth that mesh with external teeth provided on an outer periphery of the first lateral movement roller 1461a and are aligned linearly in the X-direction. The first lateral movement roller 1461a is driven by the first lateral movement motor 146ma. When the first lateral movement roller 1461a is rotated by the first lateral movement motor 146ma, the first lateral movement roller 1461a moves relative to the first drive rack 146ca along the longitudinal direction of the first drive rack 146ca, thereby enabling the main body unit 140 to move in the X-direction relative to the third traveling unit 121c and the fourth traveling unit 121d.

In this way, the first lateral movement roller 1461a and the second lateral movement roller 146lb may be respectively driven by the first lateral movement motor 146a and the second lateral movement motor 146b, to cause the main body unit 140 to move laterally (in the X-direction) relative to the traveling unit 121.

The memory device 198 may include, for example, a memory medium (for example, a semiconductor memory element) or other media for non-transitory storage of one or more computer programs executed in the control unit 160, data used to control the rebar binding robot 100, and the like. The memory device 198 may include, for example, a template database 198t. The template database 198t may store, for example, as described below, images of templates used when detecting the first rebar R10 and/or the second rebar R20, or detecting the end R10e of the first rebar R10 and/or the end R20e of the second rebar R20, using template matching based on the detection results by the sensor unit 130, or data obtained by applying image processing such as frequency analysis to the template images. In addition, the control unit 160 may further have a template data creation section, and may be configured to create template data based on images captured by the sensor unit 130 according to the site where the rebar binding work is to be performed, and store the template data in the template database 198t. The template data stored in the template database 198t may be accumulated, for example, whenever new template data is created, or may be deleted when binding work is completed at each construction site. Alternatively, the created template data may be stored in the template database 198t of the memory device 198 for a certain period of time and then deleted, for example, periodically.

The sensor detection result acquisition section 162 acquires a detection result by the sensor unit 130. For example, the detection results of the first sensor 130a, the second sensor 130b, the third sensor 130c, and/or the fourth sensor 130d of the sensor unit 130 may be used to determine the position of the first rebar R10 and/or the second rebar R20 by the first rebar determination section 164a1 and/or the second rebar determination section 164a2 of the determination section 164 described below. In addition, the detection results of the first sensor 130a, the second sensor 130b, the third sensor 130c, and/or the fourth sensor 130d may be used to determine the position of the end R10e of the first rebar R10 and/or the end R20e of the second rebar R20 by a first rebar end determination section 164b1 and/or a second rebar end determination section 164b2 of the determination section 164.

The determination section 164 may include the first rebar determination section 164a1, the second rebar determination section 164a2, the first rebar end determination section 164b1, the second rebar end determination section 164b2, a posture determination section 164c, an obstacle determination section 164d, and a robot height calculation section 164e. The first rebar determination section 164a1 and the second rebar determination section 164a2 determine the position of the first rebar R10 and/or the second rebar R20, for example, using the detection results of the first sensor 130a, the second sensor 130b, the third sensor 130c, and/or the fourth sensor 130d acquired by the sensor detection result acquisition section 162. As described below, the first rebar determination section 164a1 and the second rebar determination section 164a2 may determine the position of the first rebar R10 and/or the second rebar R20 by performing template matching based on the captured images that are the detection results of the first sensor 130a to the fourth sensor 130d.

The first rebar end determination section 164b1 and the second rebar end determination section 164b2 determine the end R10e of the first rebar R10 and/or the end R20e of the second rebar R20, for example, using the detection results of the first sensor 130a, the second sensor 130b, the third sensor 130c, and/or the fourth sensor 130d acquired by the sensor detection result acquisition section 162. The first rebar end determination section 164b1 and the second rebar end determination section 164b2, like the first rebar determination section 164a1 and the second rebar determination section 164a2, may also determine the position of the end R10e of the first rebar R10 and/or the end R20e of the second rebar R20 based on template matching.

The robot height calculation section 164e may calculate a height of the rebar binding robot 100 from the rebar group R based on, for example, the detection results of the first sensor 130a, the second sensor 130b, the third sensor 130c, and/or the fourth sensor 130d. For example, when (for example, when an area including the first rebar R10 and/or the second rebar R20 is imaged) the first rebar R10 and/or the second rebar R20 are imaged by the first sensor 130a, the second sensor 130b, the third sensor 130c, and/or the fourth sensor 130d, the robot height calculation section 164e may calculate the height of the rebar binding robot 100 from the rebar group R by calculating a distance of the rebar binding robot 100 from the rebar group R based on a relative size of the first rebar R10 and/or the second rebar R20 in the captured image of the imaged first rebar R10 and/or the second rebar R20.

The height of the rebar binding robot 100 from the rebar group R may be calculated based on an angle of the traveling unit 121, for example. As illustrated in FIG. 6, the traveling unit 121a has a first main body side link portion 125a connected to the main body 140, and a first roller side link portion 123a connected to the first roller portion 122a, and the first main body side link portion 125a and the first roller side link portion 123a may form a link mechanism. In this case, a link angle, which is an angle between the first main body side link portion 125a and the first roller side link portion 123a, may be detected by a first link angle detection sensor 134a (FIG. 7) of the sensor unit 130, and the height of the first traveling unit 121a may be calculated based on the link angle.

Similarly, as illustrated in FIG. 2, the second traveling unit 121b, the third traveling unit 121c, and the fourth traveling unit 121d respectively have a second main body side link portion 125b and a second roller side link portion 123b, a third main body side link portion 125c and a third roller side link portion 123c, and a fourth main body side link portion 125d and a fourth roller side link portion 123d, and the heights of the second traveling unit 121b, the third traveling unit 121c, and the fourth traveling unit 121d may be respectively calculated by detecting link angles formed by the second main body side link portion 125b and the second roller side link portion 123b, the third main body side link portion 125c and the third roller side link portion 123c, and the fourth main body side link portion 125d and the fourth roller side link portion 123d using a second link angle detection sensor 134b, a third link angle detection sensor 134c, and a fourth link angle detection sensor 134d.

The robot height calculation section 164e may calculate the height of the rebar binding robot 100 from the rebar group R based on the heights (heights from the rebar group R) of the first traveling unit 121a, the second traveling unit 121b, the third traveling unit 121c, and the fourth traveling unit 121d calculated in this manner. For example, the height of the rebar binding robot 100 may be calculated from an average value of some or all of the calculated heights of the first traveling unit 121a, the second traveling unit 121b, the third traveling unit 121c, and the fourth traveling unit 121d. Furthermore, for example, when the rebar binding robot 100 is positioned parallel or nearly parallel to a virtual plane formed by the rebar group R, the height of the rebar binding robot 100 may be determined by any one of the heights of the first traveling unit 121a, the second traveling unit 121b, the third traveling unit 121c, and the fourth traveling unit 121d.

As illustrated in FIG. 7, the sensor unit 130 may include an inclination detection sensor 132 in addition to the first to fourth sensors 130a to 130d described above. As the inclination detection sensor 132, for example, a known inclination sensor or horizontal sensor, or other sensor capable of detecting an inclination angle of the rebar binding robot 100 may be used. The sensor detection result acquisition section 162 may also acquire the detection result of the inclination detection sensor 132. Based on the detection result of the inclination detection sensor 132, for example, the posture of the rebar binding robot 100 may be determined by the posture determination section 164c of the determination section 164, and based on the determination result of the posture determination section 164c, the posture control section 176 may drive height change motors 126 (a first height change motor 126a of the first traveling unit 121a, a second height change motor 126b of the second traveling unit 121b, a third height change motor 126c of the third traveling unit 121c, and/or a height change motor 126d of the fourth traveling unit 121d) of the traveling units 121 to adjust the posture of the rebar binding robot 100.

The rebar binding robot 100 may, for example, drive the height change motor 126 based on the detection result of the inclination detection sensor 132 so that the main body unit 140 is parallel to a surface (also referred to as a "rebar surface" in the present embodiment) formed by the first rebar R10 and/or the second rebar R20. For example, when the first rebar R10 and the second rebar R20 are arranged so that the rebar surface extends horizontally, if the rebar binding robot 100 is inclined in the X-direction, the height of the first traveling unit 121a and the third traveling unit 121c, or the second traveling unit 121b and the fourth traveling unit 121d, among the first traveling unit 121a to the fourth traveling unit 121d, may be changed to adjust the posture of the rebar binding robot 100.

The intersection point calculation section 166 estimates the intersection point c12 between the first rebar R10 and the second rebar R20 by calculating it. The intersection point calculation section 166 may, for example, calculate the position of the intersection point c12 based on the position of the first rebar R10 and the position of the second rebar R20 determined by the first rebar determination section 164al and the second rebar determination section 164a2, as described below. Based on the calculated position of the intersection point c12, the rebar binding robot 100 may perform binding work using the rebar binding unit 110. Based on the estimated position of the intersection point c12, the motor control section 178 may adjust the position of the rebar binding robot 100 using the first traveling unit 121a, the second traveling unit 121b, the third traveling unit 121c, and/or the fourth traveling unit 121d so that the rebar binding unit 110 is on the intersection point c12.

The rebar binding unit control section 168 controls the movement of the rebar binding unit 110 by controlling a rebar binding unit moving section 168m. The rebar binding unit 110 can take a binding position where it performs a binding operation to bind the intersection point c12 where the first rebar R10 and the second rebar R20 intersect, and a retreat position where it retreats after the binding operation is completed while moving to the intersection point c12 where the next binding operation is performed. The rebar binding unit 110 moves in the -Z-direction when moving from the retreat position towards the binding position, and moves in the +Z-direction when moving from the binding position towards the retreat position. Such movement of the rebar binding unit 110 in the Z-direction is achieved by the rebar binding unit moving section 168m formed by a motor or the like. In addition, a lifting and lowering operation of the rebar binding unit 110 in the Z-direction by the rebar binding unit moving section 168m is controlled by the rebar binding unit control section 168.

The rebar binding unit control section 168 also controls the binding operation of the rebar binding unit 110 at the intersection point c12 after the rebar binding unit 110 moves to the binding position. For example, the rebar binding unit 110 performs binding work using a wire pulled out from the reel 180 by a wire pull-out portion described below and is controlled by the rebar binding unit control section 168. For example, after moving the rebar binding robot 100 by the first traveling unit 121a, the second traveling unit 121b, the third traveling unit 121c, and/or the fourth traveling unit 121d so that the rebar binding unit 110 is positioned above the intersection point c12, the rebar binding unit control section 168 may control the rebar binding unit moving section 168m to lower the rebar binding unit 110 to a binding position approaching the intersection point c12, and perform binding at the intersection point c12.

The rebar tracking control section 170 may, for example, control the traveling unit 121 via the motor control section 178 so that the rebar binding robot 100 follows the first rebar R10 on which the rebar binding robot 100 is traveling, based on information such as the position of the first rebar R10 determined by the first rebar determination section 164a1. For example, as illustrated in FIG. 5, when the rebar binding robot 100 travels on a first rebar R12 and a first rebar R14, the drive motors (a first wheel drive motor 124a driving the first roller portion 122a, a second wheel drive motor 124b driving the second roller portion 122b, a third wheel drive motor 124c driving the third roller portion 122c, and/or a fourth wheel drive motor 124d driving the fourth roller portion 122d) of the traveling units 121 may be driven to prevent the rebar binding robot 100 from coming off the first rebar R12 and the first rebar R14.

For example, among the first wheel drive motor 124a, the second wheel drive motor 124b, the third wheel drive motor 124c, and the fourth wheel drive motor 124d, the first wheel drive motor 124a and the third wheel drive motor 124c, which are the drive motors of the first traveling unit 121a and the third traveling unit 121c, which are arranged at the same position or approximately the same position in the X-direction, may be accelerated or decelerated relative to the second wheel drive motor 124b and the fourth wheel drive motor 124d, which are the drive motors of the second traveling unit 121b and the fourth traveling unit 121d, which are arranged on the other side in the X-direction, to adjust the position of the rebar binding robot 100 and make the rebar binding robot 100 travel to follow the first rebar R10.

Alternatively, the rebar tracking control section 170 may cause the rebar binding robot 100 to travel so as to follow the first rebar R10, for example, by adjusting the rotation speeds of the first wheel drive motor 124a, the second wheel drive motor 124b, the third wheel drive motor 124c, and/or the fourth wheel drive motor 124d. For example, by setting one or more of the rotation speeds of the first wheel drive motor 124a, the second wheel drive motor 124b, the third wheel drive motor 124c, and the fourth wheel drive motor 124d to a rotation speed different from the rotation speeds of the other wheel drive motors, or by setting the rotation speeds of all of the first wheel drive motor 124a, the second wheel drive motor 124b, the third wheel drive motor 124c, and the fourth wheel drive motor 124d to different rotation speeds from each other, it becomes possible to allow the rebar binding robot 100 to flexibly follow the first rebar R10.

The stop control section 172 is configured to control a stopping operation of the rebar binding robot 100. For example, as described below, when the rebar binding robot 100, which has been traveling over the first rebar R12 and the first rebar R14, is determined by the first rebar end determination section 164b1 and/or the second rebar end determination section 164b2 to be in a vicinity of an end R13e of a first rebar R13 or approaching the end R13e based on the detection results of the first sensor 130a, the second sensor 130b, the third sensor 130c, and/or the fourth sensor 130d, the stop control section 172 may control the motor control section 178 to drive and stop the first wheel drive motor 124a to the fourth wheel drive motor 124d, thereby stopping the rebar binding robot 100. In addition, the rebar binding robot 100 may be stopped not only at the end R13e of the first rebar R13, but also when it is determined that the rebar binding robot 100 is in a vicinity of an end R12e of the first rebar R12 and/or an end R14e of the first rebar R14, or is approaching the end R12e and/or the end R14e, instead of or in addition to the end R13e.

In addition, the stop control section 172 may, for example, when the intersection point c12 of the first rebar R10 and the second rebar R20 is calculated by the above-described intersection point calculation section 166, stop the rebar binding robot 100 in order to bind the intersection point c12 with the rebar binding unit 110.

As described below, the movement amount calculation section 174 may be configured to calculate an amount of movement when the rebar binding robot 100 moves laterally (in the X-direction), for example. For example, as described above, when the first rebar end determination section 164b1 and/or the second rebar end determination section 164b2 determine that the rebar binding robot 100 is in a vicinity of or approaching the end R12e of the first rebar R12 and the end R14e of the first rebar R14, the rebar binding robot 100 completes the rebar binding work at the intersection point c12 on the first rebar R13 located between the first rebar R12 and the first rebar R14, moves to another first rebar R10, and starts the rebar binding work at the intersection point c12.

For example, when the rebar binding robot 100 completes rebar binding work at the intersection point c12 on the first rebar R13 and then performs rebar binding work at the intersection point c12 on the first rebar R14, the rebar binding robot 100 moves in the X-direction by one interval for the X-direction interval of the first rebar R10. In this case, the movement amount calculation section 174 may calculate the movement amount based on the interval in the X-direction between adjacent first rebars R10 based on information on the position of the first rebar R10 determined by the first rebar determination section 164al. Similarly, when the rebar binding robot 100 performs rebar binding work at the intersection point c12 on the first rebar R10 that is spaced apart by two or more in the X-direction, the amount of movement may be calculated based on the interval between the first rebars R10. Furthermore, the lateral movement (for example, horizontal movement) of the main body unit 140 by the lateral movement unit 146 during lateral movement may be performed based on the calculated movement amount. The movement amount calculation section 174 may calculate the movement amount in a direction other than the lateral movement amount. For example, the movement amount calculation section 174 may calculate the amount of vertical movement (movement in the first direction, Y-direction) of the rebar binding robot 100 based on the detection results of each sensor 130, the determination results by the rebar end determination section 164bl and/or the rebar end determination section 164b2, or the like.

As the sensor unit 130, for example, a camera capable of taking two-dimensional or three-dimensional images may be used, and based on the detection results of the sensor unit 130, the position of a foreign object may be determined, for example, by the obstacle determination section 164d of the determination section 164. At a construction site where rebars are being assembled, for example, tools may be left on the surface of the rebars, or workers may be performing work thereon. These may be detected as foreign objects based on the detection results by the sensor unit 130, and based on the foreign object detection results, the foreign object bypass control section 179 may be configured to drive the first wheel drive motor 124a, the second wheel drive motor 124b, the third wheel drive motor 124c, and/or the fourth wheel drive motor 124d via the motor control section 178 to bypass the foreign object. Alternatively, the rebar binding robot 100 may be configured to bypass foreign objects by performing lateral movement, which will be described below.

The control unit 160 is, for example, a processor such as a central processing unit (CPU) that corresponds to a calculation section, and is a control unit that controls the execution of computer programs stored in the memory device 198 and calculates and processes data. The processor is a calculation unit that executes a program that executes the operations (rebar tracking and traveling, lateral movement (for example, horizontal movement), rebar binding work, and the like) of the rebar binding robot 100 using each detection data, or the like. Each unit (for example, the sensor detection result acquisition section 162, or the like) of the control unit is realized by the processor executing the program stored in the memory device 198.

The memory device 198 may include, for example, a random access memory (RAM) and a read only memory (ROM). The RAM is a memory unit in which data can be rewritten, and may be composed of, for example, a semiconductor memory element. The RAM may store programs executed by the processor and data (for example, template data used to determine the position of rebars based on the detection results of the sensor unit 130, as described below) required to execute the programs. These are merely examples, and data other than these may be stored in the RAM, or some of these may not be stored.

The ROM is a memory unit from which data can be read, and may be composed of, for example, a semiconductor memory element. The ROM may store, for example, programs executed by the control unit 160 and data that is not rewritten.

The program executed by the control unit 160 may be provided by being stored in a computer-readable memory medium such as a memory device 198 (for example, a RAM or ROM), or, when the rebar binding robot 100 of the present embodiment has a communication unit (not illustrated), the program may be provided via a communication network connected by the communication unit.

The above-described physical configuration is merely an example, and in the rebar binding robot 100 according to the embodiment of the present disclosure, the control unit 160 and the memory device 198 do not necessarily have to be configured independently. For example, the rebar binding robot 100 may be equipped with a large-scale integration (LSI) that integrates a processor and a memory. In addition, the rebar binding robot 100 may be equipped with a graphical processing unit (GPU) as the control unit 160, and the various operations described above may be realized by the GPU executing a program.

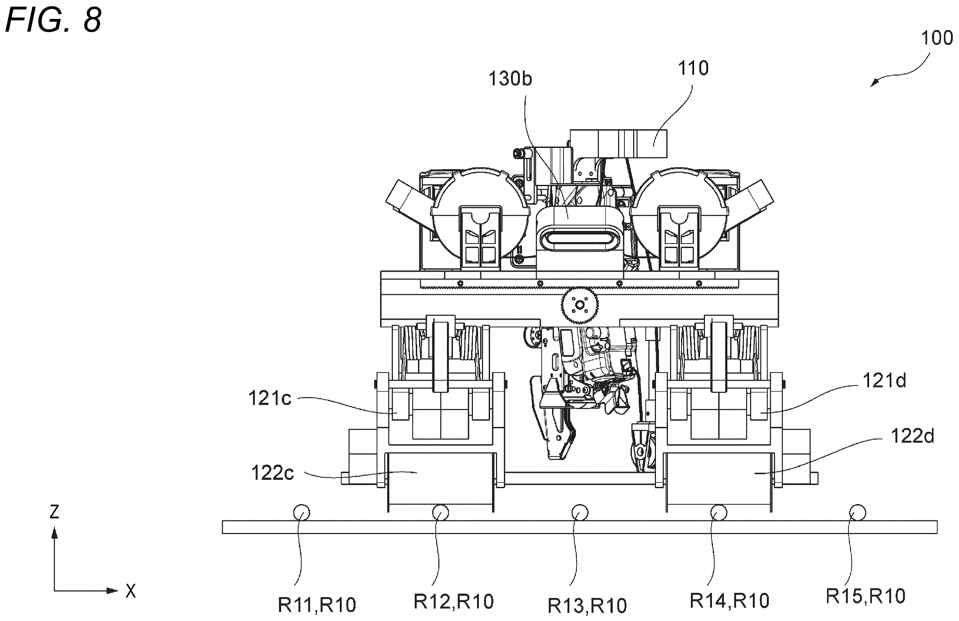

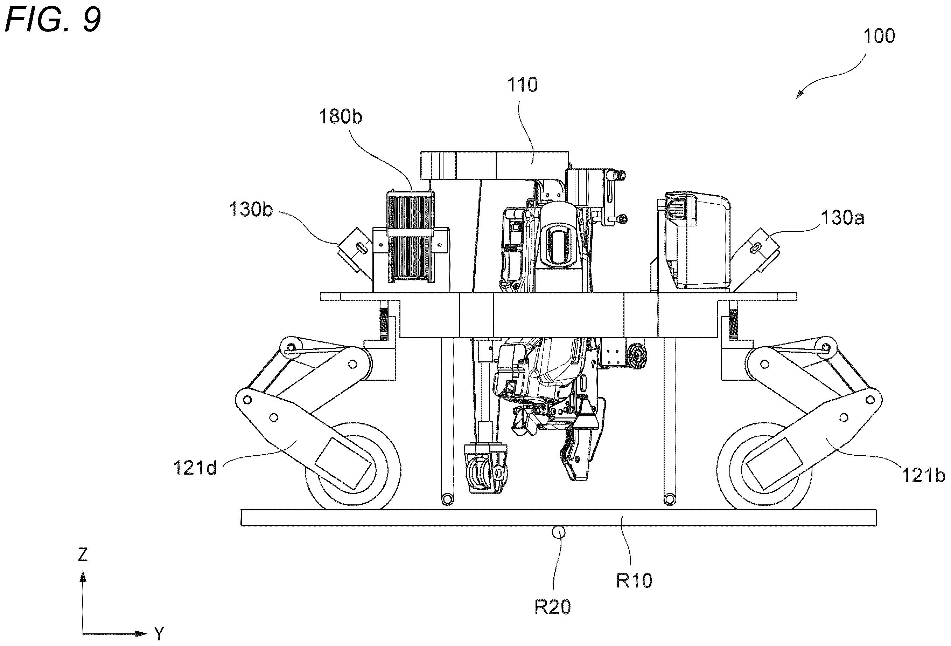

Next, a traveling operation of the rebar binding robot 100 on the rebars will be described with reference to FIGS. 8 and 9. FIG. 8 is a view of the rebar binding robot 100 traveling along the first rebar R10 as viewed from the Y-direction (-Y-direction). FIG. 9 is a view of the rebar binding robot 100 traveling along the first rebar R10 as viewed from the X-direction (+X-direction). In FIGS. 8 and 9, the rebar binding robot 100 travels in the first direction (Y-direction). As illustrated in FIGS. 8 and 9, when the rebar binding robot 100 is traveling, the third roller 122c of the third traveling unit 121c is located on the first rebar R12, and the fourth roller 122d of the fourth traveling unit 121d is located on the first rebar R14. As illustrated in FIG. 9, the second roller portion 122b of the second traveling unit 121b also travels on the first rebar R14, similar to the fourth roller portion 122d of the fourth traveling unit 121d. Although not illustrated in FIGS. 8 and 9, the first roller portion 122a of the first traveling unit 121a also travels on the first rebar R12, similar to the third roller portion 122c of the third traveling unit 121c. In this way, when the rebar binding robot 100 according to the embodiment of the present disclosure travels along the first rebar R10, the rebar binding robot 100 travels, for example, on a certain first rebar R10 (first rebar R12) and a first rebar R10 (first rebar R14) that is located two positions away from the certain first rebar R12, and binds the intersection point c12 of the first rebar R10 and the second rebar R20 that is located on a first rebar R13, which is a first rebar R10 that is located between the first rebar R12 and the first rebar R14 on which the rebar binding robot 100 travels.

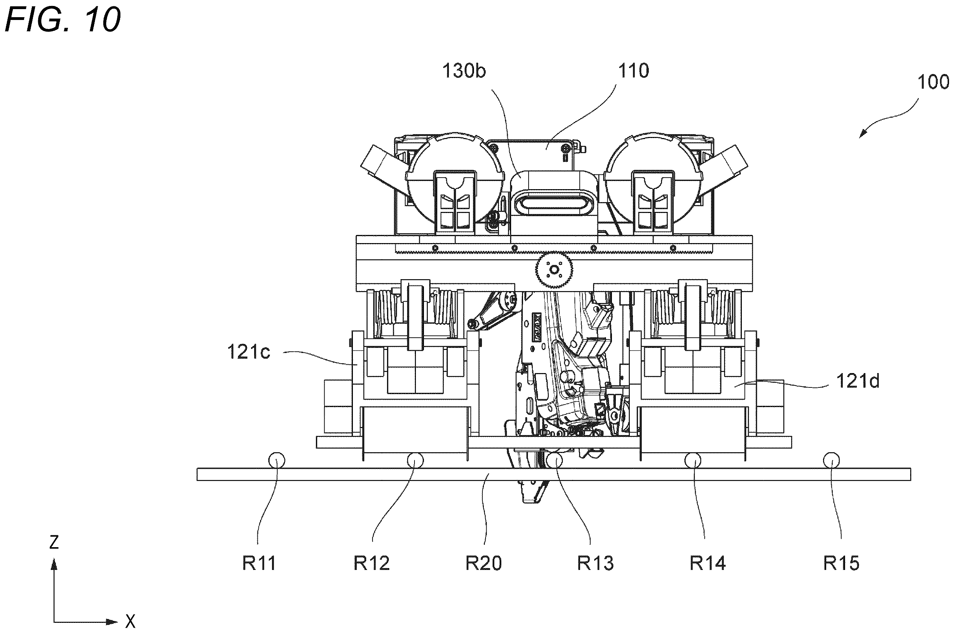

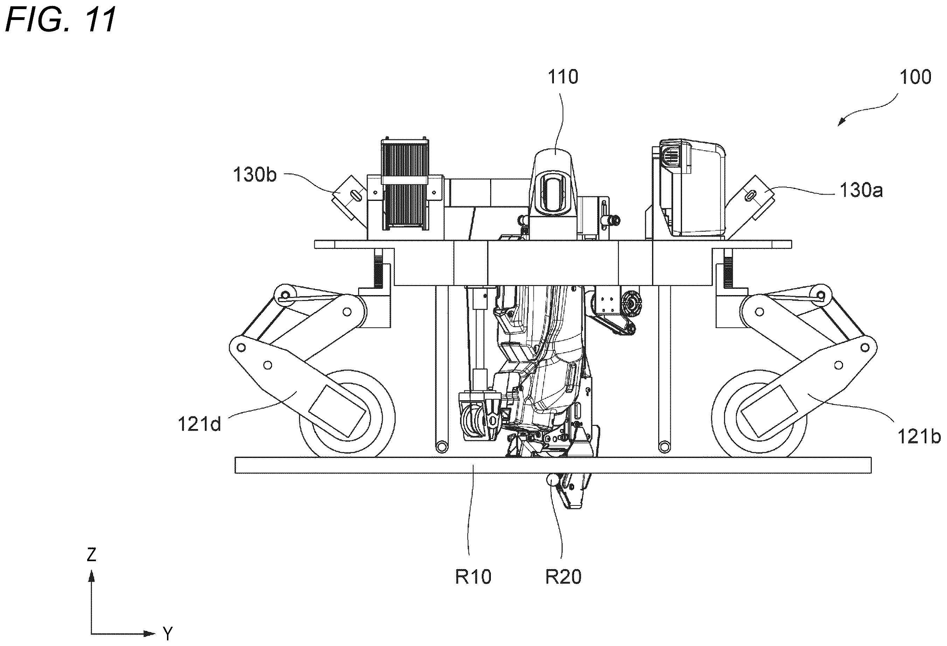

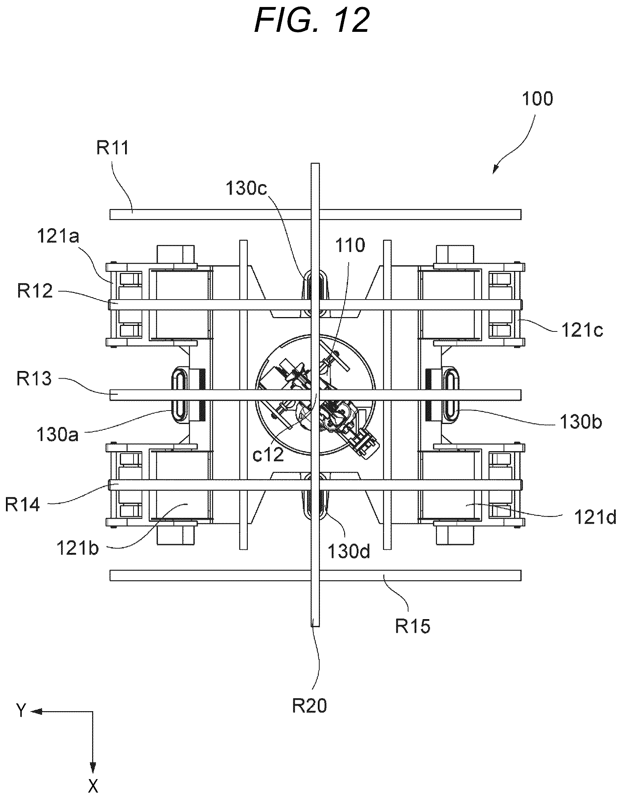

Next, the rebar binding robot 100 during rebar binding work will be described with reference to FIGS. 10, 11, and 12. FIG. 10 is a view of the rebar binding robot 100 that has stopped traveling and is performing binding work, as viewed from the Y-direction (-Y-direction). FIG. 11 is a view of the rebar binding robot 100 performing binding work, as viewed from the X-direction (+X-direction). FIG. 12 is a view of the rebar binding robot 100 performing the binding work, as viewed from below in the Z-direction (-Z-direction). FIGS. 10, 11, and 12 illustrate an example in which the rebar binding robot 100 binds the intersection point c12 of the first rebar R13 and the second rebar R20. When performing the binding work, the rebar binding robot 100 stops traveling (FIG. 10) and lowers the rebar binding unit 110 to perform the binding operation (FIGS. 11 and 12).

Next, a configuration for calculating the position of the rebar group R (first rebar R10 and second rebar R20) by the rebar binding robot 100 according to the embodiment of the present disclosure will be described. The rebar binding robot 100 according to the embodiment of the present disclosure includes the traveling unit 121 configured to travel on the rebar group R including a plurality of first rebars R1 of which an extension direction is the Y-direction (first direction) and a plurality of second rebars R2 of which an extension direction is the X-direction (second direction) intersecting the Y-direction (first direction) and that are arranged so as to intersect the first rebars R1, the sensor unit 130 configured to detect at least one first rebar R10 and/or at least one second rebar R20, and the first rebar determination section 164a1 and/or the second rebar determination section 164a2 (also referred to as a "rebar position calculation unit" in the present embodiment) configured to calculate the position of the at least one first rebar R10 and/or at least one second rebar R20 detected by the sensor unit 130 based on pixel values of a plurality of pixels that form a two-dimensional image generated by the detection result of the sensor unit 130. The rebar binding robot 100 according to the embodiment of the present disclosure can streamline the process of calculating the positions of the first rebar R10 and/or the second rebar R20 by calculating the positions of the first rebar R10 and/or the second rebar R20 based on a two-dimensional image generated by the detection results of the sensor unit 130. For example, by performing calculations based on two-dimensional images as detection results of the sensor units, a calculation load can be reduced compared to when calculating the position of the rebar using three-dimensional data.

In the rebar binding robot 100 according to the embodiment of the present disclosure, the two-dimensional image used to calculate the position of the first rebar R10 and/or the second rebar R20 may be a grayscale image. In this case, the rebar binding robot 100 is provided with the memory device 198 for storing information of at least one template image including a partial image of the first rebar R10 and/or the second rebar R20, and the above-mentioned two-dimensional image includes a gradation image, and the first rebar determination section 164a1 and/or the second rebar determination section 164a2 (rebar position calculation unit) may be configured to calculate the position of at least one first rebar R10 and/or at least one second rebar R20 by comparing the gradation image with the template image.

In addition, in the rebar binding robot 100 according to the embodiment of the present disclosure, when a density value of a pixel in a grayscale image is equal to or greater than a predetermined threshold, it may be determined that the pixel corresponds to the first rebar R10 and/or the second rebar R20. In this case, the first rebar determination section 164a1 and/or the second rebar determination section 164a2 (rebar position calculation unit) may determine that at least a part of the first rebar R1 and/or at least a part of the second rebar R2 are present at a position corresponding to a pixel having a density value equal to or greater than a predetermined threshold (first threshold) when the density value of the pixel forming the grayscale image is equal to or greater than the predetermined threshold. Alternatively, when using a grayscale image as the two-dimensional image, the grayscale image may be generated by lowering the image density in areas where objects are present and increasing the image density in areas where objects are not present. In this case, when the density value of a pixel is less than a predetermined threshold, it may be determined that the pixel corresponds to the first rebar R10 and/or the second rebar R20.

In the rebar binding robot 100 according to the embodiment of the present disclosure, the grayscale image may be generated based on detection results of a three-dimensional sensor. In this case, the sensor unit 130 includes a three-dimensional sensor capable of detecting the x-coordinates, y-coordinates, and z-coordinates of a plurality of points on a surface of a detection target object, and a z-coordinate value detected by the three-dimensional sensor is converted into an image density that differs depending on the magnitude of the z-coordinate value, and the grayscale image may be generated by constructing a two-dimensional image based on the x-coordinates, y-coordinates, and image density.

Alternatively, the rebar binding robot 100 according to the embodiment of the present disclosure may be configured so that the sensor unit 130 captures grayscale images. In this case, the sensor unit 130 may include an imaging device, and the grayscale image may be generated based on an image captured by the imaging device.

In addition, the rebar binding robot 100 according to the embodiment of the present disclosure may calculate the position of the first rebar R10 and/or the second rebar R20 based on a degree of matching. In this case, the first rebar determination section 164al and/or the second rebar determination section 164a2 (rebar position calculation unit) may be configured to calculate a position of at least one first rebar R10 and/or at least one second rebar R20 based on the degree of matching between the grayscale image and the template image.

In an embodiment of the present disclosure, the degree of matching may be calculated, for example, by comparing the detection results by the sensor unit 130 with a two-dimensional image generated based on the detection results by the sensor unit 130, or with a template image. For example, the pixel values of all pixels in a partial image to be compared among the two-dimensional image generated based on the detection results by the sensor unit 130 may be compared with the pixel values of all pixels in a template image, and the degree of matching may be calculated by expressing the proportion of matching pixels as a percentage based on whether the pixel values of corresponding pixels in the two images to be compared match. For example, when a template image contains 50,000 pixels and is compared with 50,000 pixels in a comparison grayscale image, and the density of 40,000 pixels matches or nearly matches (for example, the difference between the two is within 10%), the degree of matching may be calculated to be 80%.

In this case, the position of the first rebar R10 and/or the second rebar R20 may be calculated using a reference value of the degree of matching. In this case, the first rebar determination section 164a1 and/or the second rebar determination section 164a2 (rebar position calculation unit) may determine whether the matching degree is equal to or greater than a predetermined reference value, and when the matching degree is equal to or greater than the predetermined reference value, may determine that the first rebar R10 and/or the second rebar R20 are present within a detection range of the sensor unit 130.

In the rebar binding robot 100 according to the embodiment of the present disclosure, a different value may be set for each height as the reference value of the matching degree. In this case, the rebar binding robot 100 according to the embodiment of the present disclosure includes the robot height calculation section 164e (also referred to as a "robot height calculation unit" in the present embodiment) that calculates the height of the rebar binding robot 100 from the rebar group R, and the predetermined reference value includes a plurality of reference values corresponding to different heights of the rebar binding robot 100, and the first rebar determination section 164a1 and/or the second rebar determination section 164a2 (rebar position calculation unit) may be configured to determine whether a reference value corresponding to the height of the rebar binding robot 100 from the rebar group R calculated by the robot height calculation section 164e (robot height calculation unit) exists among the plurality of reference values. Then, when it is determined that a reference value corresponding to the height of the rebar binding robot 100 exists among the plurality of reference values, the rebar binding robot 100 may calculate the position of the first rebar R10 and/or the second rebar R20 based on this reference value. On the other hand, when it is determined that a reference value corresponding to the height of the rebar binding robot 100 does not exist among the plurality of reference values, the rebar binding robot 100 may calculate a new reference value corresponding to the measured height of the rebar binding robot 100 based on at least two of the plurality of reference values.

In the embodiment of the present disclosure, for example, a plurality of reference values may be set for the height of the rebar binding robot 100 from the rebar group R at predetermined intervals. For example, five reference values may be set for the height of the rebar binding robot 100 from the rebar group R, starting from 10 cm and ending at 30 cm in increments of 5 cm. In this case, for example, when the robot height calculation section 164e determines that the height of the rebar binding robot 100 from the rebar group R is 20 cm, and the reference value for the height of 20 cm is set to 60%, then 60% may be used as the reference value. Also, for example, when the robot height calculation section 164e determines that the height of the rebar binding robot 100 from the rebar group R is 23 cm, and no reference value for 23 cm has been set, a new reference value may be set based on, for example, a reference value of 20 cm and a reference value of 25 cm. For example, when the reference value for the height of 20 cm is 60% and the reference value for the height of 25 cm is 50%, the reference value at 23 cm may be calculated by linear interpolation as 50% + (((60% - 50%) * ((25 cm - 23 cm) / (25 cm - 20 cm))) = 54%. The newly calculated reference value may be stored in the memory device 198, for example, and may be used in subsequent operations as necessary. The above height, reference value, and method for calculating the new reference value are merely examples, and are not limited thereto. For example, more reference values may be set, and reference values may be set for heights less than 10 cm or greater than 30 cm, for example.

A process of calculating a position of a rebar by the rebar binding robot according to the embodiment of the present disclosure will be described below.

First, a specific example of the sensor unit 130 used in the rebar binding robot 100 will be described in detail. As the sensor unit 130, for example, a 3D distance camera such as a Time of Flight (ToF) camera (for example, TOF cam-635 manufactured by ESPROS Photonics Corporation) can be used. A 3D distance camera, for example, can output images in which the shade of light varies depending on the distance of each imaging target object from the camera, and the distance to the imaging target object is obtained for each pixel, with relatively closer objects being represented with a higher shade (closer to black) and relatively more distant objects being represented with a lower shade (closer to white). In the embodiment of the present disclosure, while the rebar binding robot 100 is traveling on the rebar group R, the distance between the rebar binding robot 100 and the rebar group R does not change significantly, so rebars may be detected by recognizing relatively dark objects as rebars (the first rebar R10 and/or the second rebar R20).

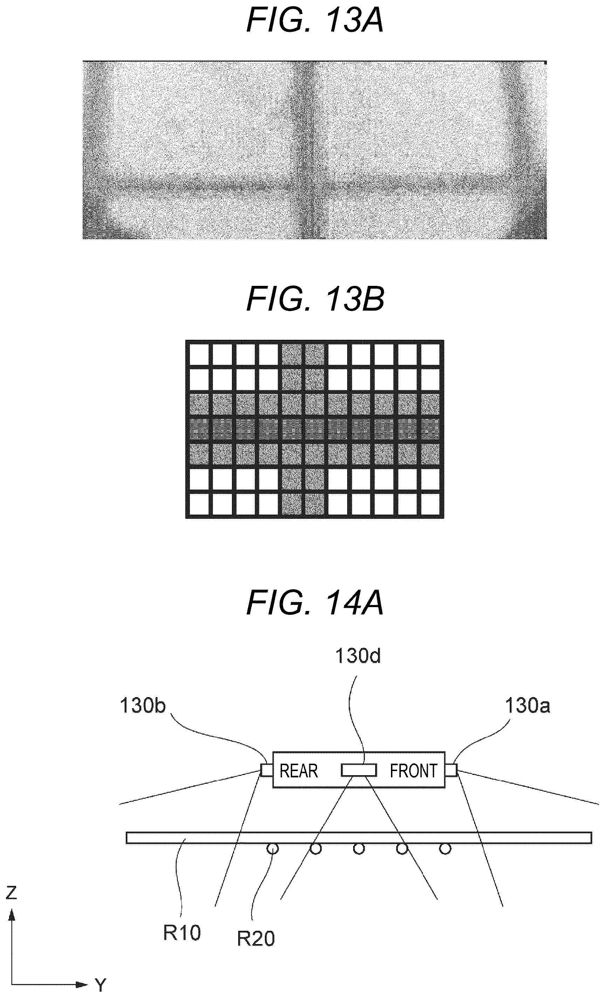

FIGS. 13A and 13B illustrate images output by a 3D range camera. FIG. 13A illustrates an image taken by the 3D distance camera in a vicinity of an intersection point of the first rebar R10 and the second rebar R20. FIG. 13B illustrates a schematic image of a vicinity of the intersection point of the first rebar R10 and the second rebar R20. As illustrated in FIG. 13A, the image captured by the 3D distance camera shows shades of light and dark, and in the embodiment of the present disclosure, areas of high density can be recognized as the first rebar R10 and/or the second rebar R20. As illustrated in FIG. 13B, an image in which the shade of light of density varies from pixel to pixel is obtained.

The sensor unit 130 is not limited to the imaging device such as a camera exemplified above, and other sensors may be used. For example, a laser capable of acquiring information in the depth direction or height direction may be used. For example, a two-dimensional image using image density similar to that described above may be generated based on depth information obtained by a laser.

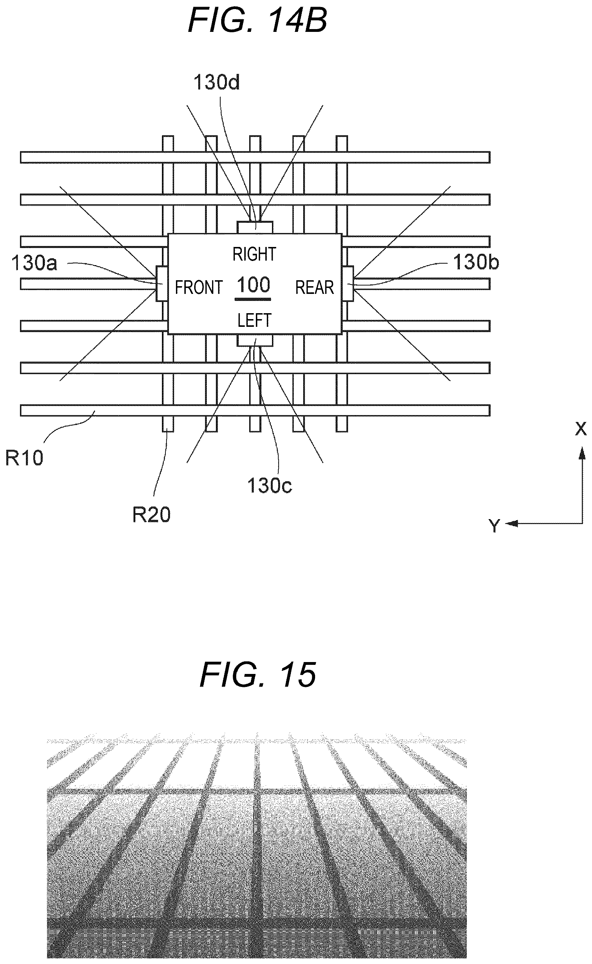

Next, a process of detecting rebars based on an image (a grayscale image in the present embodiment) captured and acquired by the sensor unit 130 will be described. First, the arrangement of the first sensor 130a, the second sensor 130b, the third sensor 130c, and the fourth sensor 130d of the sensor 130 will be described with reference to FIGS. 14A and 14B. FIGS. 14A and 14B are diagrams that schematically illustrate the arrangement of the first sensor 130a, the second sensor 130b, the third sensor 130c, and the fourth sensor 130d. FIG. 14A is a schematic side view of the rebar binding robot 100 as viewed from the horizontal direction (X-direction). FIG. 14B is a schematic top view of the rebar binding robot 100 as viewed from above (upper side in the Z-direction). FIG. 14A illustrates the first sensor 130a, the second sensor 130b, and the third sensor 130c, and also schematically illustrates imaging ranges of the first sensor 130a, the second sensor 130b, and the third sensor 130c.

As illustrated schematically in FIGS. 14A and 14B, the first sensor 130a and the second sensor 130b, which are spaced apart from each other in the Y-direction, are disposed so as to capture an image obliquely downward. The third sensor 130c and the fourth sensor 130d (not illustrated) are similarly disposed so as to capture images obliquely downward. The first sensor 130a and the second sensor 130b are set, for example, so that an angle of view that defines the imaging range is, for example, 80° or more and 100° or less. Further, the third sensor 130c and the fourth sensor 130d are set so that the angle of view is, for example, 50° or more and 70° or less. Any of the sensors 130 may be set to have other angles of view. As described above, when determining whether a foreign object is present based on the detection results of the first sensor 130a, the second sensor 130b, the third sensor 130c, and/or the fourth sensor 130d, the imaging range of each sensor may be changed, for example, by pointing the sensor at an upward angle.

FIG. 15 is a diagram schematically illustrating an image captured by the first sensor 130a. As illustrated in FIG. 15, in the embodiment of the present disclosure, the first sensor 130a is positioned to capture an image in a obliquely downward direction, so that the distance between adjacent first rebars R10 becomes narrower from the front to the back. In the embodiment of the present disclosure, the position of each rebar (the plurality of first rebars R10 and the plurality of second rebars R20) that forms the rebar group R can be detected based on the image thus obtained, for example by performing template matching. In the embodiment of the present disclosure, by using template matching, for example, rebars (first rebar R10 and/or second rebar R20) are detected based on the similarity (also referred to as the "matching degree" in the present embodiment) between a captured image and a previously prepared image, a grayscale image including shading parts corresponding to the rebars is prepared as a template, the images captured by each sensor unit 130 are scanned, and the similarity in a scanning direction is calculated.

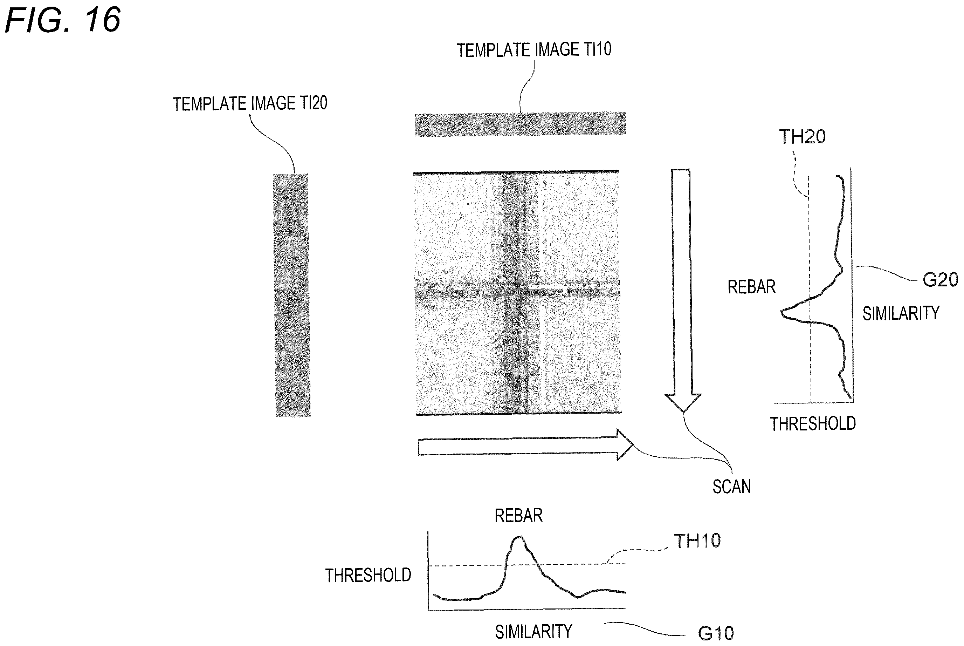

With reference to FIG. 16, template matching performed in the embodiment of the present disclosure will be described. FIG. 16 is a schematic diagram for illustrating template matching according to the present embodiment. FIG. 16 illustrates a captured image in a vicinity of the intersection point c12 of the first rebar R10 and the second rebar R20, as well as template images TI10 and TI20 for scanning in the X and Y-directions. FIG. 16 also illustrates the template images TI10 and TI20, and schematic graphs G10 and G20 of the similarities calculated in response to the respective scans. The template images TI10 and TI20 are scanned in the Y and X-directions, respectively, and the similarities with the template images TI10 and TI20 are calculated. Then, locations on the captured image where a maximum value of the calculated similarities exceeds a threshold are determined to correspond to locations where rebars are present. As illustrated in graphs G10 and G20, in the distribution of similarities along the Y and X-directions, portions exceeding threshold TH10 and threshold TH20 are confirmed, and these correspond to positions where rebars are present. The degree of similarity (degree of matching) may be calculated, for example, by comparing the color density of each pixel in the captured image with the color density of each pixel forming the template image. For example, first, a distance to a target object for each pixel in the captured image is extracted as a color density. Next, when the total or average color density of the entire captured image is light (for example, lower than a predetermined threshold), it is determined that there are no rebars in the captured image. On the other hand, when the color density is high (for example, higher than a predetermined threshold), a difference between the extracted color density and the color density of each pixel forming the template image is compared for each pixel. A position of the captured image pixel where the sum of absolute values of the differences between the color densities of the captured pixels and the pixels forming the template image is the lowest may be extracted as a rebar position. In this way, the first rebar R10 and the second rebar R20 can be detected by template matching based on the similarity calculated by scanning the template image against the captured image.

As described above with reference to FIG. 15, in the embodiment of the present disclosure, in the image captured by the first sensor 130a, the distance between the first rebars R10 adjacent to each other in the X-direction changes along the Y-direction. Similarly, also in the image captured by the second sensor 130b, the X-direction distance between the first rebars R10 changes in the Y-direction, and in the images captured by the third sensor 130c and the fourth sensor 130d, the Y-direction distance between the second rebars R20 changes along the X-direction. Therefore, for example, the captured image may be corrected by performing orthogonal transformation so that the distances between rebars in the captured image become approximately equal, and then template matching may be performed. It is also possible to detect rebars based on template matching by preparing an image in which the distance between rebars varies as illustrated in FIG. 15 as a template without performing image transformation such as orthogonal transformation.

In the template matching according to the embodiment of the present disclosure, for example, a frequency analysis may be performed on each image, and relevance between the captured image and the template image may be evaluated using a phase correlation method.

The positions of the first rebar R10 and the second rebar R20 can also be estimated by, for example, using a three-dimensional sensor to obtain three-dimensional XYZ data of a target object within the detection range. As described above, in the rebar binding robot 100 according to the embodiment of the present disclosure, by performing template matching in which the third-dimensional data in the Z-direction is treated as pixel density information, an amount of calculation required to calculate the position of the intersection point c12 can be made relatively small compared to the case in which calculations are performed based on, for example, three-dimensional XYZ data. When performing binding work at the intersection point c12 while traveling, as with the rebar binding robot 100 according to the embodiment of the present disclosure, a method for determining the position of the rebar using template matching, which can reduce the amount of calculations, is preferably used.

Next, a method for determining the intersection point of the first rebar R10 and the second rebar R20 in the embodiment of the present disclosure will be described. In the embodiment of the present disclosure, when the rebar binding robot 100 determines the intersection point c12 of the first rebar R10 and the second rebar R20, the first sensor 130a and the second sensor 130b may be configured to detect the first rebar R10, as described above. That is, as described above, the rebar binding robot 100 includes the rebar binding unit 110 configured to bind the intersection point c12 of the first rebar R10 and the second rebar R20 of the rebar group R, the sensor unit 130 includes the first sensor 130a and the second sensor 130b that are arranged spaced apart from each other along the third direction and are configured to be able to detect at least the first rebar R10, and the at least one template image described above includes the template image TI10 (first template image) that includes a partial image of the first rebar R10. Further, in the rebar binding robot 100, the traveling unit 121 advances in the Y-direction (first direction), and the direction (third direction) in which the first sensor 130a and the second sensor 130b are arranged is parallel to the Y-direction (first direction). Also, the first rebar determination section 164al and/or the second rebar determination section 164a2 (rebar position calculation unit) calculates the position of the first rebar R10 by comparing the detection results of the first sensor 130a and/or the second sensor 130b with the first template image, and the rebar binding unit 110 may bind the intersection point c12 on the first rebar R10 of which the position has been calculated.

In addition, in this case, the rebar binding robot 100 may be further configured so that the third sensor 130c and the fourth sensor 130d detect the second rebar R20 in addition to the first rebar R10 and estimate the intersection point c12. That is, the rebar binding robot 100 further includes the intersection point calculation section 166 (also referred to as an "intersection point estimation unit" in the present embodiment) that estimates the intersection point c12, the sensor unit 130 includes the third sensor 130c and the fourth sensor 130d that are arranged spaced apart from each other along the fourth direction that intersects with the third direction and are configured to be able to detect at least the second rebar R20, and at least one template image includes the template image TI20 (second template image) that includes a partial image of the second rebar R20. Further, the rebar binding robot 100 may be arranged so that the fourth direction is parallel to the X-direction (second direction). Also, the first rebar determination section 164a1 and/or the second rebar determination section 164a2 (rebar position calculation unit) calculates the position of the second rebar R20 by comparing the detection results of the third sensor 130c and/or the fourth sensor 130d with the second template image. The intersection point estimation section (intersection point estimation unit) estimates an intersection point between the calculated first rebar R10 and the calculated second rebar R20 as the intersection point c12, and the rebar binding unit 110 may be configured to bind the estimated intersection point c12.

In addition, when the rebar binding robot 100 detects the end R10e of the first rebar R10, it may cause the third sensor 130c and/or the fourth sensor 130d to detect the first rebar R10, and the first rebar R10 detected by the third sensor 130c and/or the fourth sensor 130d may be used to calculate a lateral movement amount of the rebar binding robot 100, which will be described below. That is, when the traveling unit 121 moves from the first rebar R10 on which the traveling unit 121 advances to another first rebar R10, the rebar binding robot 100 includes the movement amount calculation section 174 (movement amount calculation unit) that calculates the amount of movement of the traveling unit 121 based on position information of the first rebar R10 calculated by the first rebar determination section 164a1 and/or the second rebar determination section 164a2 (rebar position calculation unit). The first rebar determination section 164a1 and/or the second rebar determination section 164a2 (rebar position calculation unit) calculates the position of the first rebar R10 on which the traveling unit 121 advances based on the detection results of the first sensor 130a and/or the second sensor 130b. Then, when the matching degree of the detection result of the first sensor 130a is less than a predetermined reference value, it is determined whether the matching degree is equal to or greater than a predetermined end reference value, and if it is determined that the matching degree is equal to or greater than the predetermined end reference value, it is determined that the end R10e of the first rebar R10 is present within the detection range of the first sensor 130a. Then, when it is determined that the end R10e of the first rebar R10 is present within the detection range of the first sensor 130a, the third sensor 130c and/or the fourth sensor 130d are set to detect the first rebar R10. Further, the first rebar determination section 164a1 and/or the second rebar determination section 164a2 (rebar position calculation unit) calculates the position of another first rebar R10 that is separated in the X-direction (second direction) from the first rebar R10 on which the traveling unit 121 advances, based on the detection results of the third sensor 130c and/or the fourth sensor 130d. Then, the movement amount calculation section 174 (movement amount calculation unit) calculates the movement amount of the traveling unit 121 in the X-direction (second direction) based on the position of the other first rebar R10 calculated by the first rebar determination section 164a1 and/or the second rebar determination section 164a2 (rebar position calculation unit) and the position of the first rebar R10 on which the traveling unit 121 advances, and the traveling unit 121 may be configured to move in the X-direction (second direction) based on the calculated movement amount in the X-direction (second direction).

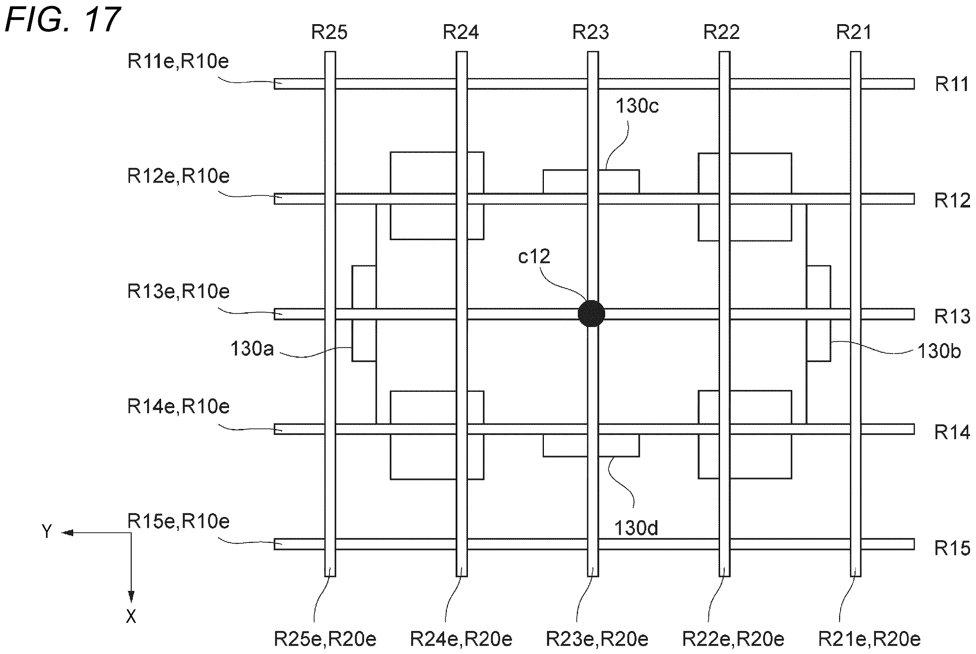

Referring to FIG. 17, a method for estimating the intersection point of the first rebar R10 and the second rebar R20 will be described. FIG. 17 is a schematic diagram of the rebar binding robot 100 as viewed from below in the Z-direction (-Z-direction) for illustrating the method for estimating the intersection point. As illustrated in FIG. 17, for example, in the embodiment of the present disclosure, the rebar binding robot 100 is configured to travel on two first rebars R12 and R14, as described above, with the first sensor 130a and the second sensor 130b detecting the first rebar R13, and the third sensor 130c and the fourth sensor 130d detecting the second rebar R20. In the example illustrated in FIG. 17, the third sensor 130c and the fourth sensor 130d detect, for example, the second rebar R23. In this case, based on the detection results of the first sensor 130a and the second sensor 130b, the first rebar R13 extending between the first sensor 130a and the second sensor 130b is estimated, and based on the detection results of the third sensor 130c and the fourth sensor 130d, a second rebar R23 extending between the third sensor 130c and the fourth sensor 130d is estimated. A point where the estimated first rebar R13 extending between the first sensor 130a and the second sensor 130b intersects with the second rebar R23 extending between the third sensor 130c and the fourth sensor 130d is estimated to be the intersection point c12.

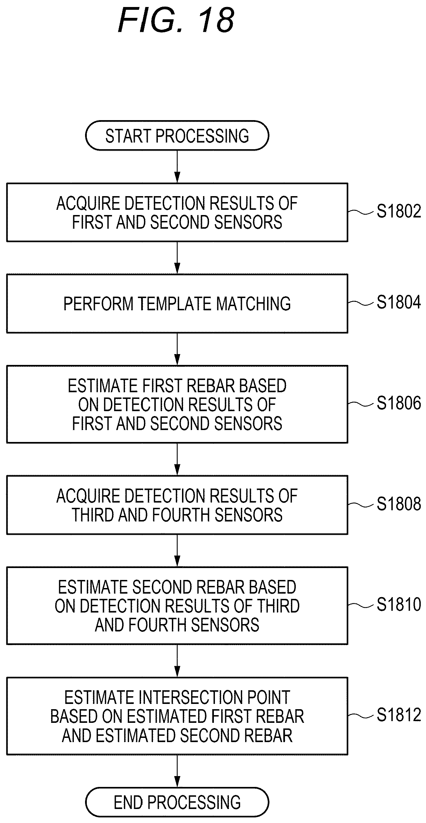

A method for estimating the intersection point c12 in the embodiment of the present disclosure will be described with reference to FIG. 18. FIG. 18 is a flowchart of the method for estimating the intersection point c12 in the embodiment of the present disclosure.

First, the detection results of the first sensor 130a and the second sensor 130b are acquired (S1802).

Next, based on the detection results of the first sensor 130a and the second sensor 130b, template matching is performed to confirm the first rebar R10 and/or the second rebar R20 detected by the first sensor 130a and the second sensor 130b (S1804).

The position of the first rebar R13 is estimated based on the detection results of the first sensor 130a and the second sensor 130b (S1806).

Next, the detection results of the third sensor 130c and the fourth sensor 130d are acquired (S1808).

Next, the position of the second rebar R20 is estimated based on the detection results of the third sensor 130c and the fourth sensor 130d (S1810).

Next, the intersection point is estimated based on the estimated position of the first rebar R13 and the estimated position of the second rebar R20 (S1812).

In this manner, the rebar binding robot 100 according to the embodiment of the present disclosure is arranged on the rebar group R so that the third direction (Y-direction) in which the first sensor 130a and the second sensor 130b are arranged is parallel to the first direction in which the first rebar R10 extends, and the fourth direction in which the third sensor 130c and the fourth sensor 130d are arranged is parallel to the second direction in which the second rebar R20 extends, and is provided with the intersection point calculation section 166 which is an intersection point estimation unit that estimates the intersection point c12, and the first sensor 130a and the second sensor 130b are configured to be capable of detecting the first rebar R10. The third sensor 130c and the fourth sensor 130d are configured to be capable of detecting the second rebar R20. Also, the intersection point calculation section 166, which is the intersection point estimation section, may be configured to estimate the position of the first rebar R10 (first rebar R13) detected by both the first sensor 130a and the second sensor 130b based on the detection results of the first sensor 130a and the second sensor 130b, and to estimate the position of the second rebar R20 (second rebar R23) detected by both the third sensor 130c and the fourth sensor 130d based on the detection results of the third sensor 130c and the fourth sensor 130d, and to estimate an intersection point between the first rebar R13 detected by the first sensor 130a and the second sensor 130b and the second rebar R23 detected by the third sensor 130c and the fourth sensor 130d as the intersection point c12.

When the rebar binding robot 100 calculates the position of the intersection point c12 of the first rebar R10 and the second rebar R20 on the first rebar R13, for example, the first sensor 130a may have passed through the point (intersection portion cp12) of intersection. In this case, for example, the calculated position of the intersection point c12 may be adjusted based on information about the intersection portion cp12 imaged by the first sensor 130a. That is, the rebar binding robot 100 may be configured so that the first sensor 130a and the second sensor 130b proceed in the first direction (Y-direction) while detecting the first rebar R10, and when the first sensor 130a detects an intersection portion cp12 where the first rebar R10 intersects the second rebar R20 while the rebar binding robot 100 is advancing, it determines whether the intersection portion cp12 coincides with the estimated intersection point c12, and when the intersection portion cp12 and the estimated intersection point c12 do not coincide, it may be configured to adjust the position of the estimated intersection point c12. When the position of the detected intersection portion cp12 does not match the position of the estimated intersection point c12, the position of the rebar binding robot 100 may be adjusted, for example, by accelerating or decelerating the first traveling unit 121a, the second traveling unit 121b, the third traveling unit 121c, and/or the fourth traveling unit 121d of the traveling unit 121, respectively, in a manner similar to that described above regarding the method of making the rebar binding robot 100 follow the first rebar R10, or by controlling the rotation speeds of the first wheel drive motor 124a, the second wheel drive motor 124b, the third wheel drive motor 124c, and the fourth wheel drive motor 124d.

The method for estimating the intersection point described above with reference to FIG. 18 is merely an example, and is not limited to the above example. For example, the detection results obtained by each sensor do not have to be obtained in the above-described order, and the estimation of the position of the rebar based on the detection results does not have to be performed in the above-described order.

Next, a method for calculating an amount of movement of the rebar binding robot 100 in the embodiment of the present disclosure will be described. Referring to FIG. 17, an example will be described in which the rebar binding robot 100 reaches a vicinity of the Y-direction end R10e of the first rebar R10 and moves laterally (in the X-direction). As illustrated in FIG. 17, the rebar binding robot 100 travels over the first rebar R12 and the first rebar R14, and binds the points where the first rebar R13 located between the first rebar R12 and the first rebar R14 intersects the second rebars R20 (for example, second rebars R21, R22, R23, R24, and R25), reaching the vicinity of end R12e, end R13e, and end R14e. In this case, the rebar binding robot 100 will next perform the binding work on the first rebar R14, which is the rebar adjacent to the first rebar R13 in the X-direction (+X-direction) on which the rebar binding robot 100 has performed the binding work, and therefore moves in the X-direction (+X-direction, a direction from the first rebar R13 to the first rebar R14).

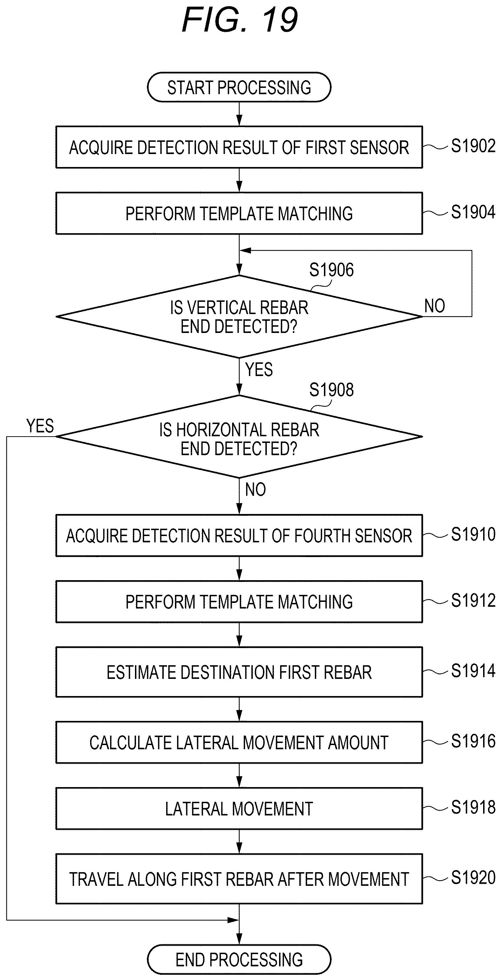

A method of lateral movement of the rebar binding robot 100 in this case will be described with reference to FIG. 19. FIG. 19 is a flowchart regarding the lateral movement of the rebar binding robot 100.

First, the detection result of the first sensor 130a is acquired (S1902).

Next, template matching is performed on the detection result of the first sensor 130a (S1904).

Next, based on the result of template matching, it is determined whether the end R13e of the first rebar R13 detected by the first sensor 130a is detected (S1906).

Next, it is determined whether the end R20e of the second rebar R20 is detected (S1908). As the end R20e of the second rebar R20, for example, as illustrated in FIG. 17, it may be determined whether any of the ends R21e, R22e, R23e, R24e, and R25e of the second rebars R21, R22, R23, R24, and R25 is detected.

For example, it may be determined whether the end R20e of the second rebar R20 is detected based on the detection results of the third sensor 130c and/or the fourth sensor 130d. In the embodiment of the present disclosure, the rebar binding robot 100 performs binding work at the intersection point of the first rebar R10 and the second rebar R20, from the first rebar R10 on a left side of the X-axis to the first rebar R10 on a right side of the X-axis, when viewed from above in the Z-axis direction. Therefore, it may be possible to determine whether the end R20e of the second rebar R20 on a right side in the X-direction is detected based on the detection result of the fourth sensor 130d provided on the right side in the X-direction when viewed from above in the Z-direction. For example, when the fourth sensor 130d detects the end R20e of the second rebar R20 on the right side in the X-direction, it is possible that the binding work of the last first rebar R10 is completed, so the binding work of the rebar group R that is a work target may be terminated.

The detection of the end R20e is not limited thereto and may be determined, for example, based on the detection results of other sensors. When binding work is performed from the first rebar R10 on the right side in the X-direction to the first rebar R10 on the left side in the X-direction, the end R20e of the second rebar R20 on the left side in the X-direction may be detected by the third sensor 130c. It is also possible to configure the binding work to be terminated based on a condition other than the detection of the end R20e. For example, it is possible to configure the rebar binding robot 100 to move by setting conditions to start binding work on another rebar at a location other than the end R20e, or to change the binding position when a factor such as a foreign object is detected, and to move the rebar binding robot 100 to a different rebar for which binding work is to be performed. In addition, it is also possible for the first sensor 130a and/or the second sensor 130b to detect the second rebar R20 by adjusting, for example, the placement location, inclination, angle of view, or the like, so that detection of the end R20e of the second rebar R20 may be performed using the detection results of the first sensor 130a and/or the second sensor 130b.

Next, the detection result of the fourth sensor 130d is acquired (S1910).

Next, template matching is performed based on the detection result of the fourth sensor 130d (S1912).

Next, based on the position of the first rebar R10 detected by the fourth sensor 130d, a destination first rebar R10 of the rebar binding robot 100 is estimated (S1914). In the embodiment of the present disclosure, the fourth sensor 130d detects a plurality of first rebars R10. For example, in the example illustrated in FIG. 17, the fourth sensor 130d may detect a first rebar R14 located on the right side of the rebar binding robot 100 in the X-direction. In addition, since the binding work has been performed at the intersection points c12 of the first rebar R10 and the second rebars R20 along the first rebar R13, when next performing the binding work at the intersection points along the first rebar R14, the rebar binding robot 100 moves laterally, for example, to travel over the first rebar R13 and the first rebar R15. For example, lateral movement may be performed to move the rebar binding robot 100 in the X-direction so that the first traveling unit 121a and the third traveling unit 121c travel on the first rebar R13, and the second traveling unit 121b and the fourth traveling unit 121d travel on the first rebar R15.

Next, a lateral movement amount is calculated (S1918). The lateral movement amount of the rebar binding robot 100 may be calculated by the following method. For example, as described above, when the rebar binding robot 100 moves to the right in the X-direction (+X-direction) when viewed from above in the Z-direction, that is, when it moves in the direction where the fourth sensor 130d is located, the lateral movement amount of the rebar binding robot 100 may be calculated based on two pieces of information: how far the fourth sensor 130d is in the X-direction from a center of the rebar binding robot 100 in the X-direction, and how far the first rebar R14 detected by the fourth sensor 130d is from the fourth sensor 130d.

When calculating how far the fourth sensor 130d is from the X-direction center of the rebar binding robot 100 in the X-direction, the center of the rebar binding robot 100 in the X-direction may be, for example, a position where the rebar binding unit 110 is located. Alternatively, the binding position of the rebar binding unit 110 may be regarded as the center of the rebar binding robot 100 in the X-direction. In this case, for example, the X-direction position of the first rebar R13, which is a target of the rebar binding robot 100 performing the binding work, may be determined to be the center position of the rebar binding robot 100 in the X-direction. In addition, the center position of the rebar binding robot 100 in the X-direction and a distance (distance in the X-direction) of the fourth sensor 130d from the center position of the rebar binding robot 100 in the X-direction may be calculated in advance and stored in the memory device 198. In addition, in a configuration in which the position of the sensor unit 130 can be changed, for example, when the position of the fourth sensor 130d is changed depending on a construction site or the like, the direction and amount in which the fourth sensor 130d has been moved can be calculated, and the distance in the X-direction of the fourth sensor 130d from the center of the rebar binding robot 100 in the X-direction can be calculated taking into account the amount of movement of the fourth sensor 130d. Furthermore, the distance between the fourth sensor 130d and the first rebar R14 detected by the fourth sensor 130d may be calculated, for example, based on an image captured by the fourth sensor 130d.

For example, when the fourth sensor 130d is attached at a position 100 away in the X-direction from the center (for example, the position of the first rebar R13) of the rebar binding robot 100 in the X-direction, and the first rebar R14 is at a position 20 away from the fourth sensor 130d in a direction away from the center of the rebar binding robot 100 in the X-direction, the interval (the interval between the first rebar R13 and the first rebar R14) of the first rebar R10 may be calculated to be 121, and control may be performed to set the lateral movement amount to 121. For example, when the fourth sensor 130d is attached at a position 20 cm away in the X-direction from the center (for example, the position of the first rebar R13) of the rebar binding robot 100 in the X-direction, and the first rebar R14 is located 4 cm away from the fourth sensor 130d in a direction away from the center of the rebar binding robot 100 in the X-direction, the interval (the interval between the first rebar R13 and the first rebar R14) of the first rebar R10 may be calculated to be 24 cm, and control may be performed to set the lateral movement amount to 24 cm. In addition, when the fourth sensor 130d is attached at a position 20 cm away in the X-direction from the center (for example, the position of the first rebar R13) of the rebar binding robot 100 in the X-direction, and the first rebar R14 is located 4 cm closer to the center of the rebar binding robot 100 in the X-direction from the fourth sensor 130d, the interval (the interval between the first rebar R13 and the first rebar R14) of the first rebar R10 may be calculated to be 16 cm, and control may be performed to set the lateral movement amount to 16 cm.

The lateral movement amount of the rebar binding robot 100 may be calculated so that, for example, as described above, when the rebar binding robot 100 is moved laterally next to bind the intersection points on the first rebar R14, the rebar binding robot 100 performs a lateral movement by the lateral movement amount that is equivalent to the overall interval between adjacent first rebars R10. In the above-described example, the first traveling unit 121a and the third traveling unit 121c move from the first rebar R12 to the first rebar R13, and the second traveling unit 121b and the fourth traveling unit 121d move from the first rebar R14 to the first rebar R15. In the embodiment of the present disclosure, the first rebars R10 are arranged at approximately equal intervals and approximately parallel to one another, so that the first traveling unit 121a to the fourth traveling unit 121d move by the same amount in the X-direction. Therefore, the lateral movement amount may be, for example, the interval in the X-direction between the first rebar R14 and the first rebar R15 detected by the fourth sensor 130d. Alternatively, since the interval between the first rebars R10 is approximately equal, the lateral movement amount may be calculated based on the interval between adjacent first rebars R10 calculated based on the detection results from another sensor. In addition, distances in the X-direction between a plurality of (for example, three or more) first rebars R10 may be calculated, an average value of the calculated distances in the X-direction between the plurality of first rebars R10 may be calculated, and the average value of the interval between the first rebars R10 may be used as the lateral movement amount. By calculating the average value, even when there is an error in the interval between the first rebars R10, the effect of the error on the calculated lateral movement amount can be reduced.

Next, the rebar binding robot 100 is moved laterally based on the calculated lateral movement amount (S1918).

After completing its lateral movement, the rebar binding robot 100 may, for example, move along the first rebar R13 and the first rebar R15 where the first traveling unit 121a to the fourth traveling unit 121d are located after the movement (S1920), and begin binding work at the intersection points c12 on the first rebar R14.

The detection of the end R10e of the first rebar R10 described above may be performed, for example, by preparing a template corresponding to an image of the end R10e and determining the degree of matching of the end R10e with the template. For example, when preparing a template image extended in one direction for a portion other than the end R10e as illustrated with reference to FIG. 16, a template image may be prepared for the end R10e in which a length in the Y-direction of a portion corresponding to the rebar is shorter than that of the portion other than the end R10e.

Alternatively, it may be determined that the end R10e is being reached when the matching degree is within a certain range of values. For example, in the portion other than the end R10e of the first rebar R10, when the matching degree is relatively close to 100%, for example, 75% or more, the presence of portion other than the end R10e of the first rebar R10 can be determined, and when the matching degree is relatively low, for example, 50% or more and 75% or less, it can be determined that the rebar binding robot 100 is traveling on a portion of the first rebar R10 close to the end R10e. The matching degree here for the portion other than the end R10e and for the vicinity of the end R10e is merely an example, and other values may be set, or a reference value may be configured to be changeable depending on the arrangement of the rebars and other environments, or the like.

In this way, when the rebar binding robot 100 moves laterally, the detection results of the first rebar R10 by the third sensor 130c and/or the fourth sensor 130d are particularly used. As for the third sensor 130c and the fourth sensor 130d, as described above, for example, when calculating the position of the intersection point c12 of the first rebar R10 and the second rebar R20, the detection results of the position of the second rebar R20 by the third sensor 130c and the fourth sensor 130d are used. In other words, when calculating the position of the intersection point c12 of the first rebar R10 and the second rebar R20, the detection results of the position of the first rebar R10 by the third sensor 130c and the fourth sensor 130d do not need to be used, and in this case, the first rebar R10 does not need to be detected by the third sensor 130c and the fourth sensor 130d. When the rebar binding robot 100 progresses with the rebar binding work and reaches the end R10e of the first rebar R10, for example, the rebar binding robot 100 moves laterally, and therefore, an imaging range of the third sensor 130c and/or the fourth sensor 130d may be changed, for example, by changing the orientation of the third sensor 130c and/or the fourth sensor 130d so that the first rebar R10 can be detected by the third sensor 130c and/or the fourth sensor 130d and the amount of movement can be calculated.

Hereinabove, with reference to FIG. 19, an example is described in which the detection results of the first sensor 130a and the fourth sensor 130d are used, but the sensors of which the detection results are referred are not limited thereto, and it is also possible to change which sensor is used depending on the direction in which the rebar binding robot 100 is advancing, for example. As described above, when the end R10e of the first rebar R10 is detected by the first sensor 130a, the rebar binding robot 100 is not limited to moving laterally in the direction of the fourth sensor 130d. For example, when the end R10e of the first rebar R10 is detected by the first sensor 130a, the rebar binding robot 100 may move laterally in the direction of the third sensor 130c. Also, for example, when the end R10e of the first rebar R10 is detected by the second sensor 130b, the rebar binding robot 100 may move laterally in the direction of the third sensor 130c, or when the end R10e of the first rebar R10 is detected by the second sensor 130b, the rebar binding robot 100 may move laterally in the direction of the fourth sensor 130d.

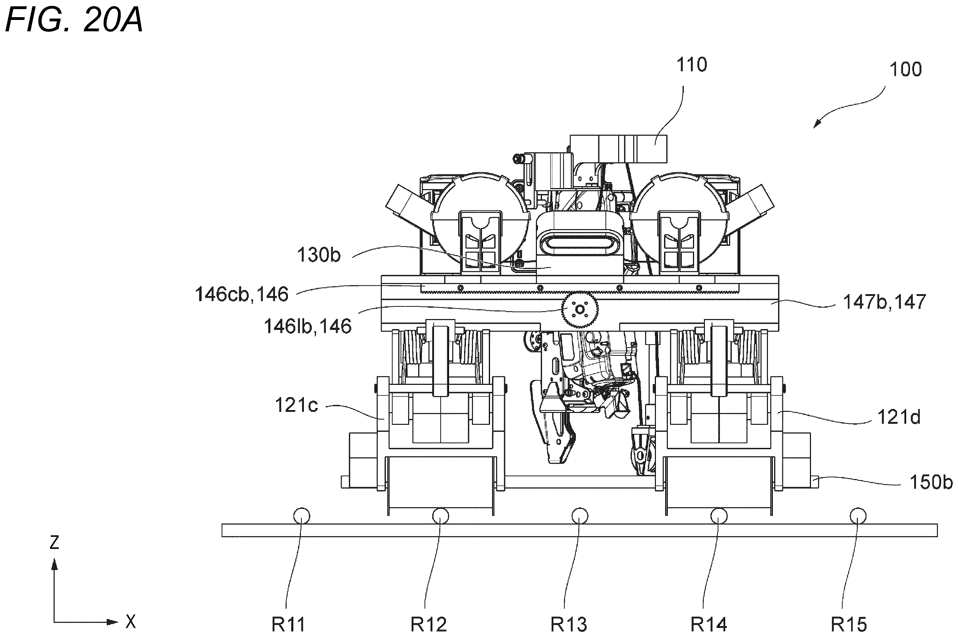

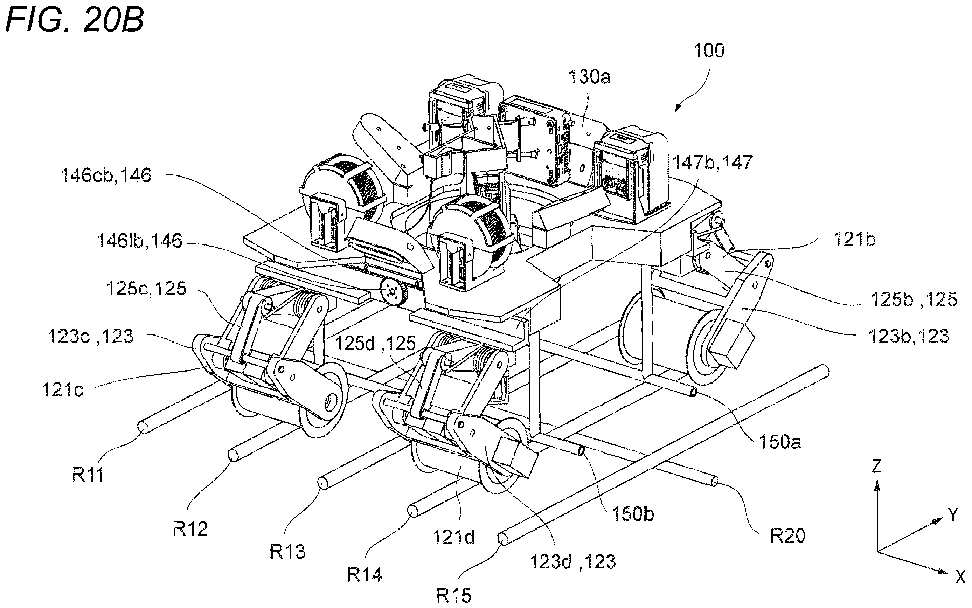

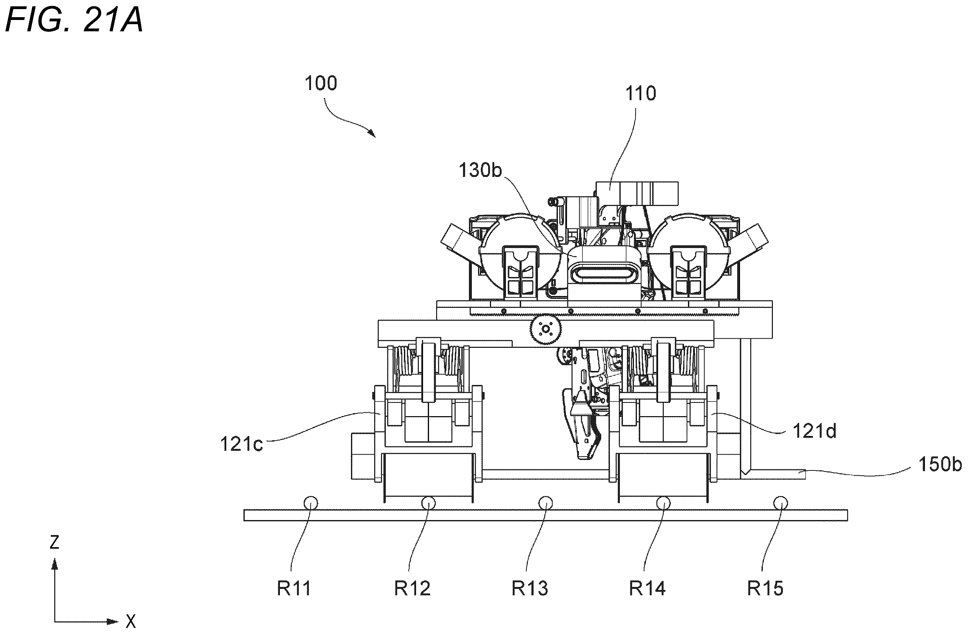

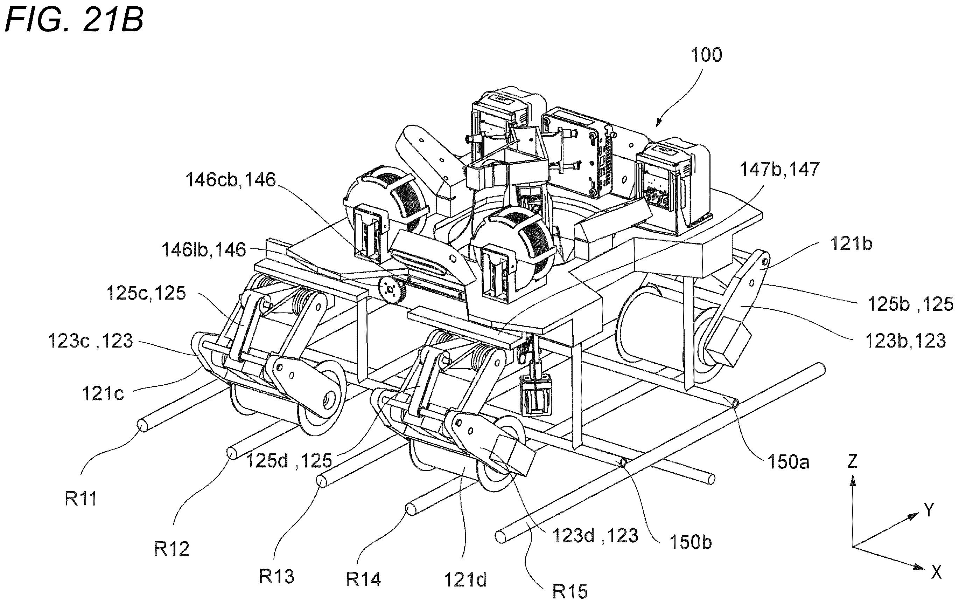

An example of the lateral movement of the rebar binding robot 100 will be described below with reference to FIGS. 20A to 25B. FIGS. 20A to 25B are views of the rebar binding robot 100 for the rebar binding robot 100 during lateral movement, FIGS. 20A, 21A, ..., 25A are views of the rebar binding robot 100 from the rear, and FIGS. 20B, 21B, ..., 25B are views of the rebar binding robot 100 as viewed obliquely from above.

FIGS. 20A and 20B illustrate the rebar binding robot 100 before commencing its lateral movement. As illustrated in FIGS. 20A and 20B, the rebar binding robot 100 travels over the first rebars R12 and R14.

Next, the rebar binding robot 100 starts to move laterally. In the embodiment of the present disclosure, as described above, it is determined that lateral movement begins when, for example, it is determined based on the detection results by the first sensor 130a that the sensor has reached or is approaching the vicinity of the end R10e of the first rebar R10. FIGS. 21A and 21B illustrate a state when the rebar binding robot 100 starts to move laterally. As illustrated in FIGS. 21A and 21B, the rebar binding robot 100 moves in the direction in which the main body unit 140 moves (X-direction) without moving the traveling unit 121. As illustrated in FIGS. 21A and 21B, in this case, the first traveling unit 121a and the second traveling unit 121b are respectively present on the first rebar R12 and the first rebar R14 without moving. In this case, the support bars 150a and 150b are not in contact with any of the rebars. The lateral movement (here, for example, movement in the horizontal direction (movement in the X-direction)) of the main body unit 140 may be performed, for example, by driving the first lateral movement roller 1461a and the second lateral movement roller provided on the first connecting portion 147a and the second connecting portion 147b by the first lateral movement motor 146ma and the second lateral movement motor 146mb of the lateral movement unit 146 not illustrated in FIGS. 21A and 21B, and moving the main body unit 140 in the X-direction via the first drive rack 146ca and the second drive rack 146cb.

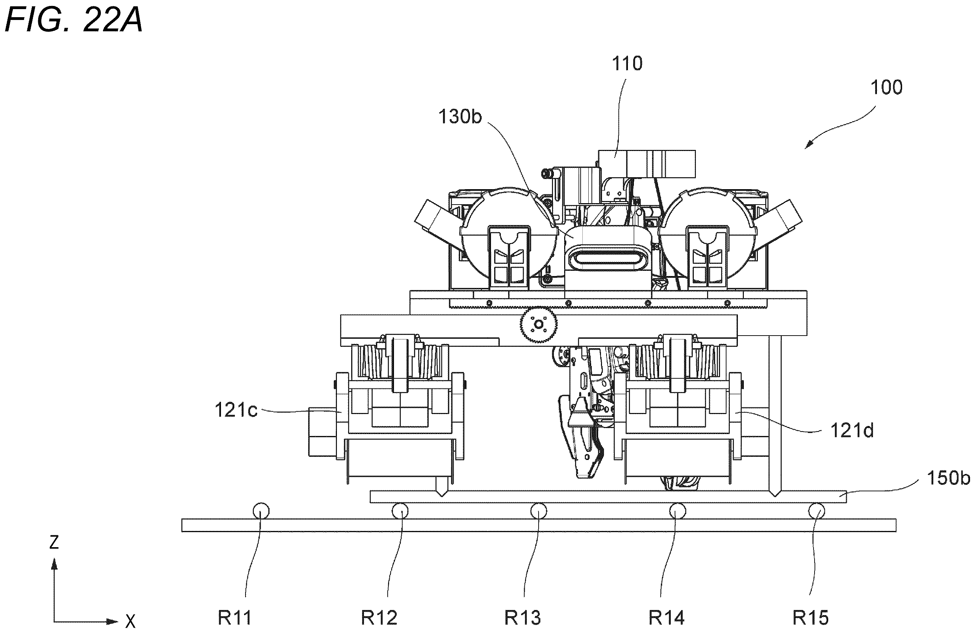

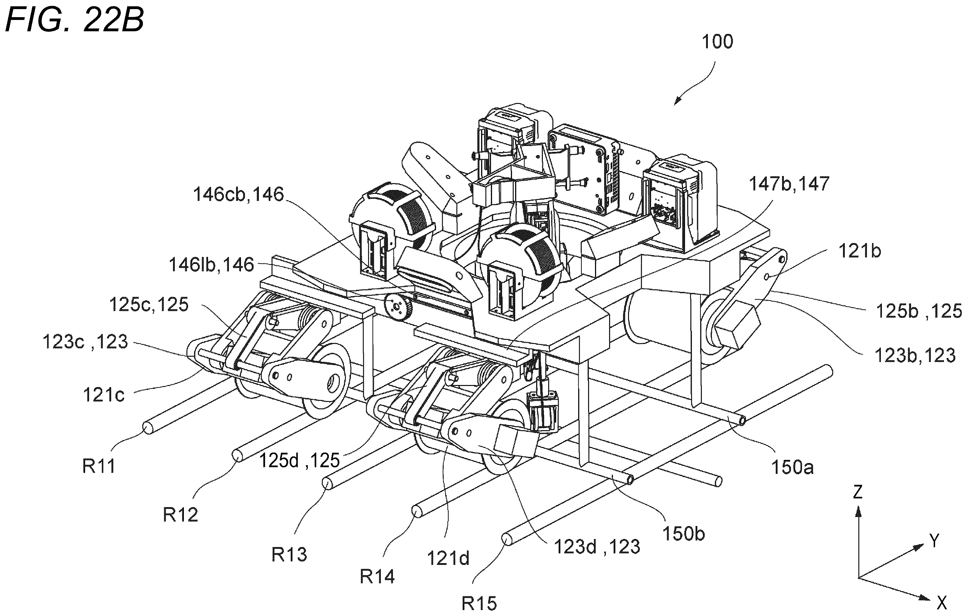

Next, the rebar binding robot 100 moves the traveling unit 121 (lower end of the traveling unit 121) upward relative to the first rebar R10. As illustrated in FIGS. 22A and 22B, the lower end of the traveling unit 121 in the -Z-direction is raised upward in the Z-direction (+Z-direction) in FIGS. 22A and 22B. In this case, for example, the first main body side link portion 125a and the first roller side link portion 123a move relatively closer to each other (that is, the first main body side link portion 125a and the first roller side link portion 123a move closer to each other). That is, the first main body side link portion 125a and the first roller side link portion 123a move so that the angle formed between the first main body side link portion 125a and the first roller side link portion 123a becomes smaller. Similarly, for the second traveling unit 121b, the third traveling unit 121c, and the fourth traveling unit 121d, the second main body side link portion 125b and the second roller side link portion 123b, the third main body side link portion 125c and the first roller side link portion 123c, and the fourth main body side link portion 125d and the fourth roller side link portion 123d respectively move in the closing direction.

When a main body side link portion 125 and a roller side link portion 123 close and the lower end of the traveling unit 121 rises, the support bars 150a and 150b move downward relatively. When the traveling unit 121 moves away from the first rebar R10, the support bars 150a and 150b come into contact with the first rebar R10. For example, the traveling unit 121 may be configured so that its length in the Z-direction can be changed by closing the main body side link portion 125 and the roller side link portion 123 (the first main body side link portion 125a and the first roller side link portion 123a, the second main body side link portion 125b and the second roller side link portion 123b, the third main body side link portion 125c and the third roller side link portion 123c, and the fourth main body side link portion 125d and the fourth roller side link portion 123d) which correspond to a configuration supporting the roller (the first roller portion 122a, the second roller portion 122b, the third roller portion 122c, and the fourth roller portion 122d) using a motor or the like (for example, a first wheel height change motor 126a, a second wheel height change motor 126b, a third wheel height change motor 126c, and a fourth wheel height change motor 126d illustrated in FIG. 7). A roller portion 122 may be raised by closing the main body side link portion 125 and the roller side link portion 123, so that the roller portion 122 moves away from the first rebar R10.

As illustrated in FIGS. 22A and 22B, the support bars 150a and 150b come into contact with, for example, the first rebars R11 to R14. In this manner, the entirety of the rebar binding robot 100 is supported by the support bars 150a and 150b.

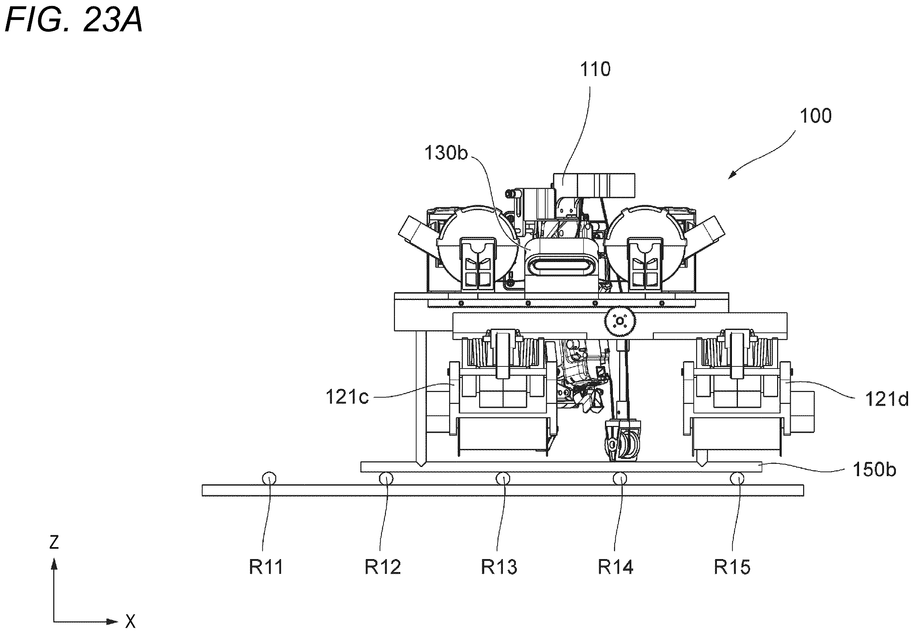

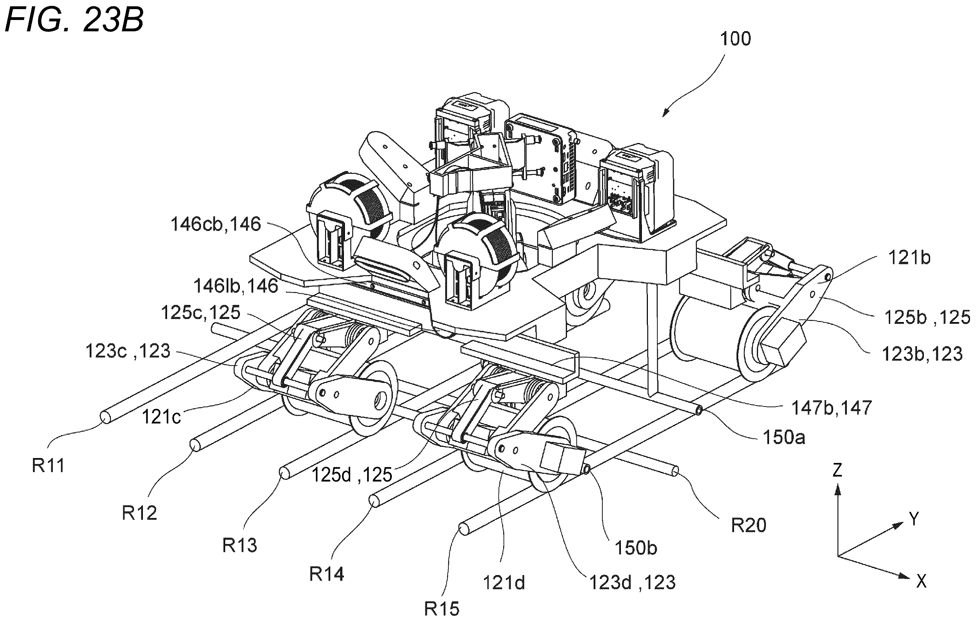

Next, the traveling unit 121 of the rebar binding robot 100 moves in the X-direction. As illustrated in FIGS. 23A and 23B, the first traveling unit 121a and the third traveling unit 121c, and the second traveling unit 121b and the fourth traveling unit 121d, which were respectively in contact with the first rebar R12 and the first rebar R14, are moved above the first rebar R13 and the first rebar R15. In this case, none of the first traveling unit 121a to the fourth traveling unit 121d are in contact with the first rebar R10, and the support bars 150a and 150b are in contact with the first rebar R10 (first rebars R12 to R15) and support the rebar binding robot 100.

Next, the main body side link portion 125 and the roller side link portion 123 of the traveling unit 121 are opened. This causes the lower end of the traveling unit 121 in the -Z-direction to lower relative to the first rebar R10. In this case, for example, the first main body side link portion 125a and the first roller side link portion 123a move relatively away from each other (that is, the first main body side link portion 125a and the first roller side link portion 123a move apart). That is, the first main body side link portion 125a and the first roller side link portion 123a move so that the angle formed between the first main body side link portion 125a and the first roller side link portion 123a becomes larger. Similarly, for the second traveling unit 121b, the third traveling unit 121c, and the fourth traveling unit 121d, the second main body side link portion 125b and the second roller side link portion 123b, the third main body side link portion 125c and the first roller side link portion 123c, and the fourth main body side link portion 125d and the fourth roller side link portion 123d respectively move in a direction away from each other.

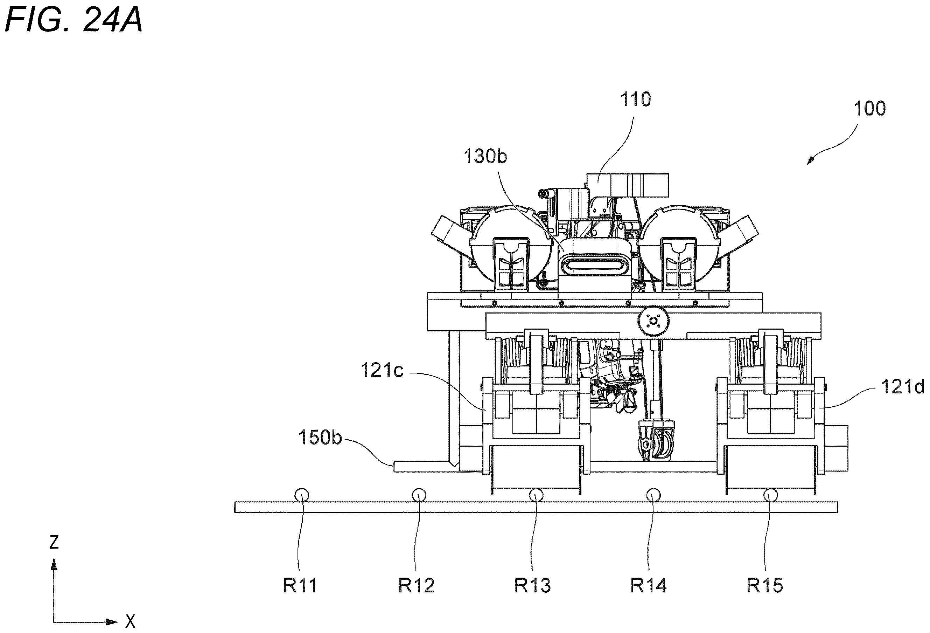

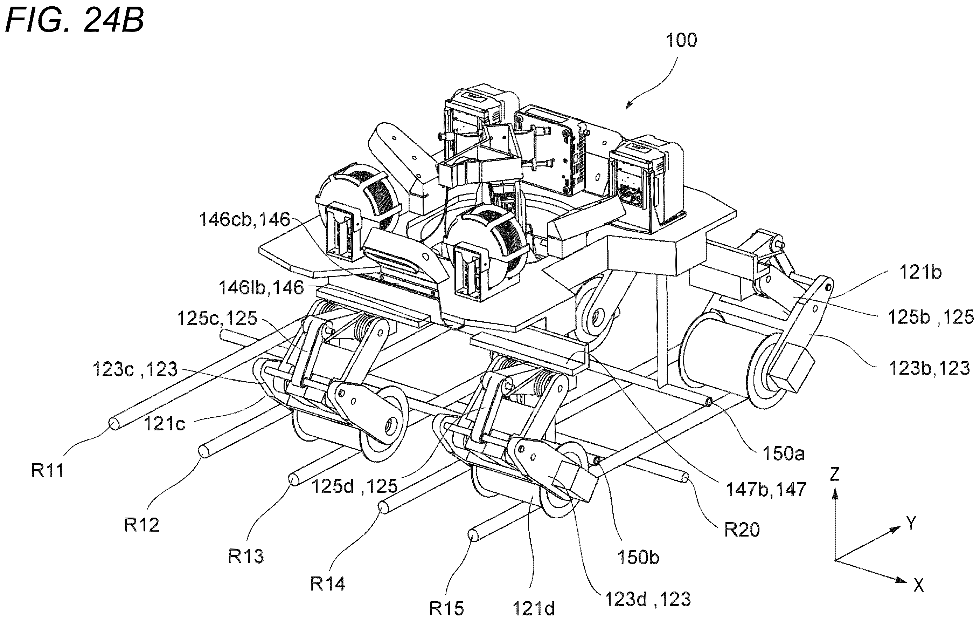

As illustrated in FIGS. 24A and 24B, the lower end of the traveling unit 121 in the -Z-direction is lowered downward in the Z-direction (-Z-direction) in FIGS. 24A and 24B. As illustrated in FIGS. 24A and 24B, the first traveling unit 121a and the third traveling unit 121c come into contact with the first rebar R13, and the second traveling unit 121b and the fourth traveling unit 121d come into contact with the first rebar R15. Therefore, the support bars 150a and 150b rise relative to the first rebar R10. Therefore, in this state, the rebar binding robot 100 is supported by the traveling unit 121.

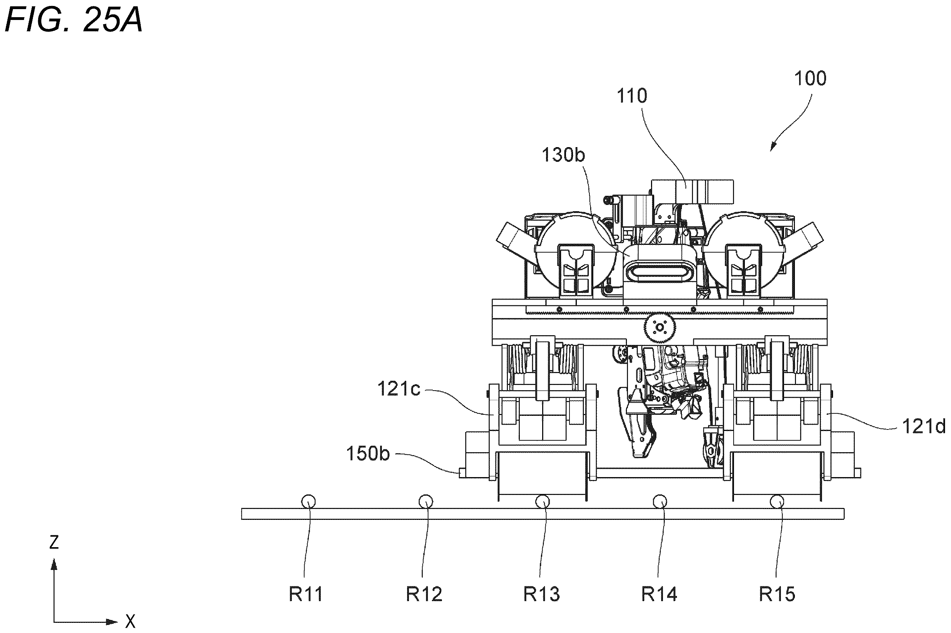

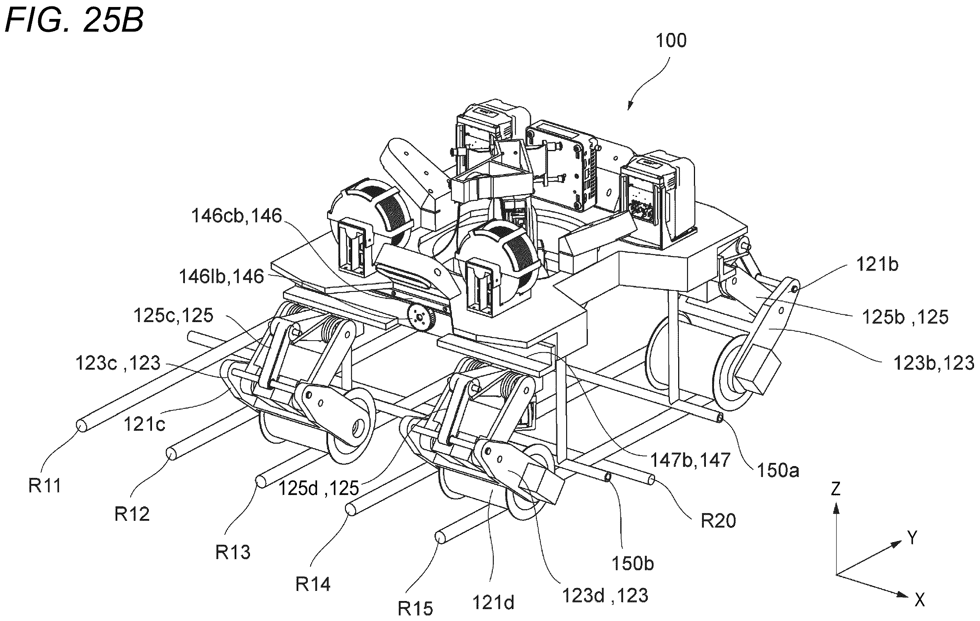

Next, as illustrated in FIGS. 25A and 25B, the main body unit 140 is moved in the X-direction. Similar to what is described above with reference to FIGS. 21A and 21B, the lateral movement (here, for example, movement in the horizontal direction (movement in the X-direction)) of the main body unit 140 illustrated in FIGS. 25A and 25B may be performed, for example, by the first lateral movement motor 146ma and the second lateral movement motor 146mb of the lateral movement unit 146 not illustrated in FIGS. 25A and 25B. In this manner, the lateral movement of the rebar binding robot 100 is completed. The rebar binding robot 100 starts traveling, for example, on the first rebar R13 and the first rebar R15, and performs binding work at the intersection point c12 of the first rebar R10 and the second rebar R20 on the first rebar R14.

The above describes an example in which the rebar binding robot 100 moves from the first rebars R12 and R14 to the first rebars R13 and R15, but it is also possible to move to a destination separated by a plurality of first rebars R10, for example. In this case, movement can be achieved in the same manner as above, or by repeating the above movement method, movement over a longer distance is possible. In addition, when moving to a destination separated by a plurality of first rebars R10, the amount of movement may be calculated based on the detection results of the sensor unit 130 using a similar method.

Furthermore, the rebar binding robot 100 may move laterally by other methods, not limited to the method described above, and in that case as well, it is possible to calculate the amount of movement of the rebar binding robot 100 based on the detection results of the sensor unit 130 in accordance with the movement amount calculation method in the embodiment of the present disclosure, and by using the movement amount calculation method in the embodiment of the present disclosure, it is possible to smoothly move the rebar binding robot 100.

As described above, the rebar binding robot 100 according to the embodiment of the present disclosure includes the traveling unit 121 configured to travel on the rebar group R including a plurality of first rebars R1 of which the extension direction is the first direction (Y-direction) and a plurality of second rebars R2 of which the extension direction is the second direction (X-direction) that intersects the first direction (Y-direction) and that are arranged so as to intersect the first rebars R1, the sensor unit 130 configured to detect at least one first rebar R10 and/or at least one second rebar R20, and the first rebar determination section 164a1 and/or the second rebar determination section 164a2 (also referred to as a "rebar position calculation unit" in the present embodiment) configured to calculate the position of the at least one first rebar R10 and/or at least one second rebar R20 detected by the sensor unit 130 based on the pixel values of a plurality of pixels that form a two-dimensional image generated by the detection result of the sensor unit 130. The rebar binding robot 100 according to the embodiment of the present disclosure can streamline the process of calculating the positions of the first rebar R10 and/or the second rebar R20 by calculating the positions of the first rebar R10 and/or the second rebar R20 based on a two-dimensional image generated by the detection results of the sensor unit 130. Therefore, the efficiency of the rebar detection process in the rebar blood complexion work of the rebar binding robot 100 can be improved. For example, by performing calculations based on two-dimensional images as detection results of the sensor units, a calculation load can be reduced compared to when calculating the position of the rebar using three-dimensional data.

Improvements in the technical level of the various units that make up the rebar binding robot 100 have made it possible to perform rebar binding work faster and more efficiently. In order to speed up rebar binding work, it is desirable to speed up the process of detecting rebars and their intersection points where the rebars are bound together. The rebar binding robot 100 according to the embodiment of the present disclosure can improve the efficiency of the rebar detection process, thereby contributing to speeding up rebar binding work.

In addition, the rebar binding robot 100 according to the embodiment of the present disclosure includes, for example, includes the rebar binding unit 110 configured to bind the intersection points c12 between the first rebars R10 and the second rebars R20 of the rebar group including the plurality of first rebars R10 of which the extension direction is the first direction (Y-direction) and the plurality of second rebars R20 of which the extension direction is the second direction (X-direction) intersecting the first direction (Y-direction) and arranged so as to intersect the first rebars R10, the traveling unit 121 configured to be able to travel on the first rebar R10 and/or the second rebar R20, the first sensor 130a and the second sensor 130b configured to detect at least one first rebar R10 and/or at least one second rebar R20 and arranged at a distance from each other along the third direction (Y-direction), and the third sensor 130c and the fourth sensor 130d configured to detect at least one first rebar R10 and/or at least one second rebar R20 and arranged at a distance from each other along the fourth direction (X-direction) that intersects with the third direction (Y-direction). As described above, the rebar binding robot 100 is equipped with four sensors 130 (first sensor 130a, second sensor 130b, third sensor 130c, and fourth sensor 130d), and therefore can efficiently detect, for example, the intersection point c12 of the first rebar R10 and the second rebar R20, as described above. The position of the intersection point c12 can be confirmed, for example, by installing a sensor in a vicinity of the rebar binding unit 110, but since the rebar binding unit 110 is configured to move up and down, it may be difficult to install a sensor in the vicinity. In the embodiment of the present disclosure, the position of the intersection point c12 can be estimated based on the detection results of the four sensors 130, even when no sensor is installed in a vicinity of the rebar binding unit 110.

In addition, the rebar binding robot 100 according to the embodiment of the present disclosure includes, for example, includes the rebar binding unit 110 configured to bind the intersection points c12 between the first rebars R10 and the second rebars R20 of the rebar group including the plurality of first rebars R10 of which the extension direction is the first direction (Y-direction) and the plurality of second rebars R20 of which the extension direction is the second direction (X-direction) that intersects the first direction (Y-direction), the traveling unit 121 configured to be able to travel on the first rebar R10 and/or the second rebar R20, the sensor unit 130 configured to detect the first rebar R10 and/or the second rebar R20, and the movement amount calculation section 174 that calculates the movement amount of the traveling unit 121 based on the position information of the first rebar R10 or the second rebar R20 detected by the sensor unit 130 when the traveling unit 121 moves from the first rebar R10 or the second rebar R20 along which the traveling unit 121 is traveling to another first rebar R10 or another second rebar R20. As described above, the rebar binding robot 100 according to the embodiment of the present disclosure can, for example, determine the position of the rebar to which the rebar binding robot 100 is to move based on the detection results of the sensor unit 130, and calculate the amount of movement of the rebar binding robot 100 based on the position of the rebar along which the traveling unit 121 of the rebar binding robot 100 is traveling and the position of the rebar to which the rebar binding robot 100 is to move. For example, when the rebar binding robot 100 reaches the end of the rebar on which rebar binding work is performed, and then moves to the next rebar on which the rebar binding robot 100 will perform rebar binding work, the amount of movement can be calculated based on the detection results by the sensor unit 130.

In the embodiment of the present disclosure described above, an example is described in which the rebar binding robot 100 performs rebar binding work at the intersection point c12 of the first rebar R10 and the second rebar R20 in the rebar group arranged so that the first rebar R10 and the second rebar R20 are perpendicular to each other, but the rebar binding robot 100 according to the embodiment of the present disclosure may also be used in cases in which the first rebar R10 and the second rebar R20 are in a non-perpendicular relationship.

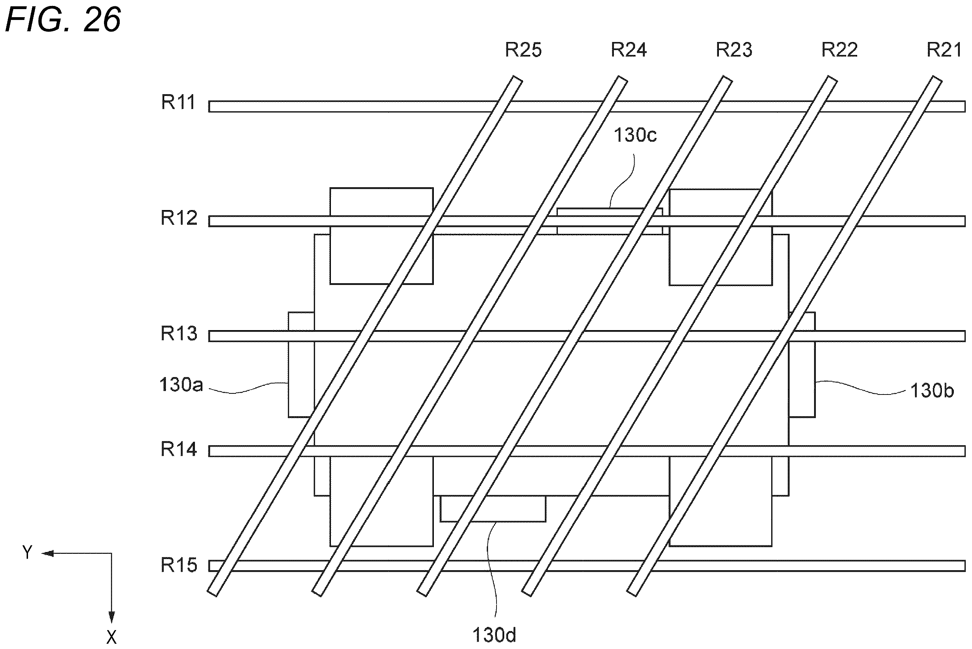

FIG. 26 is a schematic diagram of a rebar binding robot 200 according to another embodiment of the present disclosure, as viewed from below in the Z-direction (-Z-direction). As illustrated in FIG. 26, in the present embodiment, the second rebar R20 is arranged at an angle of approximately 30° relative to the first rebar R10. The rebar binding robot 200 according to the present embodiment differs from the rebar binding robot 100 in the positions of the third sensor 130c and the fourth sensor 130d. The third sensor 130c and the fourth sensor 130d of the rebar binding robot 200 are disposed on a straight line that is inclined at 30° with respect to the X-direction. In the rebar binding robot 200, the third sensor 130c and the fourth sensor 130d are aligned with the second rebar R20 and positioned in a direction inclined from the X-direction, making it possible to detect the second rebar R20 in a similar manner to the rebar binding robot 100.

In this way, the arrangement of the first sensor 130a to the fourth sensor 130d may be changed depending on the arrangement configuration of the first rebar R10 and the second rebar R20. The arrangement of the first sensor 130a, the second sensor 130b, the third sensor 130c, and/or the fourth sensor 130d may be changed manually or automatically before starting the rebar binding work, for example, depending on the construction site where the rebar group R to be the subject of the binding work is located. Alternatively, even after the rebar binding robot 100 has started traveling, the relationship between the first rebar R10 and the second rebar R20 may be determined based on the detection results of the sensor unit 130, and the arrangement of the first sensor 130a, the second sensor 130b, the third sensor 130c, and/or the fourth sensor 130d may be dynamically changed based on the determination results. In this case, for example, a motor or the like capable of driving the first sensor 130a to the fourth sensor 130d may be provided, and the positions of the first sensor 130a to the fourth sensor 130d may be changed by driving the motor.

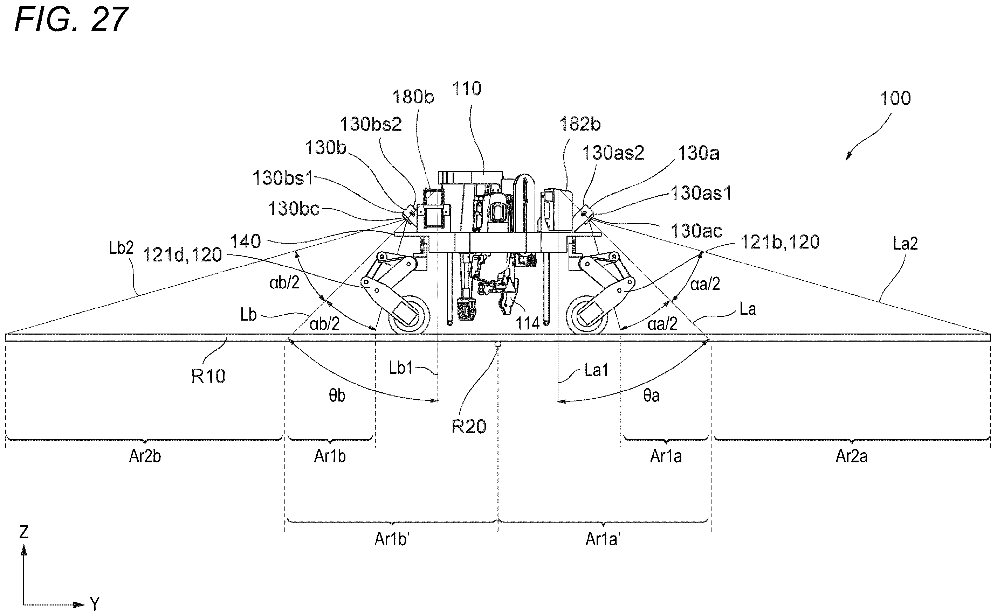

Hereinafter, with reference to FIGS. 27 to 31B, the configuration of the sensor unit 130 (also referred to as the "detection unit" in the present embodiment) of the binding device 100 according to the embodiment of the present disclosure will be described.

In the binding device 100 according to the present embodiment, the sensor unit 130 (detection unit 130) is configured to detect an advancing direction of the moving unit 120. In addition, the binding device 100 according to the present embodiment detects obstacles on the rebars R10 and/or R20.

That is, the binding device 100 according to the present embodiment includes the rebar binding unit 110, the moving unit 120, and a detection unit 130. The moving unit 120 is configured to be capable of moving on a plurality of rebars R10 and R20 arranged to cross each other. The rebar binding unit 110 is configured to be capable of binding the plurality of rebars R10 and R20. The detection unit 130 has sensors (first sensor 130a, second sensor 130b, third sensor 130c, and/or fourth sensor 130d) of which a detection range is an area including both a first rebar area (for example, an area indicated by Ar1a or an area indicated Ar1a' in FIG. 27 described below) including the rebars R10 and/or R20 located in the vicinity of the moving unit 120 or the rebar binding unit 110, and a second rebar area (for example, an area indicated by Ar2a in FIG. 27 described below) including the rebars R10 and/or R20 located forward of the first rebar area in a movement direction of the moving unit 120. The detection unit 130 is also configured to detect obstacles on the rebars R10 and/or R20.

In the present embodiment, the first rebar area is an area including a rebar located in a vicinity of the moving unit 120 or the rebar binding unit 110. The first rebar area may be, for example, an area indicated by Ar1a in FIG. 27, as described below. The first rebar area Ar1a in this case is, for example, an area closer to the second traveling unit 121b of the two areas into which a detection area is divided, which corresponds to the half angle of view αa/2 of the first sensor 130a in FIG. 27 (that is, when viewed from the +X-direction). In this case, the first rebar area Ar1a includes the rebars (first rebar R10 and/or second rebar R20) located in the vicinity of the moving unit 120 (first traveling unit 121b).

In addition, in the present embodiment, the first rebar area may include rebars (first rebar R10 and/or second rebar R20) located in the vicinity of the rebar binding unit 110. For example, in FIG. 27, it may be an area indicated by Ar1a' including an area corresponding to the half angle of view αa/2 of the first sensor 130a from a vicinity of the center of the rebar binding unit 110 in the Y-direction. In this case, the first rebar area Ar1a' is an area along the first rebar R10, which is a rebar extending in the Y-direction, between the second rebar R20 and a straight line (straight line La described below) perpendicular to a first surface 130as1, as illustrated in FIG. 27.

Furthermore, the second rebar area may be, for example, an area indicated by Ar2a in FIG. 27, as described below. In this case, the second rebar area Ar2a is, between the two areas into which the detection area of the first sensor 130a is similarly divided, the area farther from the second traveling unit 121b than the other.

With the above-described configuration, the binding device 100 of the present embodiment has a detection range of the detection unit 130 that includes an area (first rebar area) containing rebars located in the vicinity of the moving unit 120 or the rebar binding unit 110, and an area (second rebar area) containing rebars located forward of the first rebar area in the movement direction of the moving unit 120, so that the detection unit 130 detects the rebar (for example, the first rebar R10) over which the moving unit 120 is traveling, and also detects obstacles in the first rebar area and/or the second rebar area. Therefore, for example, costs can be reduced compared to a binding device that is provided with a sensor for detecting obstacles in addition to a sensor for detecting rebars. Furthermore, the number of components such as sensors can be reduced. Alternatively, or in addition, power consumption may be reduced. In addition, it may also be possible to reduce the weight of the entire device. In this way, in the present embodiment, without installing any additional sensors, it is possible to, for example, detect the first rebar R10 and/or the second rebar R20 on which the binding device 100 travels, detect the end R10e of the first rebar R10 and/or the end R20e of the second rebar R20, and/or estimate the intersection point c12 between the first rebar R10 and the second rebar R20 based on the detection results of the position of the first rebar R10 and the position of the second rebar R20, as well as detect obstacles on a rebar surface defined by the first rebar R10, the second rebar R20, or the first rebar R10 and the second rebar R20.

In addition, the binding device 100 of the present embodiment has the main body 140, and the moving unit 120 includes the traveling unit 121 that is configured to enable the main body 140 to travel on a plurality of rebars (first rebars R10 and second rebars R20), the detection unit 130 is arranged at a front end of the main body 140 in the movement direction, and the second rebar area included in the detection range of the detection unit 130 is obliquely below the movement direction of the main body 140. The binding device 100 according to the present embodiment is not limited to this configuration, and may also be applied to, for example, a robot arm type binding device described below.

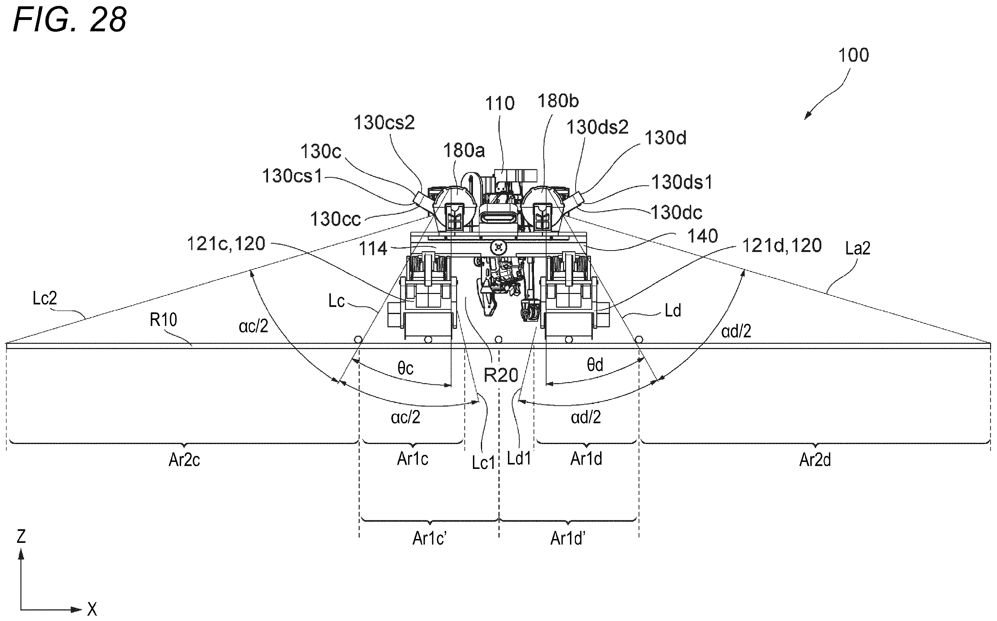

First, the configuration of the sensor unit 130 will be described using a self-propelled rebar binding robot as an example of the binding device 100 according to the present embodiment. FIG. 27 is a view of the self-propelled rebar binding robot 100 (binding device) from the +X-direction to illustrate the sensor unit 130 of the present embodiment, and FIG. 28 is a view of the self-propelled rebar binding robot 100 (binding device) from the - Y-direction.

Detection ranges of the first sensor 130a and the second sensor 130b will be described with reference to FIG. 27. FIG. 27 illustrates an angle θa at which the first sensor 130a is disposed. As illustrated in FIG. 27, the first sensor 130a has the first surface 130as1 on which an imaging portion 130ac is provided, and a second surface 130as2 which is a surface opposite to the first surface 130as1. The first surface 130as1 is a principal surface of the first sensor 130a in the -Z-direction, and the second surface 130as2 is a principal surface of the first sensor 130a in the +Z-direction. The arrangement angle θa of the first sensor 130a is an angle at which the first sensor 130a is arranged with respect to an up-down direction (Z-direction). That is, the arrangement angle θa corresponds to an angle of a straight line (straight line La illustrated in FIG. 27) that is perpendicular to the first surface 130as1 with respect to the Z-axis.

The first sensor 130a is, for example, a camera, and FIG. 27 also illustrates an angle of view αa of the first sensor 130a. In FIG. 27, instead of the angle of view αa, the half angle of view αa/2 of the first sensor 130a is illustrated. In FIG. 27, an imaging range of the first sensor 130a is illustrated divided in two by the straight line (straight line La) perpendicular to the first surface 130as1 in FIG. 27, and the angles of the divided imaging ranges (area Ar1a and area Ar2a in FIG. 27) each correspond to a half angle of view αa/2.

In the present embodiment, the first sensor 130a is disposed so that θa is, for example, 45°. The half angle of view αa/2 of the first sensor 130a is 29°. Therefore, as illustrated diagrammatically in FIG. 27, in the present embodiment, the advancing direction of the binding device 100 is the +Y-direction, and the imaging range, which is the detection range of the first sensor 130a, is obliquely downward facing forward (obliquely downward in the -Z-direction and the +Y-direction). More specifically, the detection range of the first sensor 130a is configured to include an area including rebars (first rebar R10 and/or second rebar R20) located below (-Z-direction) the first sensor 130a, and also an area including rebars (first rebar R10 and/or second rebar R20, or parts of the first rebar R10 and/or second rebar R20) located in front of the advancing direction (movement direction) of the first traveling unit 121a and second traveling unit 121b, each of which is the moving unit 120.

Specifically, the detection range of the first sensor 130a is approximately in a range from a straight line (a straight line La1 inclined in the -Z-direction and the +Y-direction in FIG. 27) inclined at θa - αa/2 = 16° with respect to an axis extending in the Z-direction in FIG. 27 to a straight line (a straight line La2 illustrated in FIG. 27) inclined at θa + αa/2 = 61°. In addition, the detection range of the first sensor 130a includes the rebars (the first rebar R10 and/or the second rebar R20, or a part of the first rebar R10 and/or the second rebar R20) that are located in a range from the straight line La1 that is inclined at 16° to a straight line La2 that is inclined at 61° with respect to the axis extending in the Z-direction in FIG. 27.

Similarly, FIG. 27 also illustrates an angle θb at which the second sensor 130b is disposed and a detection range (imaging range) of the second sensor 130b. First, the second sensor 130b has a first surface 130bs1 which is a surface on which an imaging portion 130bc is provided, and a second surface 130bs2 which is a surface opposite to the first surface 130bs1. The arrangement angle θb of the second sensor 130b is an angle relative to the up-down direction (Z-direction) at which the second sensor 130b is arranged, and the arrangement angle θb corresponds to an angle of a straight line Lb perpendicular to the first surface 130bs1 relative to the Z-axis.

The second sensor 130b is also, for example, a camera, and with regard to an angle of view αb, as illustrated in FIG. 27, the imaging range of the second sensor 130b is illustrated divided in two by the straight line Lb perpendicular to the first surface 130bs1 in FIG. 27, and angles of the divided imaging ranges (areas Ar1b and Ar2b in FIG. 27) each correspond to a half angle of view αb/2.

In the present embodiment, the second sensor 130b is disposed so that, for example, θb is 45°, and the half angle of view αb/2 of the first sensor 130a is 29°. Therefore, as illustrated diagrammatically in FIG. 27, in the present embodiment, the advancing direction of the binding device 100 is the +Y-direction, and the imaging range, which is a detection range of the second sensor 130b, is obliquely downward backward (obliquely downward in the -Z and -Y-directions). Specifically, the detection range of the second sensor 130b is configured to include an area including a rebar located below (-Z-direction) the second sensor 130b, and further an area including a rebar located behind the advancing direction (movement direction) of the first traveling unit 121b, which is the moving unit 120.

More specifically, the detection range of the second sensor 130b is, in FIG. 27, approximately a range from a straight line (straight line Lb1 inclined in the -Z-direction and the -Y-direction) inclined at θb - αb/2 = 16° with respect to the axis extending in the Z-direction to a straight line (straight line Lb2) inclined at θb + αb/2 = 61°. In addition, the detection range of the second sensor 130b includes the rebars (the first rebar R10 and/or the second rebar R20, or a part of the first rebar R10 and/or the second rebar R20) that are located in a range from the straight line Lb1 that is inclined at 16° to the straight line Lb2 that is inclined at 61° with respect to the axis extending in the Z-direction in FIG. 27.

Next, detection ranges of the third sensor 130c and the fourth sensor 130d will be described with reference to FIG. 28. FIG. 28 illustrates an angle θc at which the third sensor 130c is disposed and an angle θd at which the fourth sensor 130d is disposed.

As illustrated in FIG. 28, the third sensor 130c has a first surface 130cs1 on which an imaging portion 130cc is provided, and a second surface 130cs2 which is a surface opposite to the first surface 130cs1. An arrangement angle θc of the third sensor 130c is the angle with respect to the Z-direction at which the third sensor 130c is arranged, and the arrangement angle θc corresponds to the angle of a straight line Lc that is perpendicular to the first surface 130cs1 with respect to the Z-axis. Similarly, the fourth sensor 130d has a first surface 130ds1 on which an imaging portion 130dc is provided, and a second surface 130ds2 which is a surface opposite to the first surface 130ds1, and an arrangement angle θd of the fourth sensor 130d corresponds to an angle of a straight line Ld perpendicular to the first surface 130ds1 with respect to the Z-axis. FIG. 28 also illustrates half angles of view αc/2 and αd/2 of the imaging ranges of the third sensor 130c and the fourth sensor 130d.

In the present embodiment, the third sensor 130c is disposed so that θc is, for example, 30°. The third sensor 130c has a half angle of view αc/2 of 43.5°. Moreover, the fourth sensor 130d is disposed so that, for example, θd is 30°, and the half angle of view αd/2 of the fourth sensor 130d is 43.5°. Also in FIG. 28, each of the angle of view αc of the third sensor 130c and the angle of view αd of the fourth sensor 130d is illustrated as two divided imaging ranges, which are indicated as areas Ar1c and Ar2c, and areas Ar1d and Ar2d.

In the present embodiment, the advancing direction of the binding device 100 is the +Y-direction, and as illustrated diagrammatically in FIG. 28, an imaging range, which is a detection range of the third sensor 130c, is obliquely downward to the right (obliquely downward in the -Z-direction and the +X-direction) when viewed in the advancing direction, and an imaging range, which is a detection range of the fourth sensor 130d, is obliquely downward to the left (obliquely downward in the -Z-direction and the -X-direction) when viewed in the advancing direction.

In addition, the detection range of the third sensor 130c is configured to include an area including rebars (first rebar R10 and/or second rebar R20) located below (-Z-direction) the third sensor 130c, and also an area including rebars (first rebar R10 and/or second rebar R20, or part of the first rebar R10 and/or second rebar R20) located in a direction (right direction (+X-direction)) perpendicular to the advancing direction (movement direction) of the second traveling unit 121b and the fourth traveling unit 121d, each of which is the moving unit 120.

In addition, the detection range of the fourth sensor 130d is configured to include an area including rebars (first rebar R10 and/or second rebar R20) located below (-Z-direction) the fourth sensor 130d, and also an area including rebars (first rebar R10 and/or second rebar R20, or part of the first rebar R10 and/or second rebar R20) located in a direction (left direction (-X-direction)) perpendicular to the advancing direction (movement direction) of the first traveling unit 121a and the third traveling unit 121c, each of which is the moving unit 120.

Specifically, the detection range of the third sensor 130c is, in FIG. 28, approximately in a range from a straight line (that is, straight line Lc1 inclined by 13.5° in the -Z-direction and the +X-direction) inclined by θc - αc/2 = -13.5° with respect to the axis extending in the Z-direction to a straight line (straight line Lc2 inclined by 73.5° in the -Z-direction and the -X-direction) inclined by θc + αc/2 = 73.5°. In addition, the detection range of the third sensor 130c substantially includes the rebars (the first rebar R10 and/or the second rebar R20, or a part of the first rebar R10 and/or the second rebar R20) that are located in the range from the straight line Lc1 that is inclined at 13.5° to the straight line Lc2 that is inclined at 73.5° with respect to the axis extending in the Z-direction in FIG. 28.

Similarly, the detection range of the fourth sensor 130d is, in FIG. 28, approximately in the range from the straight line (that is, the straight line Ld1 inclined at 13.5° in the -Z-direction and in the -X-direction) inclined at θd - αd/2 = -13.5° to the straight line (the straight line Ld2 inclined at 73.5° in the -Z-direction and in the +X-direction) inclined at θd + αd/2 = 73.5° with respect to the axis extending in the Z-direction. In addition, the detection range of the fourth sensor 130d includes rebars (the first rebar R10 and/or the second rebar R20, or a part of the first rebar R10 and/or the second rebar R20) that are located in the range from the straight line Ld1 that is inclined at 13.5° to the straight line Ld2 that is inclined at 73.5° with respect to the axis extending in the Z-direction in FIG. 28.

In the binding device 100 of the present embodiment, the sensors (first sensor 130a, second sensor 130b, third sensor 130c, and/or fourth sensor 130d) of the detection unit 130 have a detection range that includes both a first rebar area including rebars (first rebar R10 and/or second rebar R20) located in the vicinity of the moving unit 120 or the rebar binding unit 110, and a second rebar area including rebars R10 and/or R20 located forward of the first rebar area in the movement direction of the moving unit 120.

In the present embodiment, the rebar located in the vicinity of the moving unit 120 or the rebar binding unit 110 may be, for example, a rebar (first rebar R10 and/or second rebar R20) located below (in the -Z-direction) the moving unit 120 or the rebar binding unit 110. In addition, the rebars located in the vicinity of the moving unit 120 or the rebar binding unit 110 may include, for example, rebars (first rebar R10 and/or second rebar R20) located below (in the -Z-direction) the moving unit 120 or the rebar binding unit 110, and rebars located around those rebars.

Thus, in the present embodiment, the vicinity may be used as an expression for identifying a certain portion (one or more of the plurality of rebars, or a part of each of the one or more of the plurality of rebars) of rebars (a plurality of intersecting rebars) that are positioned opposite the binding device 100 of the present embodiment and are to be bound by the binding device 100. As described above, among the rebar group including the plurality of first rebars R10 and second rebars R20 that the binding device 100 faces, for example, one or more rebars located opposite the moving unit 120 or the rebar binding unit 110, or a part of these rebars located opposite the moving unit 120 or the rebar binding unit 110, may be rebars located in the vicinity of the moving unit 120 or the rebar binding unit 110.

In addition to the one or more rebars located opposite the moving unit 120 or the rebar binding unit 110 as exemplified here, or a part of these rebars located opposite the moving unit 120 or the rebar binding unit 110, the rebars may also include one or more rebars located around these rebars, or a part of the rebars in the vicinity, and may be rebars located in the vicinity of the moving unit 120 or the rebar binding unit 110. For example, the rebars may be rebars located in a vicinity of the moving unit 120 or the rebar binding unit 110, including one or more (for example, two or three) rebars adjacent in the X and/or Y-directions to one or more rebars located (in the -Z-direction) opposite the moving unit 120 or the rebar binding unit 110 illustrated here.

In the binding device 100 of the present embodiment, the first rebar area may, for example, be an area including the first rebar R10 and/or the second rebar R20 located in the vicinity of the traveling unit 121, which is the moving unit 120, or, for example, in FIG. 27, it may be an area including the first rebar R10 and/or the second rebar R20 located below (-Z-direction) the second traveling unit 121b. In this case, the sensor unit 130 may, for example, detect a rebar (for example, the first rebar R10) over which the traveling unit 121 is traveling, and the traveling of the traveling unit 121 may be controlled by the control unit 160. Alternatively, based on the detection results of the sensor unit 130 (for example, the first sensor 130a) and the detection results of other sensors (the second sensor 130b, the third sensor 130c, and/or the fourth sensor 130d), the intersection point c12 between the first rebar R10 and the second rebar R20, which is the target for which the rebar binding unit 110 performs the binding operation, may be calculated by the intersection point calculation section 166 of the control unit 160.

Furthermore, the first rebar area may, for example, be an area including the first rebar R10 and/or the second rebar R20 located in the vicinity of the rebar binding unit 110, or, for example, in FIG. 27, it may be an area including the first rebar R10 and/or the second rebar R20 located below (-Z-direction) the rebar binding unit 110. In this case, for example, based on the detection result of the detection unit 130, the intersection point c12 at which the binding operation of the rebar binding unit 110 is to be performed may be identified, and the binding operation may be performed for the identified intersection point c12.

Alternatively, the first rebar area may include rebars R10 and/or R20 located in a vicinity of the moving unit 120 and rebars R10 and/or R20 located in a vicinity of the rebar binding unit 110. In this case, for example, based on the detection results by the detection unit 130, the rebar R along which the traveling unit 121 is traveling may be detected, and the intersection point c12 where the rebar binding unit 110 performs the binding operation may be identified.

In addition, in the binding device 100 of the present embodiment, the second rebar area includes rebars R10 and/or R20 that are located forward of the first rebar area in the movement direction of the moving unit 120, and may be, for example, in FIG. 27, the area in the +Y-direction of the second traveling unit 121b. The second rebar area may be, for example, an area including the first rebar R10 and/or the second rebar R20 located in the +Y-direction from a +Y-direction end (+Y-direction end of the second roller side link portion 123a (FIG. 2)) of the second traveling unit 121b.

In the present embodiment, the second rebar area is located in front of the binding device 100 in the advancing direction, so by including the second rebar area as a detection range, it is possible to detect, for example, obstacles present in the second rebar area. Therefore, since an obstacle ahead in the advancing direction can be detected, the obstacle can be detected in advance before advancing, and, for example, the obstacle can be bypassed. In other words, based on the detection result of the detection unit 130 in the present embodiment, the obstacle determination section 164d of the control unit 160 determines the position of the obstacle or foreign object, and based on the determination result of the position of the foreign object, the foreign object bypass control section 179 drives the first wheel drive motor 124a, the second wheel drive motor 124b, the third wheel drive motor 124c, and/or the fourth wheel drive motor 124d to bypass the foreign object.

As described above, for example, referring to FIG. 27, between two areas of the detection area divided into two, the area (the area indicated by Ar1a in FIG. 27) which corresponds to the half angle of view αa/2 of the first sensor 130a, and is closer to the second traveling unit 121b may be set as the first rebar area. Alternatively, of the two areas into which the detection area is divided, the area (the area indicated by Ar2a in FIG. 27) farther from the second traveling unit 121b may be set as the second rebar area. As described above, the first rebar area Ar1a in this case is, for example, in FIG. 27, between the two areas into which the detection area is divided, the area which corresponds to the half angle of view αa/2 of the first sensor 130a, and is closer to the second traveling unit 121b, and the first rebar area Ar1a in this case includes the rebars (first rebar R10 and/or second rebar R20) located in the vicinity of the moving unit 120 (first traveling unit 121b).

Alternatively, in the present embodiment, the first rebar area may include rebars (first rebar R10 and/or second rebar R20) located in the vicinity of the rebar binding unit 110, as described above, and may be, for example, the area indicated by Ar1a' in FIG. 27 including the area corresponding to the half angle of view αa/2 of the first sensor 130a from a vicinity of the center of the rebar binding unit 110 in the Y-direction. In this case, the first rebar area Ar1a' is an area along the first rebar R10 between the second rebar R20 and a straight line (straight line La described below) perpendicular to the first surface 130as1.

Furthermore, as described above, the second rebar area may be, for example, the area indicated by Ar2a in FIG. 27, and in this case, the second rebar area Ar2a is, between the two areas obtained by dividing the detection area of the first sensor 130a into two by a half angle of view αa/2, the area indicated by area Ar2a that is farther from the second traveling unit 121b.

As the first rebar area and the second rebar area, Ar1a (or Ar1a') and Ar2a are examples, and are not limited thereto, and may be defined as other areas. For example, the first rebar area may be an area including the first rebar R10 along which the traveling unit 121 travels and the first rebars R10 that exist between the traveling first rebars R10. The first rebar area may be an area including the first rebar R12 along which the first traveling unit 121a and the third traveling unit 121c travel, the first rebar R14 along which the second traveling unit 121b and the fourth traveling unit 121d travel, and the first rebar R13 located between the first rebar R12 and the first rebar R14 (see, for example, FIG. 5 for the first rebars R12, R13, and R14).

In addition, the first rebar area may be defined as an area including the first rebars R10 along which the traveling unit 121 travels and a predetermined number of first rebars R10 located in the -X-direction and/or +X-direction of these first rebars R10. For example, the first rebar area may be an area including the first rebars R12, R13, and R14, and one first rebar R11 and one first rebar R15 that are located in the -X-direction and +X-direction of R12 and R14, respectively. In this case, the first rebar area may be defined in the Y-direction, for example, to be the area from below the first traveling unit 121a and the third traveling unit 121c to below the second traveling unit 121b and the fourth traveling unit 121d.

Alternatively, the first rebar area may be defined as the area from one or more second rebars R20 located in the +Y-direction below the first traveling unit 121a and the third traveling unit 121c to one or more second rebars R20 located in the +Y-direction below the second traveling unit 121b and the fourth traveling unit 121d. On the other hand, the second rebar area may be defined as the outside of the first rebar area. For example, it may be defined as the area adjacent to the first rebar area in the +Y-direction and extending to a +Y end (intersection of the first rebar R10 and the straight line La2 illustrated in FIG. 27) of the detection range by the first detection unit 130.

Furthermore, as described above, the first rebar area may be an area in which the detection results of the first rebar R10 and/or the second rebar R20 included in the first rebar area are used to control the movement of the traveling unit 121, or an area used to calculate the position of the intersection point c12, while the second rebar area may be an area used to determine obstacles or foreign objects that may be present on the first rebar R10 and/or the second rebar R20 included in the second rebar area in addition to the first rebar area, based on the detection results of the detection unit 130. In addition, since it is preferable to detect an obstacle relatively early, for example in order to control the binding device 100 to take a detour in advance, the binding device 100 may be configured to detect an obstacle while the obstacle is present in the second rebar area, which is ahead of the first rebar area in the advancing direction. In addition, when the obstacle is a moving object such as a worker, a work robot, an animal, or the like, the binding device 100 may advance without detecting the obstacle in the second rebar area, and the obstacle may be detected in the first rebar area. Therefore, in this case as well, the configuration may be such that obstacles can be detected in the first rebar area.

In addition, the first rebar area (the area indicated by Ar1a or Ar1a' in FIG. 27) may have a size in the X-direction that is, for example, at least equivalent to the size of the binding device 100 in the X-direction. In this case, the X-direction size of the first rebar area Ar1a or Ar1a' may be, for example, a size equivalent to a length from a - X-direction end of the traveling unit 121a to a +X-direction end of the traveling unit 121b. Alternatively, the size in the X-direction of the first rebar area Ar1a or Ar1a' may be a size equivalent to the length from a -X-direction end of the traveling unit 121c to a +X-direction end of the traveling unit 121d.

In the present embodiment, for example, as illustrated in FIG. 3 described above, the length from the -X-direction end of the traveling unit 121a to the +X-direction end of the traveling unit 121b is approximately the same as the length from the -X-direction end of the traveling unit 121c to the +X-direction end of the traveling unit 121d. When the length from the -X-direction end of the traveling unit 121a to the +X-direction end of the traveling unit 121b is different from the length from the -X-direction end of the traveling unit 121c to the +X-direction end of the traveling unit 121d, the X-direction size of the first rebar area Ar1a or Ar1a' may be equivalent to the longer of the length from the -X-direction end of the traveling unit 121a to the +X-direction end of the traveling unit 121b and the length from the -X-direction end of the traveling unit 121c to the +X-direction end of the traveling unit 121d. The X-direction size of the first rebar area Ar1a or Ar1a' may be set to a size that includes the traveling units (first traveling unit 121a and third traveling unit 121c) arranged in the -X-direction of the binding device 100 and the traveling units (second traveling unit 121b and fourth traveling unit 121d) arranged in the +X-direction, and the detection result of the detection unit 130 in this case may be used to control the traveling of the traveling units 121a, 121b, 121c, and 121d over the first rebars R10.

In addition, the X-direction size of the first rebar area Ar1a or Ar1a' may be a size that includes a part of the traveling unit 121 arranged in the -X-direction of the binding device 100 and a part of the traveling unit 121 arranged in the +X-direction. Alternatively, the X-direction size of the first rebar area Ar1a or Ar1a' may be a size that includes one of the traveling unit 121 arranged in the -X-direction of the binding device 100 and the traveling unit 121 arranged in the +X-direction.

In addition, the X-direction size of the first rebar area Ar1a or Ar1a' includes the traveling units 121 (first traveling unit 121a and third traveling unit 121c) arranged in the -X-direction of the binding device 100 and the traveling units (second traveling unit 121b and fourth traveling unit 121d) arranged in the +X-direction, and may also include the first rebar R10 located further in the -X-direction from the traveling units 121 arranged in the -X-direction, and may also include the first rebar R10 located further in the +X-direction from the traveling units 121 arranged in the +X-direction. Furthermore, the first rebar area Ar1a or Ar1a' may be, for example, an area including the first rebar R12 on which the traveling unit (third traveling unit 121c) arranged in the -X-direction travels, the first rebar R14 on which the traveling units (second traveling unit 121b and fourth traveling unit 121d) arranged in the +X-direction travel, and the first rebar R13 located between the first rebar R12 and the first rebar R14, as illustrated in FIG. 5 and the like, and further including the first rebar R11 located in the -X-direction of the first rebar R12, and/or the first rebar R15 located in the +X-direction of the first rebar R14.

In the present embodiment, for example, when the binding device 100 moves in the -Y-direction, the detection range of the detection unit 130 may be defined as the detection range of the second sensor 130b. For example, similarly to the first sensor 130a, an angle of view (viewing angle) αb of the second sensor 130b can be divided into two, and between the two divided areas of the detection range of the second sensor 130b, in FIG. 27, the area Ar1b closer to the second sensor 130b can be defined as the first rebar area, and the area Ar2b further forward in the advancing direction (more in the -Y-direction) than area Ar1b relative to the second sensor 130b can be defined as the second rebar area. Alternatively, the first rebar area may be the area Ar1b' between a vicinity of the center of the rebar binding unit 110 when viewed in the Y-direction and the straight line Lb in FIG. 27, and may be an area that includes the vicinity of the rebar binding unit 110.

Similarly, when the binding device 100 moves in the -X-direction, the detection range of the third sensor 130c may be defined as the detection range of the detection unit 130. For example, similar to the first sensor 130a and the second sensor 130b (FIG. 27), an angle of view (viewing angle) αc of the third sensor 130c may be divided into two, and between the two areas into which the detection range of the c-th sensor 130c is divided, in FIG. 28, the area Ar1c closer to the third sensor 130c may be defined as the first rebar area, and the area Ar2c further forward in the advancing direction (more in the -Y-direction) than the area Ar1c relative to the second sensor 130b may be defined as the second rebar area. Furthermore, when the binding device 100 moves in the +X-direction, the detection range of the fourth sensor 130d may be defined as the detection range of the detection unit 130. For example, similar to the third sensor 130c, an angle of view (viewing angle) αd of the fourth sensor 130d may be divided into two, and between the two areas into which the detection range of the fourth sensor 130d is divided, in FIG. 28, the area Ar1d closer to the fourth sensor 130d may be defined as the first rebar area, and the area Ar2d further forward in the advancing direction (more in the -Y-direction) than the area Ar1d relative to the second sensor 130b may be defined as the second rebar area.

Alternatively, similar to when moving in the +Y or -Y-direction, when moving in the -X-direction or -X-direction, the first rebar area may be an area Ar1c' or an Ar1d' illustrated in FIG. 28, which is an area that includes the vicinity (a vicinity of the center of the rebar binding unit 110 when viewed in the X-direction) of the rebar binding unit 110.

The third sensor 130c and/or the fourth sensor 130d may be configured to detect an obstacle present in the -X-direction and/or the +X-direction of the binding device 100, not limited to when the binding device 100 moves in the -X-direction and/or the +X-direction. With this configuration, it is possible to detect obstacles present around the binding device 100, not only in the +Y-direction which is the movement direction. By being able to detect surrounding obstacles, for example, when the obstacle is movable, it is possible to detect when the obstacle is no longer present (for example when the worker has moved away). When an obstacle is present, it is not possible to bind the intersection point c12 of the first rebar R10 and the second rebar R20 in a vicinity of the obstacle, so the binding device 100 is controlled to bypass the intersection point c12 in a vicinity of the obstacle and not perform the binding operation. However, when the binding device 100 is configured to detect that the obstacle is no longer present, the intersection point c12 can be included in a movement path (travel route) of the binding device 100 so that the binding operation is performed at the intersection point c12 after the obstacle has moved.

Furthermore, the binding device 100 according to the present embodiment may control the movement of the moving unit 120 based on the detection result of the detection unit 130. For example, as described above, in the case where the moving unit 120 includes the traveling unit 121, the controller 160 may control the traveling of the traveling unit 121 based on the detection result of the detection unit 130.

Furthermore, in the binding device 100 according to the present embodiment, the sensor (sensor 130a) of the detection unit 130 may include an image sensor, and the imaging sensor may be disposed so that the center of viewing angle of the imaging sensor is oriented forwards in the movement direction. That is, as illustrated in FIG. 27, a straight line (illustrated as the straight line La in FIG. 27) passing through the center of the viewing angle of the imaging portion 130ac (imaging sensor) of the first sensor 130a may be forward in the movement direction (+Y-direction).

The binding device 100 of the present embodiment may also be equipped with the moving unit 120, the rebar binding unit 110, the detection unit 130, and the control unit 160, and may be configured to control travel based on the detection results of the detection unit 130. The moving unit 120 is configured to be capable of moving on a plurality of rebars (first rebars R10 and second rebars R20) arranged to cross each other. The rebar binding unit 110 is configured to be capable of binding a plurality of rebars (first rebars R10 and second rebars R20). The detection unit 130 has sensors (first sensor 130a, second sensor 130b, third sensor 130c, and/or fourth sensor 130d) of which the detection range is an area including the first rebar area, which includes the rebars (first rebar R10 and/or second rebar R20) located in the vicinity of the rebar binding unit 110, and the sensor unit 130 is configured to be able to detect obstacles on the rebars (first rebar R10 and/or second rebar R20). The controller 160 is provided in the main body 140 and controls the movement of the moving unit 120 based on the detection result of the detection unit 130.

With this configuration, even when an obstacle is present on a reinforcing bar, the binding device 100 according to the present embodiment can be controlled to bypass the obstacle based on the detection results of the detection unit 130.

In the binding device 100 according to the present embodiment, the detection unit 130 may be configured to detect the advancing direction of the traveling unit 121 of the moving unit 120. That is, the binding device 100 of the present embodiment has the main body 140, and the moving unit 120 includes the traveling unit 121 configured to enable the main body 140 to travel on a plurality of rebars (first rebar R10 and second rebar R20), and the detection range of the sensors (first sensor 130a, second sensor 130b, third sensor 130c, and/or fourth sensor 130d) may include the second rebar area including the rebars (first rebar R10 and second rebar R20) located forward in the movement direction (+Y-direction) of the moving unit 120, and in this case, the detection unit 130 may be configured to detect obstacles in the first rebar area or the second rebar area.

Furthermore, in the binding device 100 of the present embodiment, the detection unit 130 is arranged at the end of the main body 140 forward in the movement direction (+Y-direction), and the second rebar area included in the detection range of the detection unit 130 may be an area including a rebar located obliquely downward (+Y-direction) in the movement direction of the main body 140. With this configuration, the binding device 100 of the present embodiment can detect the traveling rebar (first rebar R10 and/or second rebar R20) and also detect obstacles (obstacles present in the first rebar area and/or second rebar area) present ahead in the movement direction in advance, and can bypass the obstacles.

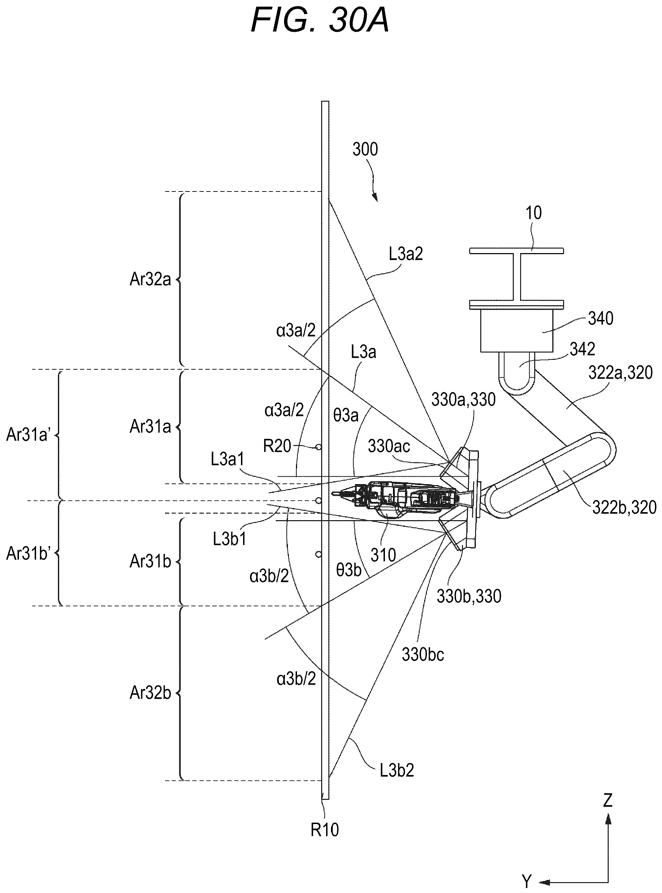

In the present embodiment, the obliquely downward in the movement direction of the main body 140 may be the obliquely downward direction in the +Y and -Z-directions in FIG. 30A. That is, in the present embodiment, the binding device 100 moves in the +Y-direction, which is a direction parallel to the rebar surface (plane in an XY-direction), and binds the first rebar R10 and the second rebar R20, which are located in the -Z-direction relative to the binding device 100, so the detection unit 330 has a detection range that is oriented in the Y-direction, which is the movement direction of the binding device 100, and obliquely downward, which is the -Z-direction in which the rebar R on which the binding operation is performed is located. For example, when the binding device 100 performs a binding operation on a rebar R that is arranged at an angle from a horizontal plane, the detection unit 130 is similarly configured to detect obliquely below the advancing direction (direction in which the rebar R is arranged) of the binding device 100.

In this way, the detection range of the detection unit 130 is changed appropriately depending on the arrangement of the rebar R on which the binding operation is performed, the direction in which the binding device 100 advances relative to the rebar R, the position of the rebar R relative to the binding device 100, and the like, but the detection unit 130 is configured so that its detection range is oriented in the movement direction of the binding device 100 and obliquely downward, which is the direction in which the rebar R is arranged. This makes it possible to suitably control the movement of the binding device 100 and control the bypass of obstacles based on the detection results from the detection unit 130.

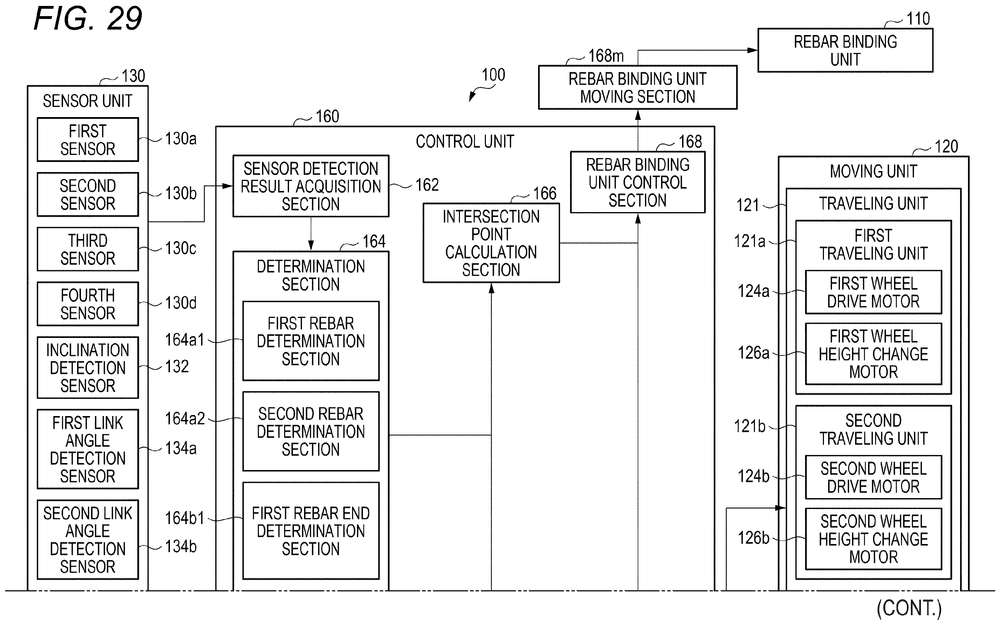

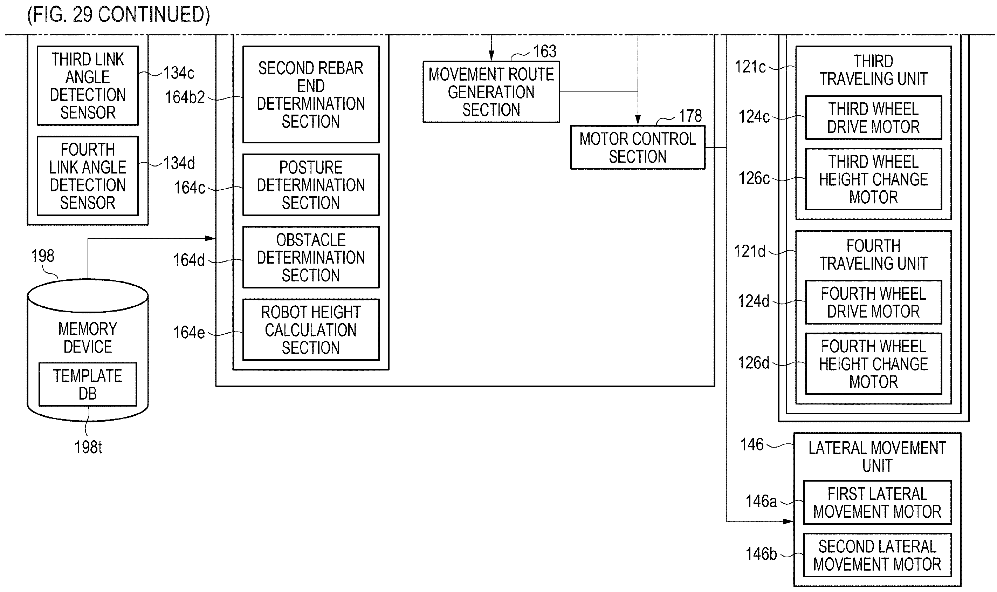

Furthermore, in the binding device 100 according to the present embodiment, the controller 160 may generate a movement route for the moving unit 120 based on the detection result of the detection unit 130. FIG. 29 illustrates a functional block configuration of the binding device 100 in this case. In addition, in FIG. 29, the description of the configuration that overlaps with the configuration described above with reference to FIG. 7 will be omitted as appropriate.

As illustrated in FIG. 29, in this case, the controller 160 differs from that of the binding device 100 described with reference to FIG. 7 in that it has a movement route generation section 163 instead of the rebar tracking control section 170, the stop control section 172, the movement amount calculation section 174, the posture control section 176, and the foreign object bypass control section 179. The movement route generation section 163 generates a movement route for the binding device 100, for example, based on the detection results of the detection unit 130, by causing the traveling unit 121 to travel so as to follow a rebar (for example, the first rebar R10), by stopping the traveling unit 121, for example, in a vicinity of the end R10e of the first rebar R10 and/or the end R20e of the second rebar R20, and/or by bypassing a foreign object such as an obstacle when a foreign object is present. For example, the moving unit 120 may be driven by the motor control section 178 based on the movement route generated by the movement route generation section 163, and the binding device 100 may be moved.

### (Modification Example)

Although the present embodiment is described above by taking the self-propelled rebar binding device 100 as an example of the binding device 100 according to the present embodiment, the binding device 100 according to the present embodiment is not limited thereto. For example, the present embodiment can also be applied to a robot arm type rebar binding device 300.

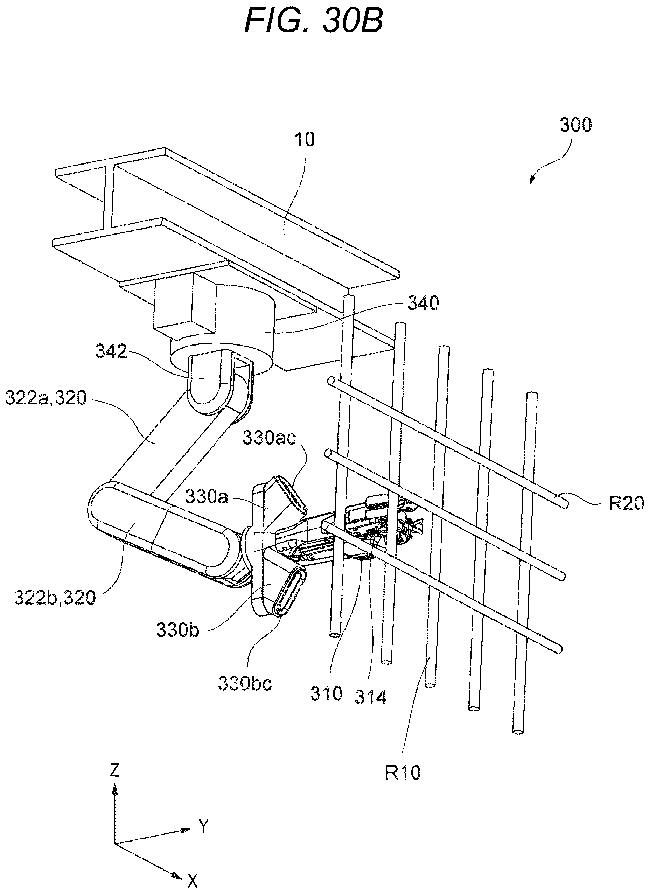

The binding device 300 according to the present embodiment will be described with reference to FIGS. 30A and 30B. FIG. 30A is a view of the binding device 300 according to the present embodiment as viewed from the -X-direction. FIG. 30B is a view of the binding device 300 as seen obliquely from the front (obliquely from the front in the +Y and +X-directions).

The binding device 300 illustrated in FIGS. 30A and 30B differs from the binding device 100 in that it is equipped with a robotic arm type moving unit 320 and is configured so that the rebar binding unit 310 is moved by the robotic arm type moving unit 320. That is, the binding device 300 of the present embodiment, like the binding device 100, is equipped with a rebar binding unit 310, the moving unit 320, and a detection unit 330, but the moving unit 320 of the binding device 300 includes a robot arm portion 322 (a first robot arm portion 322a and a second robot arm portion 322b).

As illustrated in FIG. 30A, the binding device 300 may further include, for example, a base portion 340. The binding device 300 may be arranged on a steel member 10 made of steel, such as an H-beam, via the base portion 340. The base portion 340 includes a robot arm support portion 342, and one end (an end of the first robot arm portion 322a) of the robot arm portion 322 is rotatably supported by the robot arm support portion 342. Therefore, one end (the end of the first robot arm portion 322a) of the robot arm portion 322 is connected to the base portion 340, and the rebar binding unit 310 is connected to the other end (an end of the second robot arm portion 322b) of the robot arm portion 322, so that the rebar binding unit 310 is configured to be movable relative to the base portion 340. The robot arm portion 322 has the first robot arm portion 322a and the second robot arm portion 322b that are connected so as to be rotatable relative to each other. The rebar binding unit 310 is provided at the end of the second robot arm portion 322b. The sensor unit 330 is provided at an end (an end opposite a connection portion between the first robot arm portion 322a and the second robot arm portion 322b) of the second robot arm portion 322b. The sensor unit 330 is disposed between the end of the second robot arm portion 322b and the rebar binding unit 310.

The sensor unit 330 includes a first sensor 330a and a second sensor 330b. In a state illustrated in FIG. 30A, the first sensor 330a is provided in the +Z-direction of the end of the second robot arm portion 322b, and in the state illustrated in FIG. 30A, the second sensor 330b is provided in the -Z-direction of the end of the second robot arm portion 322b. As illustrated in FIG. 30A, the first sensor 330a and the second sensor 330b respectively include imaging portions 330ac and 330bc that are oval in shape when viewed from the +Y-direction.

Referring to FIG. 30B, in a state illustrated in FIG. 30B, a rebar group formed by the first rebar R10 arranged along the Z-direction and the second rebar R20 arranged along the Y-direction is approximately upright in the Z-direction. The binding device 300 equipped with a robotic arm type moving body 320 can perform the binding operation of the intersection point c12 of the first rebar R10 and the second rebar R20, even in the rebar group that is upright, for example, along the Z-direction, as illustrated in FIG. 30B. In this case, similarly to the binding device 100, the rebar binding unit 310 may be moved by the moving unit 320 to perform the binding operation sequentially at a plurality of intersection points c12.

With reference to FIG. 30A, the viewing angle (angle of view) and the detection range of the first sensor 330a and the second sensor 330b of the sensor unit 330 of the binding device 300 will be described.

As illustrated in FIG. 30A, the first sensor 330a is positioned so that an angle between a straight line L3a perpendicular to the imaging portion 330ac and an axis extending in the Z-direction is θ3a, and the second sensor 330b is positioned so that an angle between a straight line L3b perpendicular to the imaging portion 330bc and the axis extending in the Z-direction is θ3b. Therefore, in the state illustrated in FIG. 30A, the first sensor 330a is disposed so that the detection range defined by the angle of view α3a is in an oblique direction (diagonal direction in the -Z and +X-directions). The second sensor 330b is disposed so that the detection range defined by the angle of view α3b is in an oblique direction (diagonal direction in the -Z-direction and -X-direction).

That is, as illustrated in FIG. 30A, in the binding device 300, the sensors (first sensor 330a and second sensor 330b) include imaging sensors (imaging portions 330ac and 330bc), and the imaging sensors (imaging portions 330ac and 330bc) may be disposed so that the centers (respectively corresponding to the centers of the angles of view α3a and α3b of the imaging portions 330ac and 330bc illustrated by the straight lines L3a and L3b in FIG. 30A) of the viewing angles of the imaging sensors are oriented forwards in the movement direction. That is, for example, when the binding device 300 moves in the +Z-direction, the first sensor 330a may be disposed so that the straight line L3a is in the +Z-direction. Furthermore, for example, when the binding device 300 moves in the -Z-direction, the second sensor 330b may be disposed so that the straight line L3b is in the +Z-direction.

In addition, when the binding device 300 is moved, for example, in the +Y-direction or the -Y-direction, or in a diagonal direction intersecting these directions other than the Y-direction or the Z-direction, a separate sensor may be provided, or the rebar binding unit 310 and the moving unit 320 may be rotated relative to the rebar surface to suit the movement direction of the binding device 300, so that the sensor (first sensor 330a and/or second sensor 330b) of the detection unit 330 can detect the front in the movement direction of the binding device 300.

With this configuration, for example, when the binding device 300 is positioned as illustrated in FIGS. 30A to 30D so as to (specifically, so that a twisted portion 314 of the rebar binding unit 310 faces the rebar surface) face a rebar surface defined by the first rebar R10 and the second rebar R20, and the rebar binding unit 310 is moved along the rebar surface, the first rebar area of the detection range of the detection unit 330 includes the rebars (the first rebar R10 and/or the second rebar R20) located in the vicinity of the moving unit 320 or the rebar binding unit 310. In addition, in this case, the second rebar area of the detection range of the detection unit 330 includes the rebars (the first rebar R10 and/or the second rebar R20) located forward of the first rebar area in the +Z-direction, which is the movement direction of the binding device 300, when the binding device 300 moves the rebar binding unit 310 in the +Z-direction to sequentially perform binding operations on the intersection points c12 on the first rebar R10 arranged along the Z-direction. Therefore, it is possible to detect rebars in front of the direction in which the rebar binding unit 310 is moved and generate a movement path for the rebar binding unit 310, and it is also possible to detect obstacles in front of the movement direction, bypass the obstacle, and perform the binding operation.

In the binding device 300, the first rebar area is an area including rebars located in a vicinity of the moving unit 320 or the rebar binding unit 310 in FIG. 30A, and may be, for example, an area indicated by Ar31a. In this case, the first rebar area Ar31a is, for example, between two areas (in FIG. 30A, the area between a line L3al and the line L3a, and the area between the line L3a and a line L3a2) into which the detection area is divided corresponding to the half angle of view α3a/2 of the first sensor 330a in FIG. 30A (that is, when viewed from the - X-direction), the area closer to the rebar binding unit 310.

In addition, in FIG. 30A, the straight line L3a is a straight line perpendicular to the imaging portion 330ac of the first sensor 330a, and the straight lines L3a1 and L3a2 are straight lines corresponding to outer edges of the field of view of the first sensor 330a. In addition, in the present embodiment, the first rebar area may include rebars (first rebar R10 and/or second rebar R20) located in the vicinity of the rebar binding unit 310, and may be, for example, in FIG. 30A, an area (area between the straight line L3a and the rebar located in the +Y-direction of the rebar binding unit 310) indicated by Ar3la' including an area equivalent to the half angle of view α3a/2 of the first sensor 330a from a vicinity of a center of the rebar binding unit 310 in the Z-direction. In this case, the first rebar area Ar31a' is an area between the second rebar R20 and the straight line L3a along the first rebar R10, which is a rebar extending in the Z-direction, as illustrated in FIG. 30A.

The second rebar area may be, for example, the area indicated by Ar32a in FIG. 30A. In this case, the second rebar area Ar32a is, between the two areas into which the detection area of the first sensor 330a is similarly divided, the area farther from the rebar binding unit 310 than the other.

When the rebar binding unit 310 is moved in the -Z-direction, the first rebar area may be an area indicated by Ar31b in FIG. 30A, which is the area between a line L3b1 and a line L3b, or an area indicated by Ar3lb', which is the area between the line L3b and the rebar located in the +Y-direction of the rebar binding unit 310. Furthermore, the second rebar area may be an area indicated by Ar32b in FIG. 30A, which is the area between the line L3b and a line L3b2.

The arrangement angle θ3a of the first sensor 330a and the arrangement angle θb of the second sensor 330b may be, for example, 30°. Furthermore, the angle of view α3a of the first sensor 330a and the angle of view α3b of the second sensor 330b may be, for example, 43.5°.

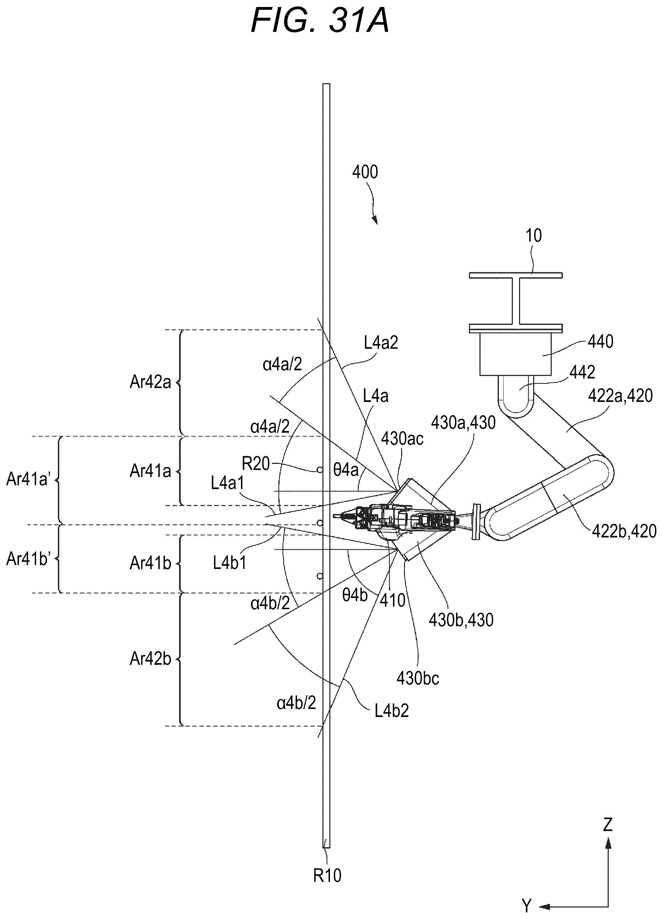

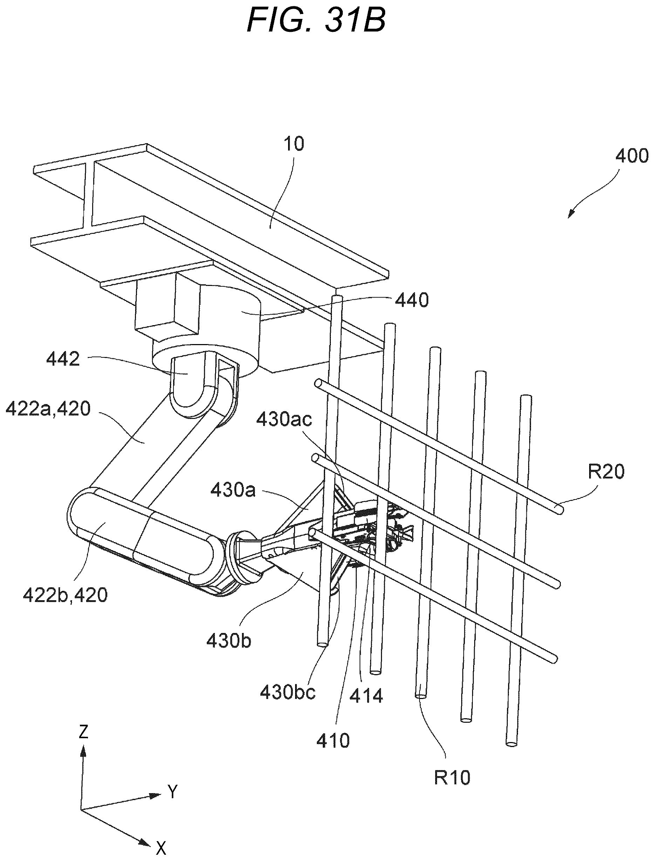

Although the case where the detection unit 330 is provided on the moving unit 320 is described with reference to FIGS. 30A and 30B, the position where the detection unit 330 is provided is not limited thereto. Referring to FIGS. 31A and 31B, a binding device 400 in which a detection unit 430 is disposed on a rebar binding unit 410 will be described. Similar to FIGS. 30A and 30B, FIG. 31A is a view of the binding device 400 of the present embodiment when viewed from the -X-direction, and FIG. 31B is a view of the binding device 400 when viewed from obliquely forward (obliquely forward in the +Y and +X-directions).

As illustrated in FIG. 31A, in the binding device 400, a first sensor 430a and a second sensor 430b of the detection unit 430 are provided in the rebar binding unit 410. The first sensor 430a is provided in the +Z-direction of the rebar binding unit 410 in a state illustrated in FIG. 31A, and the second sensor 430b is provided in the -Z-direction of an end of the rebar binding unit 410 in the state illustrated in FIG. 31A. As illustrated in FIGS. 31A and 31B, the first sensor 430a and the second sensor 430b respectively include an imaging portion 430ac and an imaging portion 430bc that are oval in shape when viewed from the +Y-direction.

As illustrated in FIGS. 31A and 31B, the binding device 400 may be disposed on a steel member 10 made of steel, such as an H-shaped steel, via a base portion 440. The binding device 400 includes the base portion 440 having a robot arm support portion 442, a robot arm portion 422 having a first robot arm portion 422a and a second robot arm portion 422b, and the like, and the configuration of these is similar to that of the binding device 300 described with reference to FIGS. 30A to 30D, so description thereof will be omitted.

Therefore, for example, when the binding device 400 is positioned as illustrated in FIGS. 31A and 31B so as to (specifically, so that a twisted portion 414 of the rebar binding unit 410 faces the rebar surface) face the rebar surface defined by the first rebar R10 and the second rebar R20, and the rebar binding unit 410 is moved along the rebar surface, a first rebar area of a detection range of the detection unit 430 includes the rebars (the first rebar R10 and/or the second rebar R20) located in the vicinity of the moving unit 420 or the rebar binding unit 410. In addition, in this case, the second rebar area of the detection range of the detection unit 430 includes the rebar (the first rebar R10 and/or the second rebar R20) located in front of the +Z-direction, which is the movement direction of the binding device 400, when the binding device 400 moves the rebar binding unit 410 in the +Z-direction to sequentially perform binding operations on the intersection points c12 on the first rebar R10 arranged along the Z-direction. Therefore, it is possible to detect the rebar in front of the direction in which the rebar binding unit 410 is moved and generate a movement path for the rebar binding unit 410, and it is also possible to detect an obstacle in front of the movement direction, bypass the obstacle, and perform the binding operation.

In the binding device 400, the first rebar area is an area including rebars located in a vicinity of the moving unit 420 or the rebar binding unit 410 in FIG. 31A, and may be, for example, an area indicated by Ar41a. In this case, the first rebar area Ar41a is, for example, between two areas (in FIG. 31A, the area between a line L4al and a line L4a, and the area between the line L4a and a line L4a2) into which the detection area is divided corresponding to the half angle of view α4a/2 of the first sensor 430a in FIG. 31A (that is, when viewed from the - X-direction), the area closer to the rebar binding unit 410. In addition, in FIG. 31A, the straight line L4a is a straight line perpendicular to the imaging portion 430ac of the first sensor 430a, and the straight lines L4al and L4a2 are straight lines corresponding to outer edges of the field of view of the first sensor 430a.

In addition, in the present embodiment, the first rebar area may include rebars (first rebar R10 and/or second rebar R20) located in the vicinity of the rebar binding unit 410, and may be, for example, in FIG. 31A, an area (area between the straight line L4a and the rebar located in the +Y-direction of the rebar binding unit 410) indicated by Ar4l a' including an area equivalent to the half angle of view α4a/2 of the first sensor 430a from a vicinity of a center of the rebar binding unit 410 in the Z-direction. In this case, the first rebar area Ar41a' is an area between the second rebar R20 and the straight line L4a along the first rebar R10, which is a rebar extending in the Z-direction, as illustrated in FIG. 31A.

The second rebar area may be, for example, an area indicated by Ar42a in FIG. 31A. In this case, the second rebar area Ar42a is, between the two areas into which the detection area of the first sensor 430a is similarly divided, the area farther from the rebar binding unit 410 than the other.

When the rebar binding unit 410 is moved in the -Z-direction, the first rebar area may be an area indicated by Ar4lb in FIG. 31A, which is the area between a line L4b1 and line L4b, or an area indicated by Ar4lb', which is the area between line L4b and the rebar located in the +Y-direction of the rebar binding unit 410. Furthermore, the second rebar area may be an area indicated by Ar42b in FIG. 31A, which is the area between the line L4b and a line L4b2.

As described with reference to FIGS. 30A and 30B, and FIGS. 31A and 31B, when (binding device 300 illustrated in FIGS. 30A and 30B) the detection unit 330 is arranged in the robot arm portion 322, the second rebar area included in the detection range of the detection unit 330 is an area including the rebar (first rebar R10 and/or second rebar R20) located obliquely below in the direction in which the robot arm portion 322 moves toward the rebar surface, and when (binding device 400 illustrated in FIGS. 31A and 31B) the detection unit 430 is arranged in the rebar binding unit 410, the second rebar area included in the detection range may be an area including the rebar located obliquely below in the direction in which the rebar binding unit 410 moves toward the rebar surface.

Both the binding device 300 (FIGS. 30A and 30B) and the binding device 400 (FIGS. 31A and 31B) may be fixed to the steel member 10, for example, but the binding device 300 and the binding device 400 may be provided so as to be movable relative to the steel member 10 (for example, movable along the direction in which the steel member 10 extends and may perform a binding operation for other rebar groups (not illustrated). In addition, it is not limited to rebar groups standing upright along the Z-direction as illustrated in FIGS. 30A and 30B and FIGS. 31A and 31B, but it is also possible to use the binding device 300 or the binding device 400 to move the rebar binding unit 310 or the rebar binding unit 410 using the robot arm (robot arm portion 322 or robot arm portion 422) to bind the intersection point c12 for a rebar group arranged parallel to a horizontal plane on which the binding operation is performed by the binding device 100.

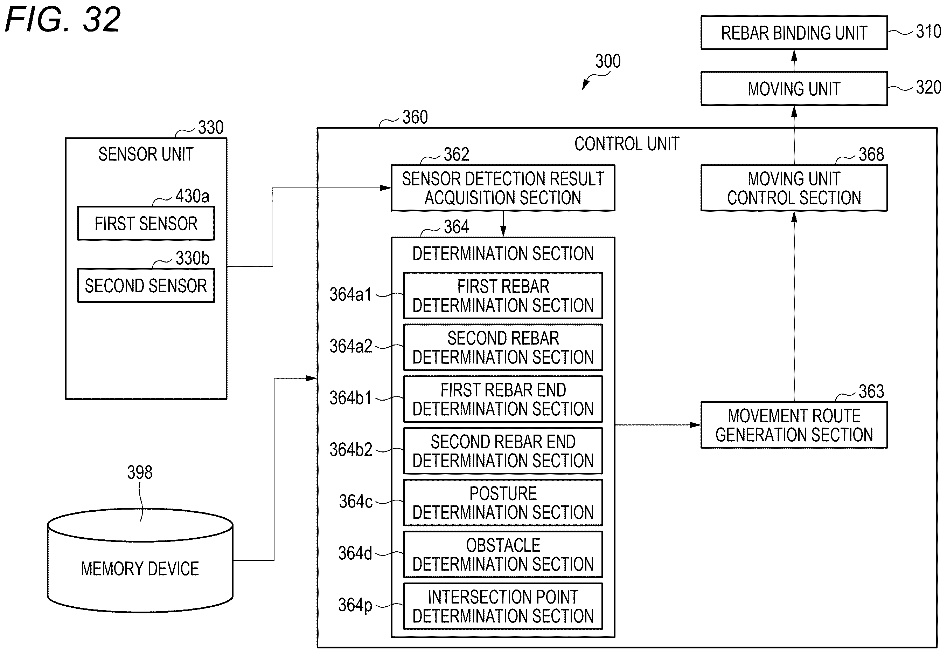

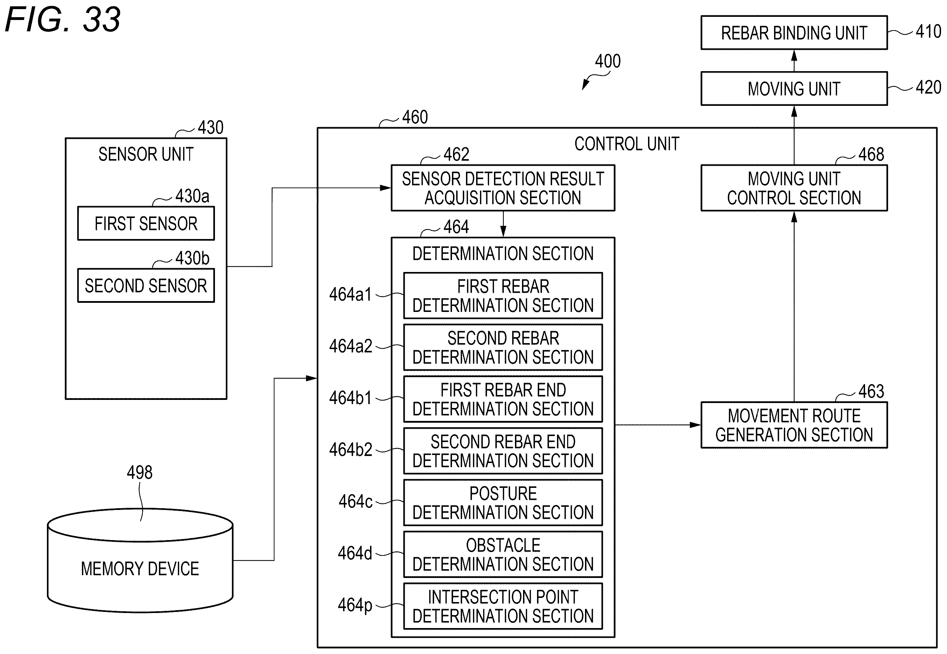

For example, the binding device 300 or the binding device 400 can be used to perform the binding operation of the intersection point c12 of the first rebar R10 extending in the X-direction and the second rebar R20 extending in the Y-direction, which form a rebar surface arranged in the horizontal direction (parallel to the XY plane). For example, when rebar surfaces arranged parallel to the XY-direction exist in the -Z and +Z-directions of the binding device 300 or the binding device 400, the binding device 300 or the binding device 400 can be placed on the steel member 10 between these rebar surfaces (between the Z-directions), and the binding operation of the rebar groups in the -Z and +Z-directions can be performed. For example, even for the rebar group located in the +Z-direction of the binding device 300 or 400, the binding work can be performed relatively easily by configuring the rebar binding unit 310 or the rebar binding unit 410 to move using the robotic arm type moving unit 320 or the moving unit 420. In this case, by controlling the movement (movement controlled by a control unit 360 (FIG. 32 described below) and a control unit 460 (FIG. 33 described below)) of the rebar binding unit 310 and the rebar binding unit 410 by the moving unit 320 and the moving unit 420 based on the detection results by the detection unit 330 and the detection unit 430, even if an obstacle is present on the rebar surface, it is possible to perform the rebar binding operation by detouring in advance.

In addition, in the binding device 300 and the binding device 400 according to the present embodiment, the controller 360 and the controller 460 may generate movement routes for the moving unit 320 and the moving unit 420 based on the detection results of the detection unit 330 and the detection unit 430. FIG. 32 illustrates a functional block configuration of the binding device 300 in this case. FIG. 33 illustrates a functional block configuration of the binding device 400 in this case. In FIGS. 32 and 33, description of the configurations that overlap with the configurations described above with reference to FIGS. 7 and 29 will be omitted as appropriate.

As illustrated in FIG. 32, the control unit 360 of the binding device 300 includes a sensor detection result acquisition section 362, a determination section 364, a movement route generation section 363, and a moving unit control section 368. Detailed description will be omitted to avoid repetition, but the determination section 364 may include a first rebar determination section 364al, a second rebar determination section 364a2, a first rebar end determination section 364b1, a second rebar end determination section 364b2, a posture determination section 364c, and an obstacle determination section 364d. In the binding device 300, based on the detection results by the sensor unit 330 acquired by the sensor detection result acquisition section 362, the first rebar R10 and the second rebar R20, the end R10e of the first rebar R10 and the end R20e of the second rebar R20, the posture of the binding device 300, and/or obstacles may be determined. The determination section 364 may further include an intersection point determination section 364p. The intersection point determination section 364p may determine the position of the intersection point c12, which is the point where the first rebar R10 and the second rebar R20 intersect, based on, for example, an image captured by the sensor unit 330.

The movement route generation section 363 may generate a movement route along which the rebar binding unit 310 is moved by the moving unit 320 based on, for example, the detection results of the detection unit 330 acquired by the sensor detection result acquisition section 362. In addition, the binding device 300 is of a robotic arm type, the moving unit 320 includes the first robot arm portion 322a and the second robot arm portion 322b, and the movement route generated by the movement route generation section 363 may be a route along which the first robot arm portion 322a and/or the second robot arm portion 322b move. The movement route generated by the movement route generation section 363 may include a movement route of the rebar binding unit 310, such as moving the rebar binding unit 310 by the moving unit 320 so as to follow the rebar (for example, the first rebar R10), stopping the rebar binding unit 310, for example, in a vicinity of the end R10e of the first rebar R10 and/or the end R20e of the second rebar R20, and/or bypassing foreign objects such as obstacles. For example, based on the movement route generated by the movement route generation section 363, the first robot arm portion 322a and/or the second robot arm portion 322b may be driven by the moving unit control section 368 to move the rebar binding unit 310.

In FIG. 32, a memory device 398 is also illustrated. The memory device 398 may include, for example, a memory medium (for example, a semiconductor memory element) or other media for non-transitory storage of one or more computer programs executed in the control unit 360, data used to control the binding device 300, and the like.

Also, similar to the control unit 360 of the binding device 300 illustrated in FIG. 32, as illustrated in FIG. 33, the control unit 460 of the binding device 400 includes a sensor detection result acquisition section 462, a determination section 464, a movement route generation section 463, and a moving unit control section 468. The determination section 464 may have a first rebar determination section 464a1, a second rebar determination section 464a2, a first rebar end determination section 464b1, a second rebar end determination section 464b2, a posture determination section 464c, an obstacle determination section 464d, and an intersection point determination section 464p.

In the binding device 400, as in the binding device 300, a movement route for the rebar binding unit 410 may be generated by the movement route generation section 463, and for example, based on the movement route generated by the movement route generation section 463, the first robot arm portion 422a and/or the second robot arm portion 422b may be driven by the moving unit control section 468 to move the rebar binding unit 410.

In addition, a memory device 498 is also illustrated in FIG. 33, and the memory device 498 may include, for example, a memory medium (for example, a semiconductor memory element) or other media for non-transitory storage of one or more computer programs executed in the control unit 460, data used to control the binding device 400, and the like.

The present embodiment is described above with reference to specific examples. However, the present disclosure is not limited to these specific examples. Any design modifications to these specific examples made by a person skilled in the art are also included within the scope of the present disclosure as long as they incorporate the features of the present disclosure. The elements of each of the above-described specific examples, as well as their arrangement, conditions, shapes, and the like are not limited to those exemplified, and can be modified as appropriate. The elements of each of the above-described specific examples can be combined in various ways as appropriate, provided no technical contradictions arise.

This application is based on a Japanese patent application filed on January 20, 2023 (Patent Application No. 2023-007172), a Japanese patent application filed on January 20, 2023 (Patent Application No. 2023-007174), a Japanese patent application filed on January 20, 2023 (Patent Application No. 2023-007176), a Japanese patent application filed on January 20, 2023 (Patent Application No. 2023-007177), a Japanese patent application filed on January 20, 2023 (Patent Application No. 2023-007182), a Japanese patent application filed on January 20, 2023 (Patent Application No. 2023-007187), and a Japanese patent application filed on August 10, 2023 (Patent Application No. 2023-131058), the contents of which are incorporated by reference into this application.

### INDUSTRIAL APPLICABILITY

A binding device according to the present disclosure has a simple sensor configuration.

### REFERENCE SIGNS LIST

100, 200, 300, 400: rebar binding robot (binding device)
110, 310, 410: rebar binding unit
120, 320, 420: moving unit
130, 330, 430: sensor unit (detection unit)
140: main body (main body unit)
160, 360, 460: controller (control unit)
322, 422: robot arm portion
340, 440: base portion
R10: first rebar
R20: second rebar

## Claims

1. A binding device, comprising:
a moving unit configured to be movable on a plurality of rebars arranged to intersect each other;
a rebar binding unit configured to be capable of binding the plurality of rebars; and
a detection unit having a sensor having a detection range which is an area including both a first rebar area including the rebar located in a vicinity of the moving unit or the rebar binding unit, and a second rebar area including the rebar located forward of the first rebar area in a movement direction of the moving unit, wherein
the detection unit is configured to detect an obstacle on the rebar.

2. The binding device according to claim 1, comprising:
a main body, wherein
the moving unit includes a traveling unit configured to enable the main body to travel on the plurality of rebars,
the detection unit is disposed at a front end of the main body in the movement direction, and
the second rebar area included in the detection range is obliquely below with respect to the movement direction of the main body.

3. The binding device according to claim 1, comprising:
a base portion, wherein
the moving unit includes a robot arm portion,
one end of the robot arm portion is connected to the base portion, and the rebar binding unit is connected to the other end of the robot arm portion, so that the rebar binding unit is movable relative to the base portion, and
the second rebar area included in the detection range is in front of the rebar binding unit in a direction of movement on a rebar surface, which is a surface formed by the plurality of rebars.

4. The binding device according to claim 1, wherein movement of the moving unit is controlled based on a detection result of the detection unit.

5. The binding device according to claim 1, wherein
the sensor includes an imaging sensor, and
the imaging sensor is disposed so that a center of a viewing angle of the imaging sensor is oriented forwards in the movement direction.

6. A binding device, comprising:
a moving unit configured to be movable on a plurality of rebars arranged to intersect each other;
a rebar binding unit configured to be capable of binding the plurality of rebars;
a detection unit having a sensor having a detection range which is an area including a first rebar area including the rebar located in a vicinity of the moving unit or the rebar binding unit, the sensor being configured to be able to detect an obstacle on the rebar; and
a controller configured to control movement of the moving unit based on a detection result of the detection unit.

7. The binding device according to claim 6, comprising:
a main body, wherein
the moving unit includes a traveling unit configured to enable the main body to travel on the plurality of rebars,
the detection range of the sensor includes a second rebar area including the rebar located forward of the first rebar area in a movement direction of the moving unit, and
the detection unit is configured to detect an obstacle in the first rebar area or the second rebar area.

8. The binding device according to claim 6, comprising:
a base portion, wherein
the moving unit includes a robot arm portion,
one end of the robot arm portion is connected to the base portion, and the rebar binding unit is connected to the other end of the robot arm portion, so that the rebar binding unit is movable relative to the base portion,
the detection range of the sensor includes a second rebar area including the rebar located forward of the first rebar area in a direction in which the rebar binding unit is configured to move on a rebar surface that is a surface formed by the plurality of rebars, and
the detection unit is configured to detect an obstacle in the first rebar area or the second rebar area.

9. The binding device according to claim 7, wherein
the detection unit is disposed at a front end of the main body in the movement direction, and
the second rebar area is an area including the rebar located obliquely below with respect to the movement direction of the main body.

10. The binding device according to claim 8, wherein
the detection unit is disposed on the robot arm portion, and
the second rebar area included in the detection range is an area including the rebar located obliquely below with respect to a direction of movement of the robot arm portion toward the rebar surface.

11. The binding device according to claim 8, wherein
the detection unit is disposed on the rebar binding unit, and
the second rebar area included in the detection range is an area including the rebar located obliquely below with respect to a direction of movement of the rebar binding unit toward the rebar surface.

12. The binding device according to claim 6, wherein the controller is configured to generate a movement route for the moving unit based on the detection result of the detection unit.

13. The binding device according to claim 6, wherein
the detection unit includes an imaging sensor, and
the imaging sensor is disposed so that a center of a viewing angle of the imaging sensor is oriented downwards in a movement direction of the moving unit.
